# EUROPEAN PATENT SPECIFICATION

(11) **EP 1 736 809 B1**
(45) Date of publication and mention of the grant of the patent: **06.04.2011**
(21) Application number: 06253131.4
(22) Date of filing: 16.06.2006
(51) Int. Cl.: G02B 7/10, G03B 7/26

(54) **A driving control device of a lens barrel unit**
Ansteuervorrichtung für eine Objektivtubuseinheit
Dispositif de contrôle de commande d'une unité de monture d'objectif

(30) Priority: 21.06.2005 JP 2005180910
(43) Date of publication of application: 27.12.2006
(73) Proprietor: Ricoh Company, Ltd., Tokyo 143-8555 (JP)
(72) Inventor: Sugiura, Koichi, Ohta-ku Tokyo 143-8555 (JP)
(74) Representative: Leeming, John Gerard

(56) References cited:
- EP-A- 0 996 030
- EP-A2- 0 780 714
- JP-A- 7 199 276
- JP-A- 2004 038 114
- US-A- 5 113 210
- US-A- 5 523 814
- US-A- 5 557 365
- US-A- 5 872 433
- US-A- 6 118 949
- US-A1- 2002 141 756

## Description

The present invention relates to a driving control device of a lens barrel.

Generally, a lens barrel of a camera having a magnification function comprises a plurality of motors including a motor for driving a lens group with a magnification function along an optical axis direction, a motor for driving a lens group with a focus function along the optical axis direction, a motor for opening and closing a shutter, a motor for adjusting an aperture stop and so on: Up to now, in order to improve the camera's portability, such a lens barrel unit is commonly used that when a power source of the camera is off, the lens barrel unit is stored in the camera body; and when the power source of the camera is on, the lens group, the shutter and the aperture stop are actuated to a photographing standby state so as to form an optical system necessary for photographing by the respective motors. For such lens barrel unit, in order to minimize an interval from the power source on to the photographing standby state, that is a startup time, as short as possible so as to make photographing immediately and improve the convenience, there is disclosed a driving control method that attempts to minimize the startup time by driving the plurality of motors simultaneously. In order to prevent an early decrease of a battery life expectancy as a large power current, or electrical power, is needed when the motors are driven simultaneously, there is also disclosed in Japanese Patent No. 3,363,944 a driving control device of a lens barrel unit which inhibits the power current consumption by stopping simultaneous drives to drive the motors sequentially when a voltage of the power source is below a predefined value.

However, in such the driving control device of the lens barrel unit wherein the simultaneous drives are stopped when the voltage of the power source is below the predefined value, since the simultaneous drives have been performed until the voltage of the power source is dropped below the defined value, the large power current is consumed, in particular when a universal battery, such as an AAA cell battery with a small power current capacity and so on, is used as the power source, it is difficult to avoid the problem on the early decrease of the battery life expectancy.

US 5,557,365 discloses a camera system with a lens microcomputer which performs motor control in a photo-taking lens. In one embodiment, the microcomputer sets the number of motors, which can be simultaneously driven upon driving of the motors in the lens, in its internal memory on the basis of the BL level information, which corresponds to the remaining capacity of the battery currently loaded in the camera. In another embodiment, the microcomputer sets the possible driving speed upon driving of the motors in the lens, in its internal memory on the basis of the BL level.

Therefore, an object of the present invention is to provide a driving control device of a lens barrel unit to minimize the startup time and storage time when a special battery is used as the power source, and to inhibit a power current consumption in startup and storage while a universal battery is used as the power source.

According to an aspect of the present invention, there is provided a driving control device of a lens barrel unit, comprising:
a lens barrel unit; and
a control device main body for controlling driving on the lens barrel unit;
the lens barrel unit including:
   a plurality of lens groups;
   an aperture stop disposed on an optical axis of the plurality of lens groups;
   a shutter disposed on the optical axis of the plurality lens groups;
   a plurality of lens group driving motors for driving the plurality of lens groups;
   a shutter driving motor for driving the shutter;
characterized in that the driving control device further comprises:
   a battery type determination section for determining a type of a battery which serves as a power source of the lens barrel unit and the control device main body, the type battery including a special battery and a universal battery which has a current capacity smaller than that of the special battery; and
   a plurality of aperture stop driving motors for driving the aperture stop;
   wherein the control device main body is configured to perform a first control which performs simultaneously driving controls of at least two motors of the plurality of lens group driving motors, the plurality of aperture stop driving motors and the shutter driving motor when the battery is determined to be a special battery by the battery type determination section, and a second control which performs sequentially in a predefined sequence driving controls of the plurality of lens group driving motors, the aperture stop driving motors and the shutter driving motor when the battery is determined to be a universal battery by the battery type determination section;
   wherein the first control comprises a first startup control which performs simultaneously driving controls of the objective lens group driving motor and at least one motor of other lens group driving motors of the plurality of lens group driving motors for driving the other lens groups, the plurality of aperture stop driving motors and the shutter driving motor, and sets the plurality of lens groups, the aperture stop and the shutter to a photographing standby state when the power source is on; and a first storage control which performs simultaneous driving controls of the objective lens group driving motor and at least one motor of the other lens group driving motors, the plurality of aperture stop driving motors and the shutter driving motor, and sets the plurality of lens groups, the aperture stop and the shutter to a storage state when the power source is off.

According to the above configuration, it is capable to minimize actuation time on startup and shutdown by performing driving controls simultaneously on at least two motors when the battery is the special battery, and to inhibit the power current consumption by performing driving controls sequentially while the battery is the universal battery.

According to a further aspect of the present invention, there is provided a driving control device of a lens barrel unit, comprising:
a lens barrel unit;
a control device main body for controlling driving on the lens barrel unit; and
the lens barrel unit including:
   a plurality of lens groups;
   an aperture stop disposed on an optical axis of the plurality of lens groups;
   a shutter disposed on the optical axis of the plurality of lens groups;
   a plurality of lens group driving motors for driving the plurality of lens groups;
   a shutter driving motor for driving the shutter;
characterized in that the driving control device further comprises:
   a battery type determination section for determining a type of a battery which serves as a power source of the lens barrel unit and the control device main body, the type of battery including a special battery and a universal battery which has a current capacity smaller than that of the special battery; and
   a plurality of aperture stop driving motors for driving the aperture stop;
   wherein the control device main body is configured to perform a first control which performs simultaneously driving controls of at least two motors of the plurality of lens group driving motors, the plurality of aperture stop driving motors and the shutter driving motor when the battery is determined to be a special battery by the battery type determination section, and a third control which performs simultaneously driving controls of at least two motors of the plurality of lens group driving motors, the plurality of aperture stop driving motors and the shutter driving motor when the battery is determined to be a universal battery by the battery type determination section, and performs the driving controls of predefined motors at a driving voltage lower than normal when the driving control is performed simultaneously;
   wherein the first control comprises a first startup control which performs simultaneously driving controls of the objective lens group driving motor and at least one motor of other lens group driving motors of the plurality of lens group driving motors for driving the other lens groups, the plurality of aperture stop driving motors and the shutter driving motor, and sets the plurality of lens groups, the aperture stop and the shutter to a photographing standby state when the power source is on; and a first storage control which performs simultaneous driving controls of the objective lens group driving motor and at least one motor of the other lens group driving motors, the plurality of aperture stop driving motors and the shutter driving motor, and sets the plurality of lens groups, the aperture stop and the shutter to a storage state when the power source is off.

According to the above configuration, it is capable to minimize operation time on startup and shutdown by performing driving controls simultaneously on at least two motors when the battery is the special battery, and to inhibit the power current consumption by performing driving controls on at least two motors at the driving voltage lower than normal while the battery is the universal battery.

A driving control device of a lens barrel unit according to one another aspect of the present invention is characterized in that the plurality of lens groups comprises an objective lens group positioned in an object side and the other lens groups.

A driving control device of a lens barrel unit according to one another aspect of the present invention is characterized in that an objective lens group driving motor of the plurality of lens group driving motors, which drives the objective lens group, is a direct current motor.

According to the above configuration, it is capable to perform a control on a driving voltage since the objective lens group driving motor of the plurality of lens group driving motors is a direct current motor.

A driving control device of a lens barrel unit according to another aspect of the present invention is characterized in that the first control comprises a first startup control which performs simultaneously driving controls of the objective lens group driving motor and at least one motor of other lens group driving motors of the plurality of lens group driving motors for driving the other lens groups, the plurality of aperture stop driving motors and the shutter driving motor, and sets the plurality of lens groups, the aperture stop and the shutter to a photographing standby state when the power source is on; and a first storage control which performs simultaneous driving controls of the objective lens group driving motor and at least one motor of the other lens group driving motors, the plurality of aperture stop driving motors and the shutter driving motor, and sets the plurality of lens groups, the aperture stop and the shutter to a storage state when the power source is off.

According to the above configuration, it is capable to minimize the startup time when the power source is on and the storage time when the power source is off.

A driving control device of a lens barrel unit according to one another aspect of the present invention further comprises a plurality of position detecting sections for detecting positions of the plurality of lens groups and is characterized in that when there are performed simultaneously driving controls on the objective lens group driving motor and at least one motor of the other lens group driving motors, the first storage control stops a driving control on the objective lens group temporarily when the objective lens group arrives at a predefined position, and performs the driving control again on the objective lens group motor such that the objective lens group is at the storage position when the other lens groups driven by the other lens group driving motors whose driving controls are performed simultaneously with the objective lens group driving motor arrives at the storage position.

According to the above configuration, it is capable to avoid interference between the objective lens group and the other lens groups by stopping the objective lens group at the predefined position temporarily when the driving controls on the objective lens group and the other lens groups are performed simultaneously in the storage control.

A driving control device of a lens barrel unit according to one another aspect of the present invention is characterized in that the second control comprises a second startup control which sequentially performs in a predefined sequence driving controls on the plurality of lens group driving motors, the plurality of aperture stop driving motors and the shutter driving motor, and sets the plurality of lens groups, the aperture stop and the shutter to a photographing standby state when the power source is on; and a second storage control which sequentially performs in a predefined sequence driving controls on the plurality of lens group driving motors, the plurality of aperture stop driving motors and the shutter driving motor, and sets the plurality of lens groups, the aperture stop and the shutter to a storage state when the power source is off.

According to the above configuration, it is capable to inhibit the power current consumption not only when the power source is on for activating but also when the power source is off for storing.

A driving control device of a lens barrel unit according to one another aspect of the present invention further comprises a plurality of position detecting sections for detecting positions of the plurality of lens groups and is characterized in that the second storage control performs a driving control on the objective lens group driving motor, and stops the driving control on the objective lens group driving motor temporarily when the objective lens group arrives at a predefined position and actuates driving controls on the other lens group driving motors; and performs the driving control again on the objective lens group motor such that the objective lens group is at the storage position when the other lens groups driven by the other lens group driving motors arrives at the storage position.

According to the above configuration, it is capable to avoid interference between the objective lens group and the other lens groups by stopping the objective lens group temporarily at the predefined position in the storage control.

A driving control device of a lens barrel unit according to one another aspect of the present invention is characterized in that the third control comprises a third startup control including a period during which there are performed simultaneously driving controls on the objective lens group driving motor and at least one motor of the other lens group driving motors, the plurality of aperture stop driving motors and the shutter driving motor, performing the driving control on the objective lens group at a driving voltage lower than normal when the driving control is performed simultaneously, and setting the plurality of lens groups, the aperture stop and the shutter to a photographing standby state when the power source is on; and a third storage control including a period during which there are performed simultaneously driving controls on the objective lens group driving motor and at least one motor of the other lens group driving motors, the plurality of aperture stop driving motors and the shutter driving motor, performing the driving control on the objective lens group at a driving voltage lower than normal when the driving control is performed simultaneously, and setting the plurality of lens groups, the aperture stop and the shutter to the storage state when the power source is off.

According to the above configuration, it is capable to inhibit the power current consumption not only when the power source is on for activating but also when the power source is off for storing.

A driving control device of a lens barrel unit according to one another aspect of the present invention further comprises a plurality of position detecting sections for detecting positions of the plurality of lens groups and is characterized in that when there are performed simultaneously driving controls on the objective lens group driving motor and at least one motor of the other lens group driving motors, the third storage control stops the driving control on the objective lens group temporarily when the objective lens group arrives at a predefined position, and performs the driving control again on the objective lens group motor such that the objective lens group is at the storage position when the other lens groups driven by the other lens group driving motors whose driving controls are performed simultaneously with the objective lens group driving motor arrives at the storage position.

According to the above configuration, it is capable to avoid interference between the objective lens group and the other lens groups by stopping the objective lens group at the predefined position temporarily when the driving controls on the objective lens group and the other lens groups are performed simultaneously in the storage control.

A driving control device of a lens barrel unit according to one another aspect of the present invention is characterized in that the battery type determination section includes a voltage detecting portion for detecting a voltage of the battery, and when the battery is determined to be the special battery by the battery type determination section and the voltage detected by the voltage detecting portion is below a predefined value, the second control is performed as an alternative to the first control.

A driving control device of a lens barrel unit according to one another aspect of the present invention is characterized in that the battery type determination section includes a voltage detecting portion for detecting a voltage of the battery, and when the battery is determined to be the special battery by the battery type determination section and the voltage detected by the voltage detecting portion is below a predefined value, the third control is performed as an alternative to the first control.

According to the above configuration, it is capable to inhibit the early decrease of the battery life expectancy by performing a control on the power current consumption when the battery is the special battery and the capacity of the battery is low.

A driving control device of a lens barrel unit according to one another aspect of the present invention is characterized in that the control device main body includes a control selector switch, and when the battery is determined to be the special battery by the battery type determination section, the second control is selectable through the control selector switch.
A driving control device of a lens barrel unit according to one another aspect of the present invention is characterized the control device main body includes a control selector switch, and when the battery is determined to be the special battery by the battery type determination section, the third control is selectable through the control selector switch.

According to the above configuration, it is capable to lengthen the battery life expectancy by performing selectable controls which inhibits the power current consumption even when the battery is the special battery.

A driving control device of a lens barrel unit according to one another aspect of the present invention is characterized in that the battery type determination section includes a battery housing portion for housing the battery, special battery terminals for making contact with terminals of the special battery when the battery housed in the battery housing portion is the special battery, universal battery terminals for making contact with terminals of the universal battery exclusively when the battery housed in the battery housing portion is the universal battery, a power current detecting section for detecting a power current from the universal battery terminals when the battery is housed in the battery housing portion, and the battery is determined to be the universal battery if the power current from the universal battery terminals is detected by the power current detecting section, the battery is determined to be the special battery if the power current from the universal battery terminals is not detected by the power current detecting section when the battery is housed in the battery housing portion.

According to the above configuration, it is capable to perform the battery type determination automatically in storing.

A driving control device of a lens barrel unit according to one another aspect of the present invention is characterized in that the lens barrel unit and the control device main body are provided in a camera main body; the lens barrel unit is housed in the camera main body when the power source of the camera main body is off; and when the power source of the camera main body is on, the control device main body performs driving controls on the plurality of lens group driving motors, the plurality of aperture stop driving motors and the shutter driving motor and sets the plurality of lens groups, the aperture stop and the shutter to the photographing standby state, and at the same time the lens barrel unit is projected from the camera main body.

According to the above configuration, it is capable to obtain effects of the present invention in a so-called collapsible camera.

According to the present invention, it is capable to achieve a driving control device for a lens barrel unit which performs a control to minimize the startup time and storage time when the special battery is used as the power source, or a control to inhibit the power current consumption on startup and storage while the universal battery is used as the power source.
The present invention will now be further described by way of example only, with reference to the accompanying drawings, in which:
FIG 1 is a block view showing an embodiment 1 according to the present invention.
FIG 2 is a view schematically showing positions of lens groups of the embodiment 1 according to the present invention.
FIG. 3 is a flow chart showing basic operations of the embodiment 1 according to the present invention.
FIG 4 is a flow chart showing operations of a startup control of a first-second lens group when a battery is a special battery in the embodiment 1 according to the present invention.
FIG 5 is a flow chart showing operations of the startup control of a shutter when the battery is the special battery in the embodiment 1 according to the present invention.
FIG 6 is a flow chart showing operations of the startup control of an aperture stop when the battery is the special battery in the embodiment 1 according to the present invention.
FIG 7 is a flow chart showing operations of the startup control of a third lens group when the battery is the special battery in the embodiment 1 according to the present invention.
FIG 8 is a timing chart of the startup control when the battery is the special battery in the embodiment 1 according to the present invention.
FIG 9 is a flow chart showing operations of the startup control of the first-second lens group when the battery is a universal battery in the embodiment 1 according to the present invention.
FIG 10 is a flow chart showing operations of the startup control of the shutter when the battery is the universal battery in the embodiment 1 according to the present invention.
FIG. 11 is a flow chart showing operations of the startup control of the aperture stop when the battery is the universal battery in the embodiment 1 according to the present invention.
FIG. 12 is a flow chart showing operations of the startup control of the third lens group when the battery is the universal battery in the embodiment 1 according to the present invention.
FIG. 13 is a timing chart of the startup control when the battery is the universal battery in the embodiment 1 according to the present invention.
FIG. 14 is a flow chart showing operations of the startup control of the first-second lens group when the battery is the universal battery in an embodiment 2 according to the present invention.
FIG. 15 is a flow chart showing operations of the startup control of the shutter when the battery is the universal battery in the embodiment 2 according to the present invention.
FIG. 16 is a flow chart showing operations of the startup control of the aperture stop when the battery is the universal battery in the embodiment 2 according to the present invention.
FIG. 17 is a flow chart showing operations of the startup control of the third lens group when the battery is the universal battery in the embodiment 2 according to the present invention.
FIG. 18 is a timing chart of the startup control when the battery is the universal battery in the embodiment 2 according to the present invention.
FIG. 19 is a flow chart showing operations of a storage control of the first-second lens group when the battery is the special battery in an embodiment 3 according to the present invention.
FIG. 20 is a flow chart showing operations of the storage control of the shutter when the battery is the special battery in the embodiment 3 according to the present invention.
FIG. 21 is a flow chart showing operations of the storage control of the aperture stop when the battery is the special battery in the embodiment 3 according to the present invention.
FIG. 22 is a flow chart showing operations of the storage control of the third lens group when the battery is the special battery in the embodiment 3 according to the present invention.
FIG. 23 is a timing chart of the storage control when the battery is the special battery in the embodiment 3 according to the present invention.
FIG. 24 is a flow chart showing operations of a storage control of the first-second lens group when the battery is the universal battery in the embodiment 3 according to the present invention.
FIG. 25 is a flow chart showing operations of the storage control of the shutter when the battery is the universal battery in the embodiment 3 according to the present invention.
FIG. 26 is a flow chart showing operations of the storage control of the aperture stop when the battery is the universal battery in the embodiment 3 according to the present invention.
FIG. 27 is a flow chart showing operations of the storage control of the third lens group when the battery is the universal battery in the embodiment 3 according to the present invention.
FIG. 28 is a timing chart of the storage control when the battery is the universal battery in the embodiment 3 according to the present invention.
FIG. 29 is a flow chart showing operations of the storage control of the first-second lens group when the battery is the universal battery in an embodiment 4 according to the present invention.
FIG. 30 is a flow chart showing operations of the storage control of the shutter when the battery is the universal battery in the embodiment 4 according to the present invention.
FIG. 31 is a flow chart showing operations of the storage control of the aperture stop when the battery is the universal battery in the embodiment 4 according to the present invention.
FIG. 32 is a flow chart showing operations of the storage control of the third lens group when the battery is the universal battery in the embodiment 4 according to the present invention.
FIG. 33 is a timing chart of the storage control when the battery is the universal battery in the embodiment 4 according to the present invention.
FIG. 34 is a flow chart showing operations of the storage control of the first-second lens group when the battery is the universal battery in an embodiment 5 according to the present invention.
FIG. 35 is a flow chart showing operations of the storage control of the shutter when the battery is the universal battery in the embodiment 5 according to the present invention.
FIG. 36 is a flow chart showing operations of the storage control of the aperture stop when the battery is the universal battery in the embodiment 5 according to the present invention.
FIG. 37 is a flow chart showing operations of the storage control of the third lens group when the battery is the universal battery in the embodiment 5 according to the present invention.
FIG. 38 is a timing chart of the storage control when the battery is the universal battery in the embodiment 5 according to the present invention.
FIG. 39 is a flow chart showing basic operations of an embodiment 6 according to the present invention.
FIG. 40 is a block view of an embodiment 7 according to the present invention.
FIG. 41 is a flow chart showing basic operations of the embodiment 7 according to the present invention.

### Detailed Description of the Invention

Hereinafter, embodiments of the present invention are described with reference to the drawings.

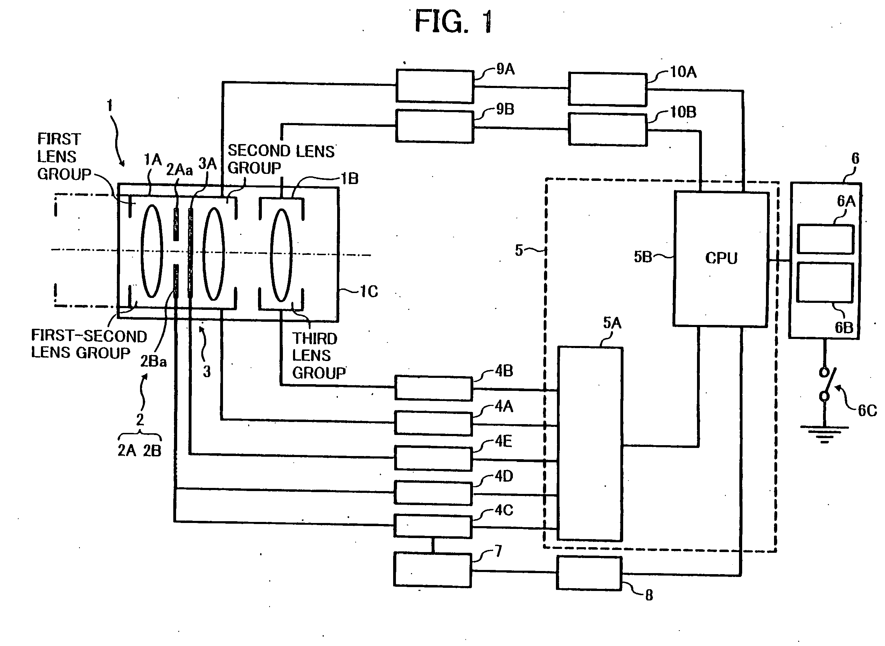

FIG. 1 is a block view of an embodiment according to the present invention.

A lens barrel unit 1 includes a first-second lens group 1A having a first lens group and a second lens group, a third lens group 1B, each of which has a plurality of lenses respectively. These lens groups 1A and 1B are disposed in a lens barrel main body 1C with their central axes on one optical axis. Between the first lens group and the second lens group of the first-second lens group, there are disposed a first aperture stop 2A and a second aperture stop 2B for controlling a light amount emitted from a photographing subject to the lens barrel unit 1 and a shutter 3 for controlling a photographing exposure time.

The first-second lens group 1A is a lens group for varying a photographing magnification. The third lens group 1B is a lens group for focusing an image on an exposure surface (not shown) positioned in the rear of the third lens group 1B.

The first-second lens group 1A and the third lens group 1B are driven by a first-second lens group driving motor 4A and a third lens group driving motor 4B, respectively to move in parallel along the optical axis so as to form a target optical system.

The first lens group and the second lens group which constitutes first-second lens group 1A are engaged in a cam cylinder (not shown) with an interval mechanically adjusted by a cam mechanism such that the interval between the first lens group and the second lens group remains a predefined interval when the first-second lens group 1A is mechanically driven by the first-second lens group driving motor 4A.

Wherein, the first-second lens group driving motor 4A is a direct current motor, and the third lens group driving motor 4B is a pulse motor (Driving mechanisms are not shown).

Generally a direct current motor is capable to rotate in a higher rotation speed than a pulse motor if an electrical power supplied is the same. Also, according to its property which a driving power current varies with respective to a load variation, when the load is increased the driving power current is increased accordingly and as a result a driving torque is increased, thus, a direct current motor has a characteristic feature of being tough to the load variation. According to this characteristic feature, it is suitable for driving the cam cylinder in which the load of a motor varies according to an inclination variation of the cam caused by a zoom position. On the contrary, a direct current motor has an inertia property, which causes a problem that there is a deviation between positions where a stop control is performed and where it is actually stopped, that is an over-run, therefore, it is another characteristic feature for a direct current motor of being difficult to be stopped at a desired position.

On the other hand, a pulse motor is driven by driving pulses inputted from outside. Although it is easy for a pulse motor to be stopped at any positions it is weak to torque variations, thus, a pulse motor is suitable for controlling in such a case that there are fewer torque variations.

Taking into account of the above characteristic features of each motor, a direct motor is used as the first-second lens group driving motor 4A and a pulse motor as the third lens group driving motor 4B.

The first aperture stop 2A includes an aperture stop plate 2Aa having apertures of three types with different diameters corresponding to a minimum aperture stop, a medium aperture stop and a maximum aperture stop, respectively. The aperture stop plate 2Aa is disposed perpendicular to the optical axis of the lens groups, and is driven by a first aperture stop driving motor 4C according to control signals from a CPU 5B such that an aperture center of the target aperture stop is accorded with the optical axis center. The second aperture stop 2B also has an equivalent configuration as that of the first aperture stop 2A.

The shutter 3 has such a configuration that it is driven by a shutter driving motor 4E controlled by the control signals from the CPU 5B to insert or withdraw a shielding plate 3A between the third lens group 1B and the exposure surface. When the shielding plate 3A is inserted between the third lens group 1B and the exposure surface so that light rays passed the first-second lens group 1A and the third lens group 1B can not fall on the exposure surface positioned in the rear of the third lens group 1B makes a full close state of the shutter 3; when the shielding plate 3A is withdrawn, or retracted from between the third lens group 1B and the exposure surface so that light rays passed the first-second lens group 1A and the third lens group 1B fall on the exposure surface makes a full open state of the shutter 3.

Each of the motors 4A to 4E is electrically connected to a motor driver 5A.

The motor driver 5A obtains necessary information, such as a driving voltage, a driving timing, a driving amount, a driving direction and so on, for driving and controlling each of the motors 4A to 4E from the electrically connected CPU 5B and performs driving controls of the motors 4A to 4E respectively.

The first-second lens group driving motor 4A includes a moving amount detecting section 7 for the first-second lens group 1A, which generates pulses corresponding to rotation numbers in accordance with its rotation. The moving amount detecting section 7 is driven by an electrically connected driving section 8 for driving the moving amount detecting section 7 for the first-second lens group 1A. Moreover, the output pulses from the moving amount detecting section 7 is loaded into the CPU 5B. The CPU 5B determines positions of the first-second lens group 1A according to the pulse numbers.

While the third lens group driving motor 4B for driving the third lens group 1B is a pulse motor, and is driven according to driving pulse numbers applied by the motor driver 5A in accordance with signals from the CPU 5B. The CPU 5B detects a position of the third lens group 1B according to the driving pulse numbers.

The first-second lens group 1A and the third lens group 1B further include a reference position detecting section 9A for the first-second lens group 1A and a reference position detecting section 9B for the third lens group 1B for detecting a reference position of each lens group, respectively. The reference position detecting section 9A and the reference position detecting section 9B are driven respectively by a driving section 10A for the first-second lens group 1A and a driving section 10B for the third lens group 1B. Moreover, a detected information is loaded into the CPU 5B.

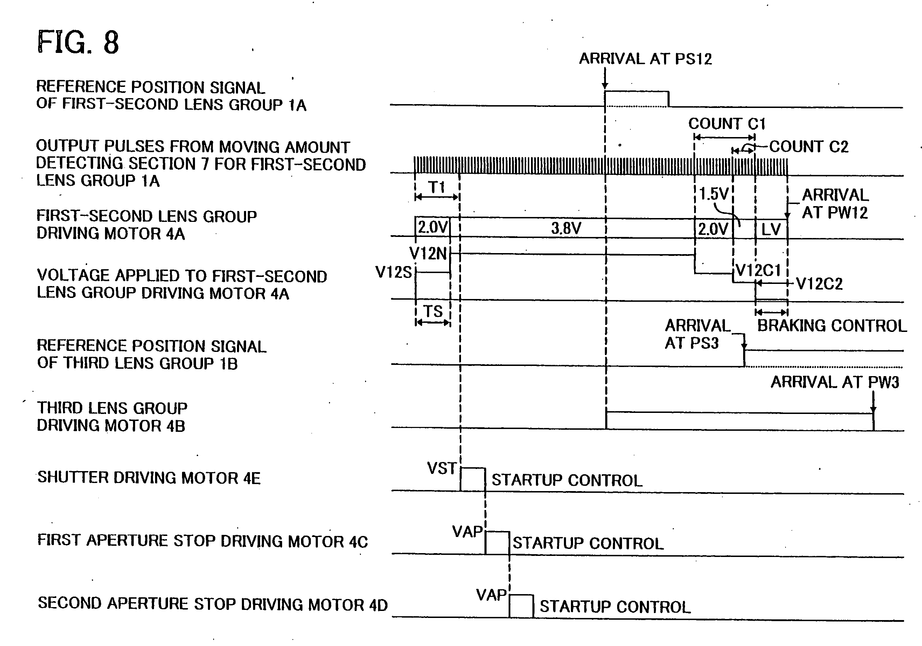

The reference position detecting section 9A includes a photo-flooding section (not shown), a photo-receiving section (not shown) disposed opposing to the photo-flooding section and a shielding plate (not shown) which is disposed between the photo-flooding section and the photo-receiving section and is movable according to movements of the first-second lens group 1A. When the first-second lens group is positioned at a reference position PS 12, a shield resulted from the shielding plate between the photo-flooding section and the photo-receiving section is removed, light rays from the photo-flooding section are detected on the photo-receiving section, thus a detection of the reference position PS12 (refer to FIG. 8) of the first-second lens group 1A is performed. The reference position detecting section 9B also has an equivalent configuration as that of the reference position detecting section 9A and performs a detection of a reference position PS3 (refer to FIG. 8) of the third lens group 1B.

The above mentioned motor driver 5A and CPU 5B constitute a control device main body 5.

A battery type determination section 6 includes a battery housing portion 6A, a battery type detecting portion 6B and a power source switch 6C.

The battery housing portion 6A houses either a special battery with a large current capacity, or a universal battery, such as an AAA cell battery and so on. Positions of terminals of the special battery or the universal battery are different, thus, the battery housing portion 6A includes special battery terminals (not shown) for making contact with the terminals of the special battery when the special battery is accommodated, and universal battery terminals (not shown) for making contact with the terminals of the universal battery when the universal battery is accommodated.

The battery type detecting portion 6B actuates a power current detecting circuit connected to the universal battery terminals to detect whether there is a power current flowing when a battery is set into the battery housing portion 6A, and performs a determination that the battery housed in the battery housing portion 6A is the universal battery if there is a power current flowing, or a determination that the battery housed in the battery housing portion 6A is the special battery if there is no power current flowing.

The battery type determination section 6 is electrically connected to the CPU 5B and a determination result on the battery type is loaded to the CPU 5B.

The power source switch 6C performs on and off operations of the power source of the lens barrel unit 1 and the control device main body 5.

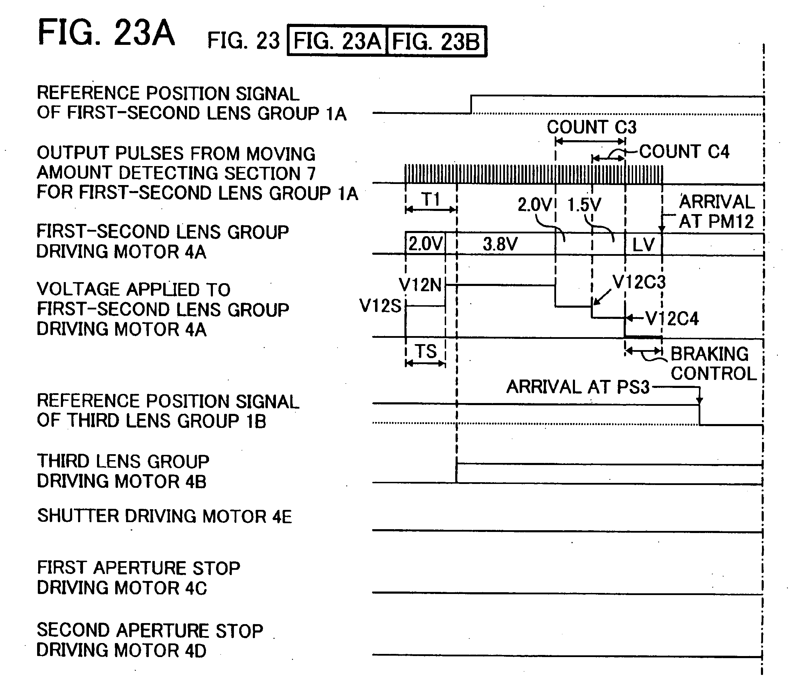

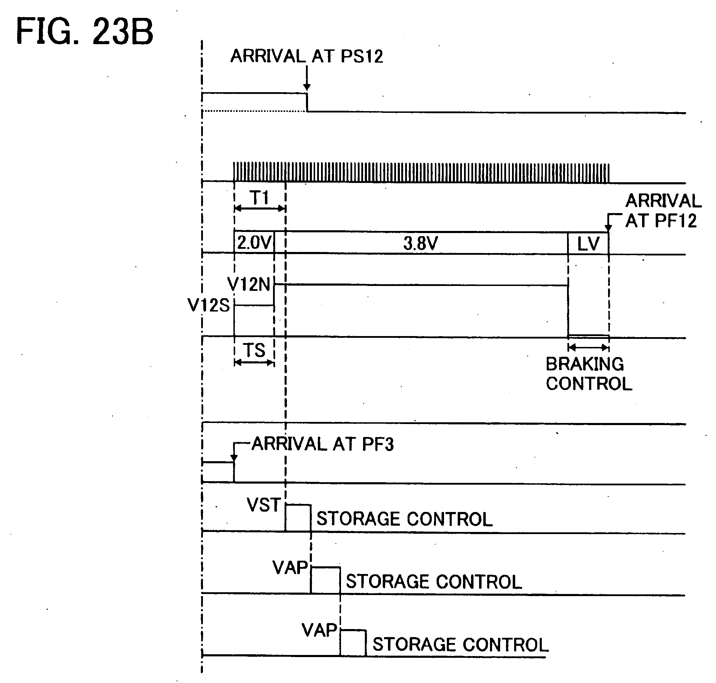

FIG. 1 shows a storage state of the lens barrel unit 1 when the power source is off. When the power source is off, the first-second lens group 1A is stored in the lens barrel main body 1C. The third lens group 1B, the aperture stop 2 and the shutter 3 are also in respective storage states (to be described hereinafter). In this state, positions of the first-second lens group 1A and the third lens group 1B are respectively at storage positions PF12 and PF3 (refer to FIG. 23) which are described hereinafter.

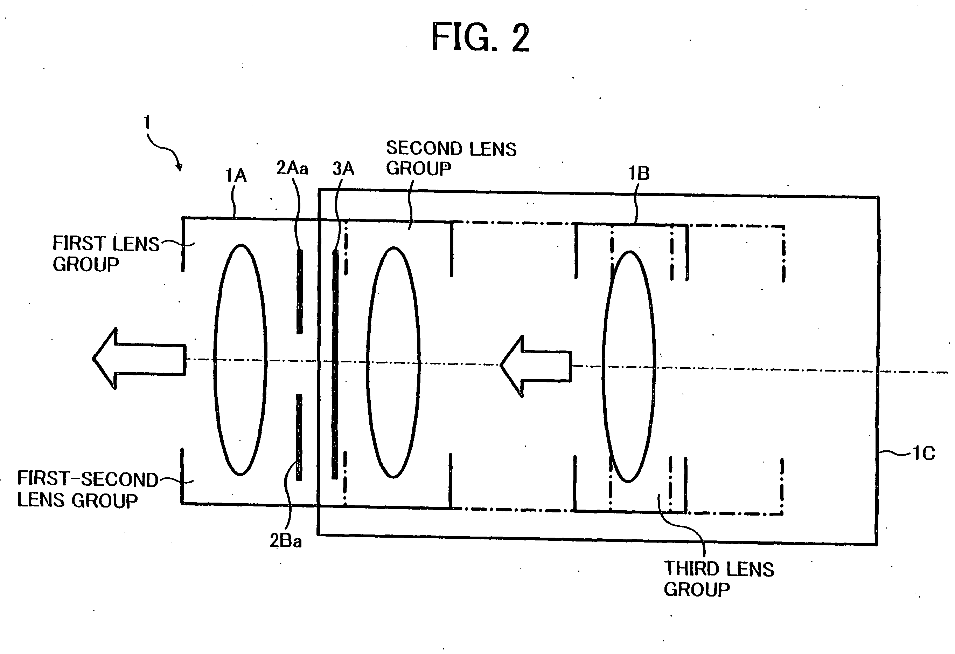

FIG. 2 shows the lens barrel unit 1 in a photographing standby state. In the photographing standby state, the first-second lens group 1A, which is stored in the lens barrel main body 1C when the power source is off, is projected toward an object side. The third lens group 1B, the aperture stop 2 and the shutter 3 are also in respective photographing standby states (to be described hereinafter). In this state, positions of the first-second lens group 1A and the third lens group 1B are respectively at photographing standby positions PW12 and PW3 (refer to FIG. 8) which are described hereinafter.

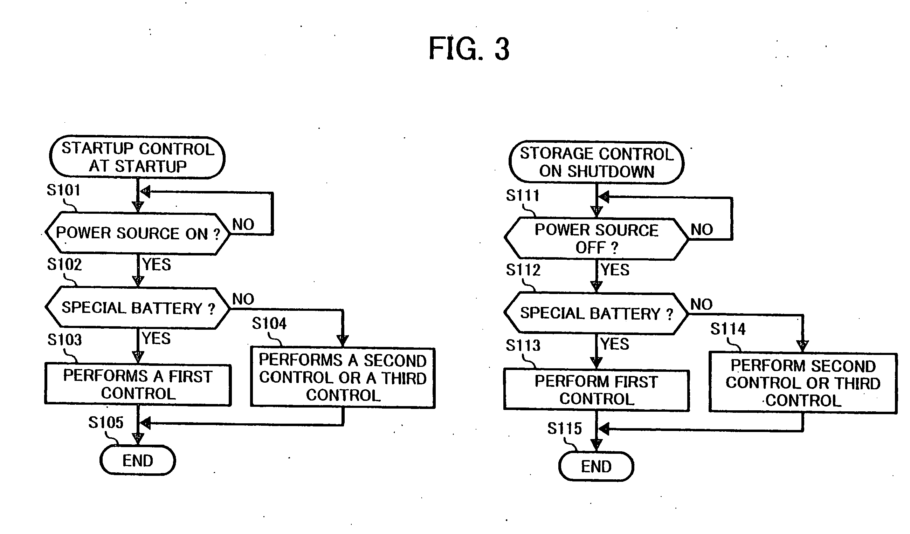

FIG. 3 shows basic operation flows of a CPU according to the present embodiment. The CPU 5B performs controls described hereinafter according to the determination result from the battery type determination section 6.

Steps S101 to S105 show a basic operation flow on startup during which the lens barrel unit 1 is actuated from the storage state to the photographing standby state when the power source is switched on from a power off state.

In step S101, whether the power source is on or off is determined. If the power source switch 6C is operated to switch the power source on from the power off state, the flow moves to step S102. While if the power source is off, the flow returns to step S101.

In step S102, a battery type determination is performed by the battery type determination section 6. If the battery is the special battery, the flow moves to step S103. While if the battery is the universal battery, the flow moves to step S104.

In step S103, there is performed a first control (hereinafter referred to as a high speed control) which minimizes the operation time by including a period during which there are performed simultaneously the driving control of the first-second lens group driving motor 4A and the driving controls of at least one motor of the third lens group driving motor 4B, the first aperture stop driving motor 4C, the second aperture stop driving motor 4D and the shutter driving motor 4E. After this, the flow moves to step S105.

In step S104, there is performed a second control (hereinafter, referred to as a first power saving control) which avoid too much power current or electrical power consumption at one time by performing sequentially in a predefined sequence driving controls of the first-second lens group driving motor 4A, the third lens group driving motor 4B, the first aperture stop driving motor 4C, the second aperture stop driving motor 4D and the shutter driving motor 4E, or a third control (hereinafter, referred to as a second power saving control) which avoid too much power current or electrical power consumption at one time by including a period during which there are performed simultaneously driving controls of at least two of the motors at a reduced motor driving voltage. After this, the flow moves to step S105.

In step S105, the basic operations on startup are finished.

Steps S111 to S115 show a basic operation flow on shutdown during which the lens barrel unit 1 is shutdown from the photographing standby state to the storage state when the power source is switched off from a power on state.

In step S111, whether the power source is on or off is determined. If the power source switch 6C is operated to switch the power source off from the power on state, the flow moves to step S112. While if the power source is on, the flow returns to step S111.

In step S112, the battery type determination is performed by the battery type determination section 6. If the battery is the special battery, the flow moves to step S113. While if the battery is the universal battery, the flow moves to step S114.

In step S113, there is performed the first control, or the high speed control which minimizes the operation time by including a period during which there are performed simultaneously driving controls of the first-second lens group driving motor 4A and at least one motor of the third lens group driving motor 4B, the first aperture stop driving motor 4C, the second aperture stop driving motor 4D and the shutter driving motor 4E. After this, the flow moves to step S115.

In step S114, there is performed the second control, or the first power saving control which avoid too much power current or electrical power consumption at one time by performing sequentially in a predefined sequence driving controls of the first-second lens group driving motor 4A, the third lens group driving motor 4B, the first aperture stop driving motor 4C, the second aperture stop driving motor 4D and the shutter driving motor 4E, or a third control or the second power saving control which avoid too much power current or electrical power consumption at one time by including a period during which there are performed simultaneously driving controls of at least two of the motors at a reduced motor driving voltage. After this, the flow moves to step S115.

In step S115, the basic operations on shutdown are finished.

### [Embodiment 1]

In the present embodiment, when the first-second lens group 1A, the third lens group 1B, the aperture stop 2 and the shutter 3 are actuated to the photographing standby state after the power source is switched on from the power off state, there is performed the high speed control which includes a period during which the driving control of the first-second lens group 1A and the driving controls on the third lens group 1B, the aperture stop 2 and the shutter 3 are simultaneously performed in a case when the battery is the special battery, or there is performed the first power saving control which performs sequentially in a predefined sequence the driving controls of the first-second lens group 1A, the third lens group 1B, the aperture stop 2 and the shutter 3 in a case when the battery is the universal battery.

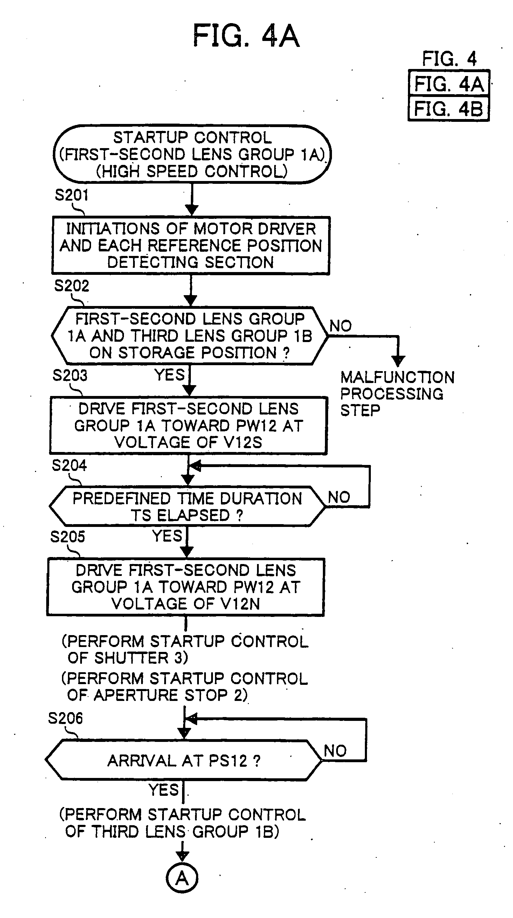

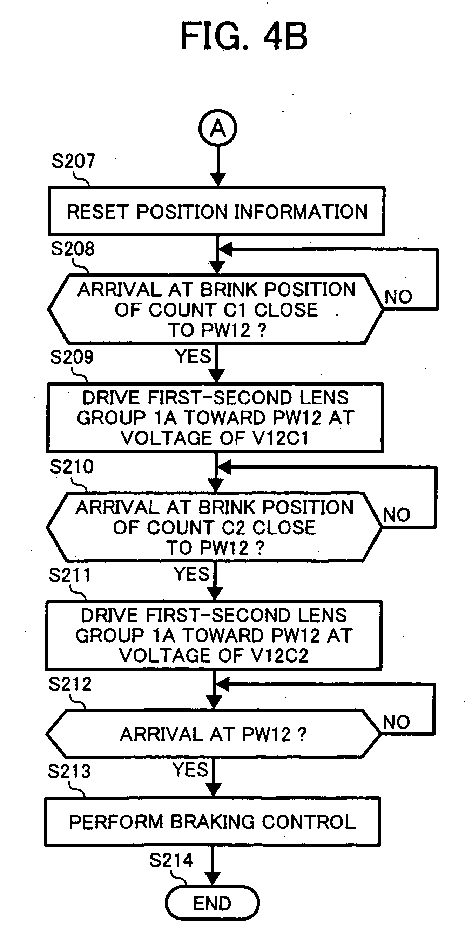

Firstly, the high speed control on startup is described with reference to flow charts in FIGs. 4 to 7 and a timing chart in FIG. 8 when the battery is the special battery.

FIG. 4 shows a flow on the high speed control operations on startup of the first-second lens group 1A.

In step S201, initiations of the motor driver 5A, the reference position detecting section 9A and the reference position detecting section 9B are performed by the CPU 5B. In the initiation of the motor driver 5A, a default driving voltage is set for the first-second lens group driving motor 4A, the third lens group driving motor 4B, the first aperture stop driving motor 4C, the second aperture stop driving motor 4D and the shutter driving motor 4E, respectively. Also, in the initiations of the reference position detecting section 9A and the reference position detecting section 9B, driving on the above described photo-flooding section and photo-receiving section is actuated. After this, the flow moves to step S202.

In step S202, position determinations on the first-second lens group 1A and the third lens group 1B are performed. If the first-second lens group 1A and the third lens group 1B are determined by the respective reference position detecting sections 9A and 9B to be at the respective storage positions PF12 and PF3, the flow moves to step S203. While if the first-second lens group 1A and the third lens group 1B are determined not to be at the respective storage positions PF12 and PF3, it corresponds to that the first-second lens group 1A and the third lens group 1B are not stored at the respective storage positions PF12 and PF3 when the power source is off, the flow moves to a malfunction processing step which performs an alarm, and so on.

In step S203, the first-second lens group driving motor 4A is driven at a voltage of V12S (2.0V in FIG. 8) such that the first-second lens group 1A moves toward the photographing standby position PW12. In order to prevent an inrush current flowing immediately after the first-second lens group driving motor 4A is driven, the voltage of V12S is set to a value lower than a normal voltage of V12N (3.8V in FIG. 8), and the first-second lens group driving motor 4A is driven at the voltage of V12S during a predefined time duration TS after the first-second lens group driving motor 4A is actuated. After this, the flow moves to step S204.

In step S204, whether the predefined time duration TS has elapsed after the first-second lens group driving motor 4A is actuated is determined. If the predefined time duration TS has elapsed after the first-second lens group driving motor 4A is actuated, the flow moves to step S205. While if the predefined time duration TS does not elapse after the first-second lens group driving motor 4A is actuated, the flow returns to step S204.

In step S205, the first-second lens group driving motor 4A is driven at the normal voltage of V12N which is higher than the voltage of V12S such that the first-second lens group 1A moves toward the photographing standby position PW12. After this, the flow moves to step S206.

In addition, between step S205 and step S206, there are performed startup controls of the shutter 3 and the aperture stop 2 which are described hereinafter.

In step S206, whether the first-second lens group 1A has been at the reference position PS12 is determined. If the first-second lens group 1A is determined by the reference position determination section 9A to have been at the reference position PS12, the flow moves to step S207. While if the first-second lens group 1A is not at the reference position PS12, the flow returns to step S206.

In addition, between step S206 and step S207, there is performed a startup control of the third lens group 1B which is described hereinafter.

In step S207, there is performed a reset on position information of the first-second lens group 1A calculated in the CPU 5B. At this point, the CPU 5B counts once again the output pulses from the moving amount detecting section 7 for the first-second lens group 1A, and the first-second lens group driving motor 4A continues driving until a counted number reaches a predefined number corresponding to the photographing standby position PW12. After this, the flow moves to step S208.

In step S208, whether the first-second lens group 1A has arrived at a brink position of a count C1 close to the photographing standby position PW12 is determined. If the first-second lens group 1A has arrived at the brink position of the count C1 close to the photographing standby position PW12, the flow moves to step S209. While if first-second lens group 1A is not at the brink position of the count C1 close to the photographing standby position PW12, the flow returns to step S208.

In step S209, the first-second lens group driving motor 4A is driven at a voltage of V12C1 (2.0V in FIG. 8) which is lower than the normal voltage of V12N such that the first-second lens group 1A moves toward the photographing standby position PW12. When the first-second lens group 1A has arrived at a position close to the photographing standby position PW12, the voltage of V12C1 which is lower than the normal voltage of V12N is used as a voltage applied to the first-second lens group driving motor 4A such that the first-second lens group 1A does not overrun over the photographing standby position PW12 when the first-second lens group 1A is to be stopped at the photographing standby position PW12. After this, the flow moves to step S210.

In step S210, whether the first-second lens group 1A has arrived at a brink position of a count C2 (count C2< count C1) close to the photographing standby position PW12 is determined. If the first-second lens group 1A moves further close to the photographing standby position PW12 and has arrived at the brink position of the count C2, the flow moves to step S211. While if the first-second lens group 1A is not at the brink position of the count C2 close to the photographing standby position PW12, the flow returns to step S210.

In step S211, the first-second lens group driving motor 4A is driven at a voltage of V12C2 (1.5V in FIG. 8) which is further lower than the voltage of V12C1 such that the first-second lens group 1A moves toward the photographing standby position PW12. When the first-second lens group 1A has arrived at a position further close to the photographing standby position PW12, the voltage of V12C2 which is further lower than the voltage of V12C1 is used as a voltage applied to the first-second lens group driving motor 4A such that the first-second lens group 1A does not overrun over the photographing standby position PW12 when the first-second lens group 1A is to be stopped at the photographing standby position PW12. After this, the flow moves to step S212.

In step S212, whether the first-second lens group 1A has been at the photographing standby position PW12 is determined. If the output pulses from the moving amount detecting section 7 for the first-second lens group 1A have been the predefined number, this is to say, the first-second lens group 1A has been at the photographing standby position PW12, the flow moves to step S213. While if the first-second lens group 1A is not at the photographing standby position PW12, the flow return to step S212.

In step S213, a braking control is performed on the first-second lens group driving motor 4A. The first-second lens group driving motor 4A is stopped driving on the first-second lens group 1A. The braking control performs the driving stop by applying a low level voltage (noted as LV in FIG. 8) to both terminals of the first-second lens group driving motor 4A. After this, the flow moves to step S214.

In step S214, the high speed control on startup of the first-second lens group 1A is finished.

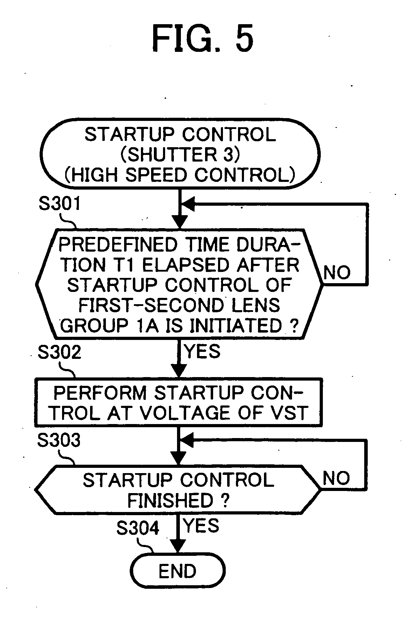

FIG. 5 shows a flow on the high speed control operations on startup of the shutter 3.

In step S301, whether a predefined time duration T1 has elapsed after the startup control of the first-second lens group 1A is initiated is determined. If the predefined time duration T1 has elapsed after the startup control of the first-second lens group 1A is initiated, the flow moves to step S302. While if the predefined time duration T1 does not elapse after the startup control of the first-second lens group 1A is initiated, the flow returns to step S301.

In step S302, the startup control of the shutter 3 is performed at a voltage of VST. The startup control of the shutter 3 is performed by driving the shielding plate 3A with the shutter driving motor 4E such that the shutter 3 is in the full open state. After this, the flow moves to step S303.

In step S303, whether the startup control of the shutter 3 has been finished is determined. If the startup control of the shutter 3 has been finished, the flow moves to step S304. While if the startup control of the shutter 3 is not finished, the flow returns to step S303 and the startup control of the shutter 3 is continued.

In step S304, the high speed control on startup of the shutter 3 is finished.

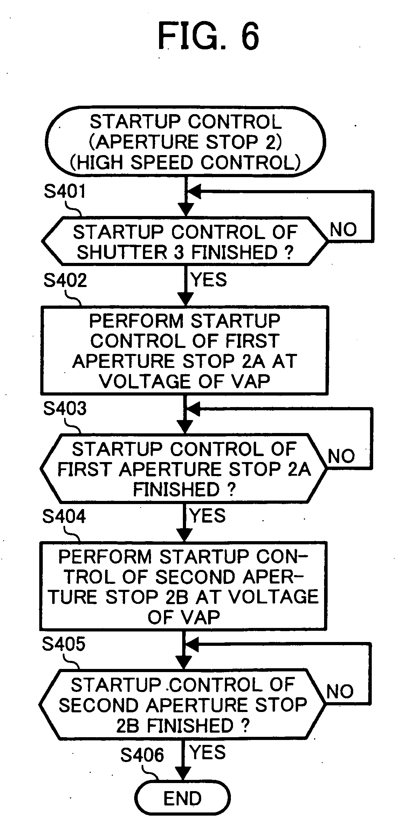

FIG. 6 shows a flow on the high speed control operations on startup of the aperture stop 2.

In step S401, whether the startup control of the shutter 3 has been finished is determined. If the startup control of the shutter 3 has been finished, the flow moves to step S402. While if the startup control of the shutter 3 is not finished, the flow returns to step S401.

In step S402, the startup control of the first aperture stop 2A is performed at a voltage of VAP. The startup control of the first aperture stop 2A is performed by driving the aperture stop plate 2Aa with the first aperture stop driving motor 4C such that the aperture having a diameter corresponding to the medium aperture stop disposed in the aperture stop plate 2Aa is positioned on the optical axis of the first-second lens group 1A and the third lens group 1B. After this, the flow moves to step S403.

In step S403, whether the startup control of the first aperture stop 2A has been finished is determined. If the startup control of the first aperture stop 2A has been finished, the flow moves to step S404. While if the startup control of the first aperture stop 2A is not finished, the flow returns to step S403 and the startup control of the first aperture stop 2A is continued.

In step S404, the startup control of the second aperture stop 2B is performed at the voltage of VAP. The startup control of the second aperture stop 2B is performed by driving the aperture stop plate 2Ba with the second aperture stop driving motor 4D such that the aperture having a diameter corresponding to the medium aperture stop disposed in the aperture stop plate 2Ba is positioned on the optical axis of the first-second lens group 1A and the third lens group 1B. After this, the flow moves to step S405.

In step S405, whether the startup control of the second aperture stop 2B has been finished is determined. If the startup control of the second aperture stop 2B has been finished, the flow moves to step S406. While if the startup control of the second aperture stop 2B is not finished, the flow returns to step S405 and the startup control of the second aperture stop 2B is continued.

In step S406, the high speed control on startup of the aperture stop 2 is finished.

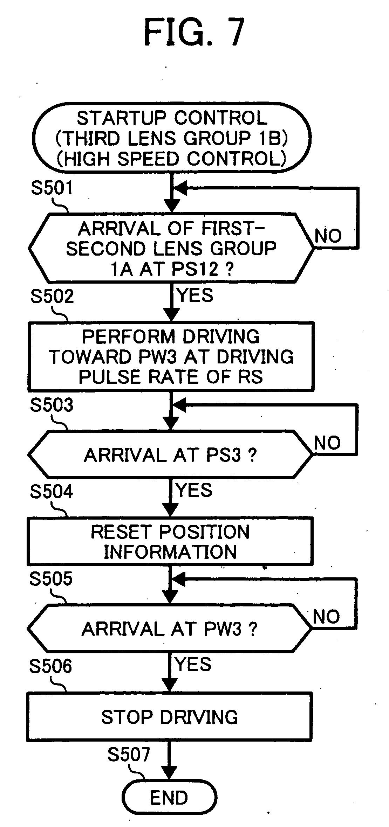

FIG. 7 shows a flow on the high speed control operations on startup of the third lens group 1B.

In step S501, whether the first-second lens group 1A has arrived at the reference position PS12 is determined. If the first-second lens group 1A has arrived at the reference position PS12, the flow moves to step S502. While if first-second lens group 1A is not at the reference position PS12, the flow returns to step S501.

In step S502, the third lens group 1B is driven by the third lens group driving motor 4B at a driving pulse rate of RS such that the third lens group 1B moves toward the photographing standby position PW3. The driving pulse rate of RS is set at a rate higher than a normal driving pulse rate of RN such that the third lens group 1B arrives at the photographing standby position PW3 faster. After this, the flow moves to step S503.

In step S503, whether the third lens group 1B has arrived at the reference position PS3 is determined. If the third lens group 1B is determined to have been at the reference position PS3 by the reference position detecting section 9B, the flow moves to step S504. While if the third lens group 1B is not at the reference position PS3, the flow returns to step S503.

In step S504, there is performed a reset on position information of the third lens group 1B calculated in the CPU 5B. At this point, the CPU 5B counts once again the output pulses provided to the third lens group driving motor 4B and the third lens group driving motor 4B continues driving until the counted number reaches a predefined number corresponding to the photographing standby position PW3. After this, the flow moves to step S505.

In step S505, whether the third lens group 1B has arrived at the photographing standby position PW3 is determined. If the driving pulses of the third lens group 1B have reached the predefined number counted when the third lens group 1B has arrived at the reference position PS3, that is to say that the third lens group 1B has arrived at the photographing standby position PW3, the flow moves to S506. While if the third lens group 1B is not at the photographing standby position PW3, the flow returns to step S505.

In step S506, the third lens group driving motor 4B is stopped driving. After this, the flow moves to step S507.

In step S507, the high speed control on startup of the third lens group 1B is finished.

The timing chart on operations of the first-second lens group 1A, the third lens group 1B, the aperture stop 2 and the shutter 3 described above is shown in FIG. 8.

As aforementioned, when the first-second lens group 1A, the third lens group 1B, the aperture stop 2 and the shutter 3 are actuated to the photographing standby state on startup, if the battery is the special battery, the driving controls of the third lens group 1B, the aperture stop 2 and the shutter 3 are performed in parallel to that of the first-second lens group 1A. Therefore, it is capable to minimize the startup time.

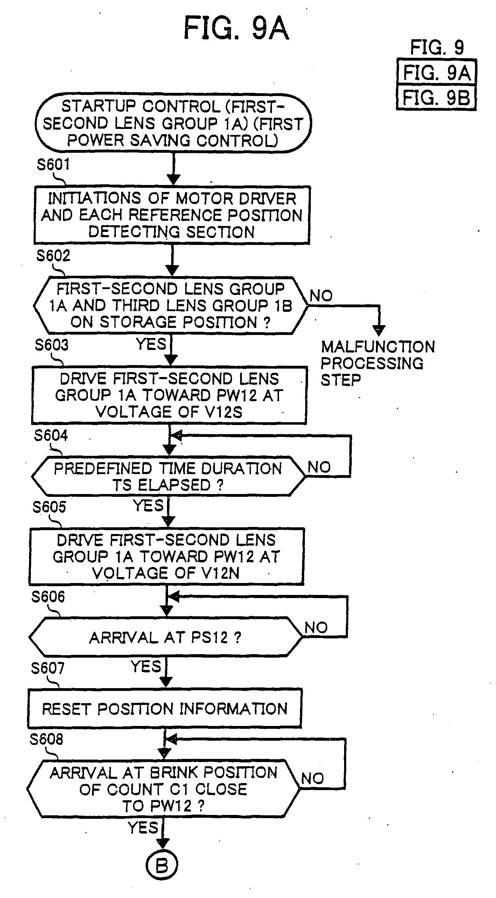

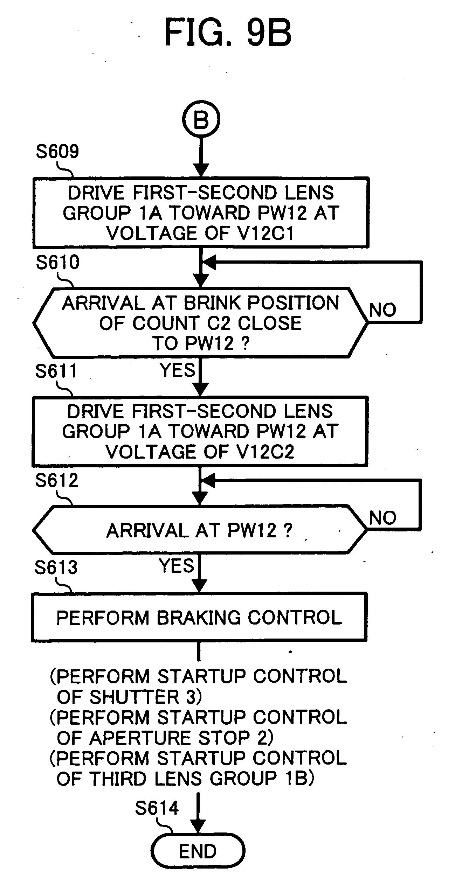

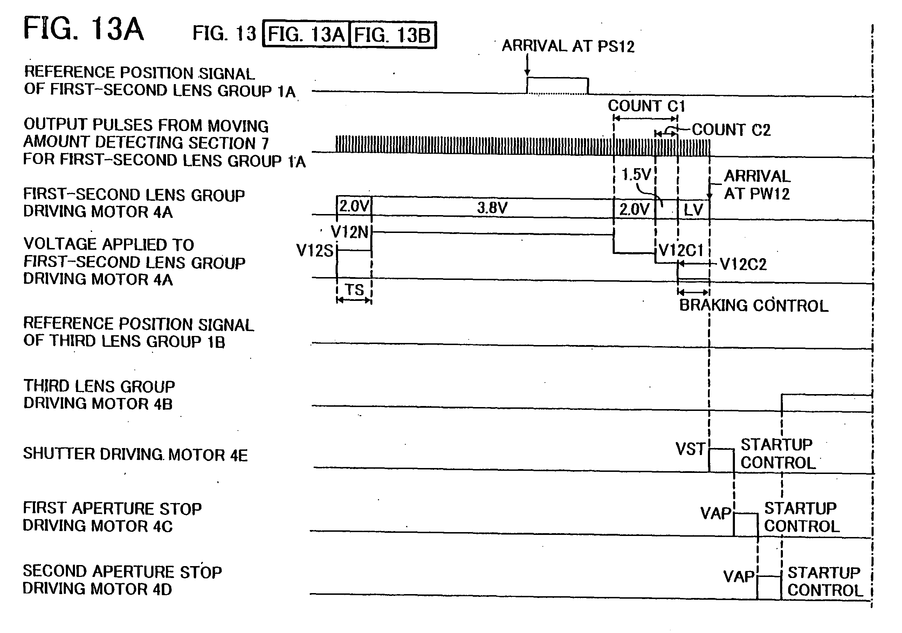

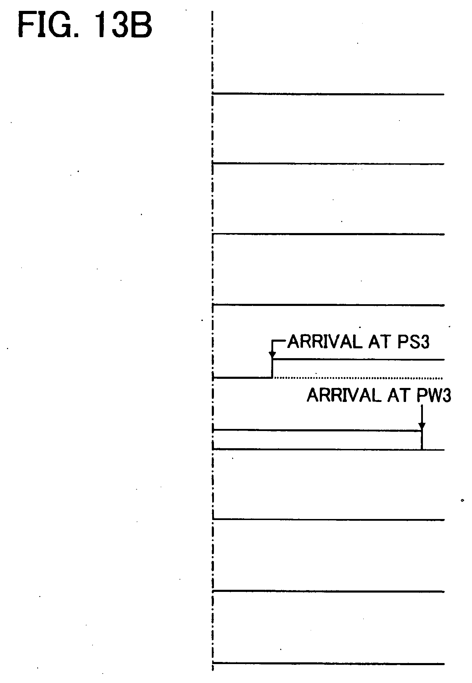

Secondly, the first power saving control on startup is described with reference to flow charts in FIGs. 9 to 12 and a timing chart in FIG. 13 when the battery is the universal battery.

FIG. 9 shows a flow on the first power saving control operations on startup of the first-second lens group 1A.

In step S601, initiations of the motor driver 5A, the reference position detecting section 9A and the reference position detecting section 9B are performed by the CPU 5B. The contents of each initiation are equivalent to that in step S201. After this, the flow moves to step S602.

In step S602, position determinations on the first-second lens group 1A and the third lens group 1B are performed. If the first-second lens group 1A and the third lens group 1B are determined by the respective reference position detecting sections 9A and 9B to have been at the respective storage positions PF12 and PF3, the flow moves to step S603. While if the first-second lens group 1A and the third lens group 1B are determined not to be at the respective storage positions PF12 and PF3, it corresponds to that the first-second lens group 1A and the third lens group 1B are not stored at the respective storage positions PF12 and PF3 when the power source is off, the flow moves to a malfunction processing step which performs an alarm, and so on.

In step S603, the first-second lens group driving motor 4A is driven at the voltage of V12S (2.0V in FIG. 13) such that the first-second lens group 1A moves toward the photographing standby position PW12. In order to prevent the inrush current flowing immediately after the first-second lens group driving motor 4A is driven, the voltage of V12S is set to a value lower than the normal voltage of V12N (3.8V in FIG. 13), and the first-second lens group driving motor 4A is driven at the voltage of V12S during the predefined time duration TS after the first-second lens group driving motor 4A is actuated. After this, the flow moves to step S604.

In step S604, whether the predefined time duration TS has elapsed after the first-second lens group driving motor 4A is actuated is determined. If the predefined time duration TS has elapsed after the first-second lens group driving motor 4A is actuated, the flow moves to step S605. While if the predefined time duration TS does not elapse after the first-second lens group driving motor 4A is actuated, the flow returns to step S604.

In step S605, the first-second lens group driving motor 4A is driven at the normal voltage of V12N which is higher than the voltage of V12S such that the first-second lens group 1A moves toward the photographing standby position PW12. After this, the flow moves to step S606.

In step S606, whether the first-second lens group 1A has been at the reference position PS12 is determined. If the first-second lens group 1A is determined to have been at the reference position PS12 by the reference position determination section 9A, the flow moves to step S607. While if the first-second lens group 1A is not at the reference position PS12, the flow returns to step S606.

In step S607, there is performed a reset on position information of the first-second lens group 1A calculated in the CPU 5B. At this point, the CPU 5B counts once again the output pulses from the moving amount detecting section 7 for the first-second lens group 1A, and the first-second lens group driving motor 4A continues driving until the counted number reaches the predefined number corresponding to the photographing standby position PW12. After this, the flow moves to step S608.

In step S608, whether the first-second lens group 1A has arrived at the brink position of the count C1 close to the photographing standby position PW12 is determined. If the first-second lens group 1A has arrived at the brink position of the count C1 close to the photographing standby position PW12, the flow moves to step S609. While if first-second lens group 1A is not at the brink position of the count C1 close to the photographing standby position PW12, the flow returns to step S608.

In step S609, the first-second lens group driving motor 4A is driven at the voltage of V12C1 (2.0V in FIG. 13) which is lower than the normal voltage of V12N such that the first-second lens group 1A moves toward the photographing standby position PW12. When the first-second lens group 1A has arrived at a position close to the photographing standby position PW12, the voltage of V12C1 which is lower than the normal voltage of V12N is used as a voltage applied to the first-second lens group driving motor 4A such that the first-second lens group 1A does not overrun over the photographing standby position PW12 when the first-second lens group 1A is to be stopped at the photographing standby position PW12. After this, the flow moves to step S610.

In step S610, whether the first-second lens group 1A has arrived at the brink position of the count C2 (count C2< count C1) close to the photographing standby position PW12 is determined. If the first-second lens group 1A moves further close to the photographing standby position PW12 and has arrived at the brink position of the count C2, the flow moves to step S611. While if the first-second lens group 1A is not at the brink position of the count C2 close to the photographing standby position PW12, the flow returns to step S610.

In step S611, the first-second lens group driving motor 4A is driven at the voltage of V12C2 (1.5V in FIG. 13) which is further lower than the voltage of V12C1 such that the first-second lens group 1A moves toward the photographing standby position PW12. When the first-second lens group 1A has arrived at a position further close to the photographing standby position PW12, the voltage of V12C2 which is further lower than the voltage of V12C1 is used as a voltage applied to the first-second lens group driving motor 4A such that the first-second lens group 1A does not overrun over the photographing standby position PW12 when the first-second lens group 1A is to be stopped at the photographing standby position PW12. After this, the flow moves to step S612.

In step S612, whether the first-second lens group 1A has arrived at the photographing standby position PW12 is determined. If the output pulses from the moving amount detecting section 7 for the first-second lens group 1A have been the predefined number, this is to say that the first-second lens group 1A has been at the photographing standby position PW12, the flow moves to step S613. While if the first-second lens group 1A is not at the photographing standby position PW12, the flow return to step S612.

In step S613, the braking control is performed on the first-second lens group driving motor 4A. The first-second lens group driving motor 4A is stopped driving on the first-second lens group 1A. The contents of the braking control are equivalent to that in step S213. After this, the flow moves to step S614.

In addition, between step S163 and step S614, there are performed sequentially the startup controls of the shutter 3, the aperture stop 2 and the third lens group 1B which are described hereinafter.

In step S614, the first power saving control on startup of the first-second lens group 1A is finished.

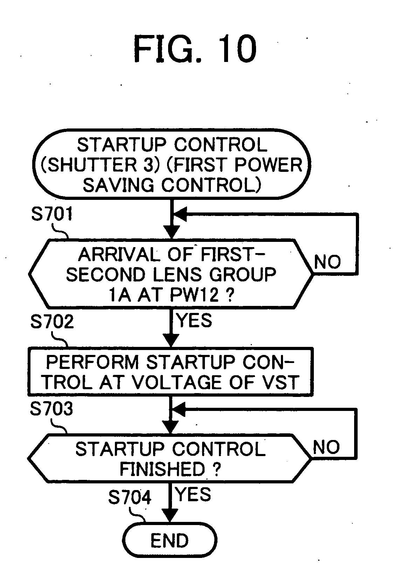

FIG. 10 shows a flow on the first power saving control operations on startup of the shutter 3.

In step S701, whether the first-second lens group 1A has arrived at the photographing standby position PW12 is determined. If the first-second lens group 1A has been at the photographing standby position PW12, the flow moves to step S702. While if the first-second lens group 1A is not at the photographing standby position PW12, the flow return to step S701.

In step S702, the startup control of the shutter 3 is performed at the voltage of VST. The contents of the startup control are equivalent to that in step S302. After this, the flow moves to step S703.

In step S703, whether the startup control of the shutter 3 has been finished is determined. If the startup control of the shutter 3 has been finished, the flow moves to step S704. While if the startup control of the shutter 3 is not finished, the flow returns to step S703 and the startup control of the shutter 3 is continued.

In step S704, the first power saving control on startup of the shutter 3 is finished.

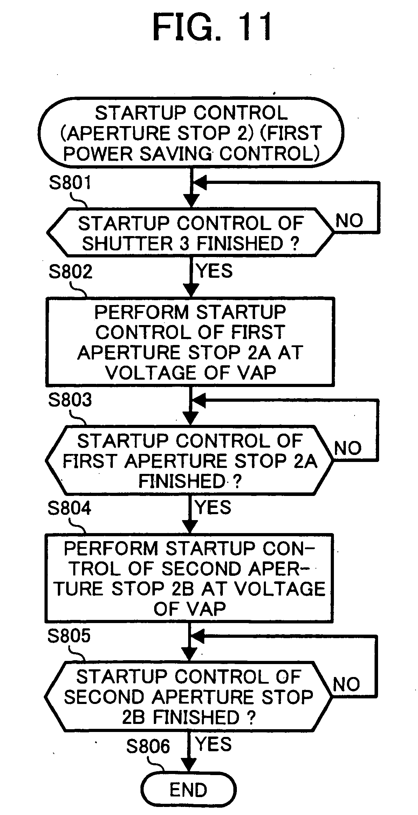

FIG. 11 shows a flow on the first power saving control operations on startup of the aperture stop 2.

In step S801, whether the startup control of the shutter 3 has been finished is determined. If the startup control of the shutter 3 has been finished, the flow moves to step S802. While if the startup control of the shutter 3 is not finished, the flow returns to step S801.

In step S802, the startup control of the first aperture stop 2A is performed at the voltage of VAP. The contents of the startup control are equivalent to that in step S402. After this, the flow moves to step S803.

In step S803, whether the startup control of the first aperture stop 2A has been finished is determined. If the startup control of the first aperture stop 2A has been finished, the flow moves to step S804. While if the startup control of the first aperture stop 2A is not finished, the flow returns to step S803 and the startup control of the first aperture stop 2A is continued.

In step S804, the startup control of the second aperture stop 2B is performed at the voltage of VAP. The contents of the startup control are equivalent to that in step S404. After this, the flow moves to step S805.

In step S805, whether the startup control of the second aperture stop 2B has been finished is determined. If the startup control of the second aperture stop 2B has been finished, the flow moves to step S806. While if the startup control of the second aperture stop 2B is not finished, the flow returns to step S805 and the startup control of the second aperture stop 2B is continued.

In step S806, the first power saving control on startup of the aperture stop 2 is finished.

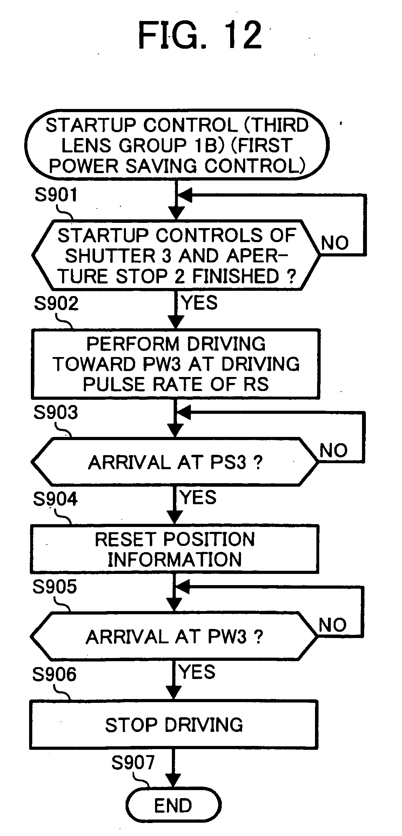

FIG. 12 shows a chart on the first power saving control operations on startup of the third lens group 1B.

In step S901, whether the startup controls of the shutter 3 and the aperture stop 2 have been finished is determined. If the startup controls of the shutter 3 and the aperture stop 2 have been finished, the flow moves to step S902. While if the startup controls of the shutter 3 and the aperture stop 2 are not finished, the flow returns to step S901.

In step S902, the third lens group 1B is driven by the third lens group driving motor 4B at the driving pulse rate of RS such that the third lens group 1B moves toward the photographing standby position PW3. The driving pulse rate of RS is set at a rate higher than the normal driving pulse rate of RN such that the third lens group 1B arrives at the photographing standby position PW3 faster. After this, the flow moves to step S903.

In step S903, whether the third lens group 1B has arrived at the reference position PS3 is determined. If the third lens group 1B is determined to have been at the reference position PS3 by the reference position detecting section 9B, the flow moves to step S904. While if the third lens group 1B is not at the reference position PS3, the flow returns to step S903.

In step S904, there is performed a reset on the position information of the third lens group 1B calculated in the CPU 5B. At this point, the CPU 5B counts once again the output pulses provided to the third lens group driving motor 4B and the third lens group driving motor 4B continues driving until the counted number reaches the predefined number corresponding to the photographing standby position PW3. After this, the flow moves to step S905.

In step S905, whether the third lens group 1B has arrived at the photographing standby position PW3 is determined. If the driving pulses of the third lens group 1B have reached the predefined number counted from a time when the third lens group 1B has arrived at the reference position PS3, that is to say that the third lens group 1B has arrived at the photographing standby position PW3, the flow moves to S906. While if the third lens group 1B is not at the photographing standby position PW3, the flow returns to step S905.

In step S906, the third lens group driving motor 4B is stopped driving. After this, the flow moves to step S907.

In step S907, the first power saving control on startup of the third lens group 1B is finished.

The timing chart on operations of the first-second lens group 1A, the third lens group 1B, the aperture stop 2 and the shutter 3 described above is shown in FIG. 13.

As aforementioned, when the first-second lens group 1A, the third lens group 1B, the aperture stop 2 and the shutter 3 are actuated to the photographing standby state on startup, if the battery is the universal battery, too much power current is prevented from being consumed by performing sequentially the driving controls of the third lens group 1B, the aperture stop 2 and the shutter 3 in a predefined sequence after the startup operation performed on the first-second lens group 1A. Therefore, it is capable to inhibit the early decrease of the battery life expectancy by minimizing the power current consumption.

In addition, when the battery is the universal battery, the above operations are performed at any moment. The battery life expectancy according to the present invention is longer than that of the conventional methods which perform operations attempting to decrease the power current consumption in the case when the voltage of the battery is dropped below a predefined value.

### [Embodiment 2]

In the present embodiment, on startup, there is performed the high speed control which includes a period during which the driving control of the first-second lens group 1A and the driving controls of the third lens group 1B, the aperture stop 2 and the shutter 3 are simultaneously performed in a case when the battery is the special battery, or there is performed the second power saving control which includes a period during which the driving control of the first-second lens group 1A and the driving controls of the third lens group 1B, the aperture stop 2 and the shutter 3 are simultaneously performed and lowers the driving voltage of the first-second lens group driving motor 4A when the simultaneous driving controls are performed in a case when the battery is the universal battery. Since the contents of the high speed control are equivalent to that in the embodiment 1 when the battery is the special battery, descriptions on it are omitted.

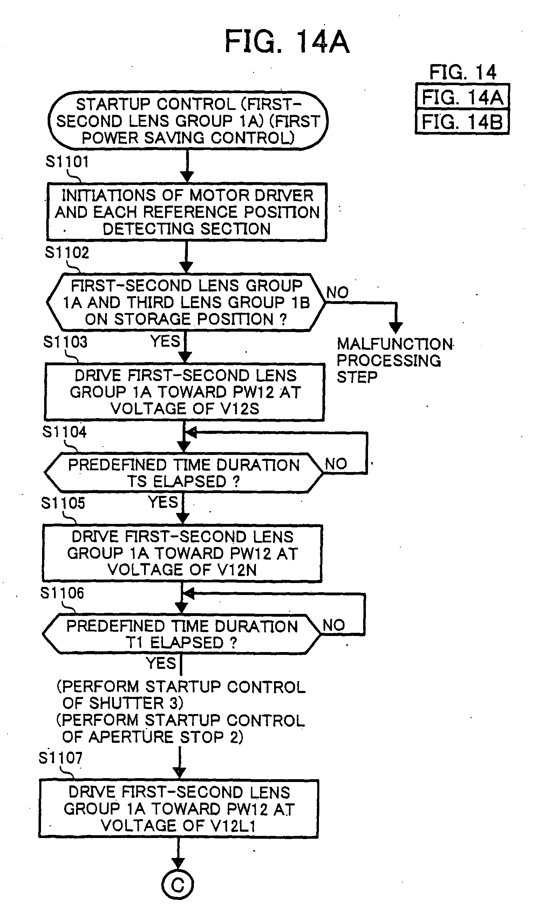

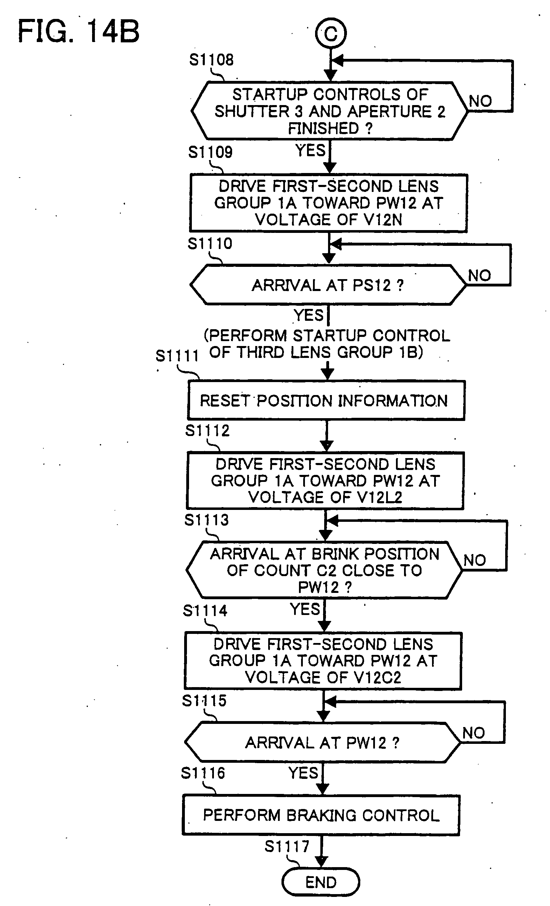

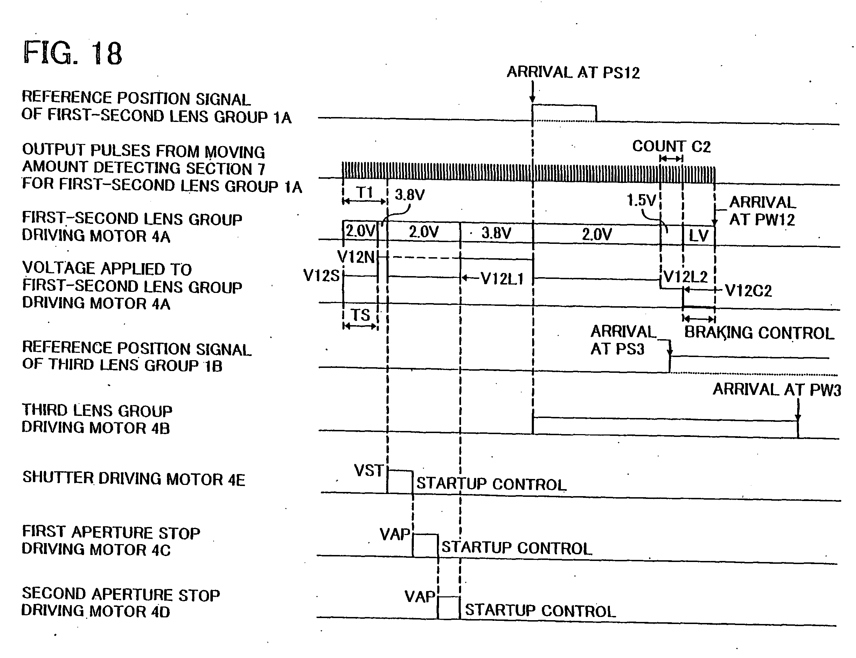

The second power saving control on startup is described with reference to flow charts in FIGs. 14 to 17 and a timing chart in FIG. 18 when the battery is the universal battery.

FIG. 14 shows a flow on the second power saving control operations on startup of the first-second lens group 1A.

In step S1101, initiations of the motor driver 5A, the reference position detecting section 9A and the reference position detecting section 9B are performed by the CPU 5B. The contents of each initiation are equivalent to that in step S201. After this, the flow moves to step S1102.

In step S1102, position determinations on the first-second lens group 1A and the third lens group 1B are performed. If the first-second lens group 1A and the third lens group 1B are determined by the respective reference position detecting sections 9A and 9B to have been at the respective storage positions PF12 and PF3, the flow moves to step S1103. While if the first-second lens group 1A and the third lens group 1B are determined not to be at the respective storage positions PF12 and PF3, it corresponds to that the first-second lens group 1A and the third lens group 1B are not stored at the respective storage positions PF12 and PF3 when the power source is off, the flow moves to a malfunction processing step which performs an alarm, and so on.

In step S1103, the first-second lens group driving motor 4A is driven at the voltage of V12S (2.0V in FIG. 18) such that the first-second lens group 1A moves toward the photographing standby position PW12. In order to prevent the inrush current flowing immediately after the first-second lens group driving motor 4A is driven, the voltage of V12S is set to a value lower than the normal voltage of V12N (3.8V in FIG. 18), and the first-second lens group driving motor 4A is driven at the voltage of V12S during the predefined time duration TS after the first-second lens group driving motor 4A is actuated. After this, the flow moves to step S1104.

In step S1104, whether the predefined time duration TS has elapsed after the first-second lens group driving motor 4A is actuated is determined. If the predefined time duration TS has elapsed after the first-second lens group driving motor 4A is actuated, the flow moves to step S1105. While if the predefined time duration TS does not elapse after the first-second lens group driving motor 4A is actuated, the flow returns to step S1104.

In step S1105, the first-second lens group driving motor 4A is driven at the normal voltage of V12N which is higher than the voltage of V12S such that the first-second lens group 1A moves toward the photographing standby position PW12. After this, the flow moves to step S1106.

In step S1106, the predefined time duration T1 has elapsed after the first-second lens group driving motor 4A is actuated is determined. If the predefined time duration T1 has elapsed after the first-second lens group driving motor 4A is actuated, the flow moves to step S1107. While if the predefined time duration T1 does not elapse after the first-second lens group driving motor 4A is actuated, the flow returns to step S1106.

In addition, between step S1106 and step S1107, there are performed the startup controls of the shutter 3 and the aperture stop 2 which are described hereinafter.

In step S1107, the first-second lens group driving motor 4A is driven at a voltage of V12L1 (2.0V in FIG. 18) which is lower than the normal voltage of V12N such that the first-second lens group 1A moves toward the photographing standby position PW12. After step S1106, the startup controls of the shutter 3 and the aperture stop 2 are performed in parallel to that of the first-second lens group 1A. Therefore, the driving voltage for the first-second lens group driving motor 4A is reduced to the voltage of V12L1 to decrease the power current consumption. After this, the flow moves to step S1108.

In step S1108, whether the startup controls of the shutter 3 and the aperture stop 2 have been finished is determined. If the startup controls of the shutter 3 and the aperture stop 2 have been finished, the flow moves to step S1109. While if the startup controls of the shutter 3 and the aperture stop 2 are not finished, the flow returns to step S1108.

In step S1109, the first-second lens group driving motor 4A is driven at the normal voltage of V12N (3.8V in FIG. 18) such that the first-second lens group 1A moves toward the photographing standby position PW12. After step S1106, when the startup controls of the shutter 3 and the aperture stop 2 performed in parallel to that of the first-second lens group 1A are finished, the reduced driving voltage for the first-second lens group driving motor 4A returns to the normal voltage of V12N. After this, the flow moves to step S1110.

In step S1110, whether the first-second lens group 1A has been at the reference position PS12 is determined. If the first-second lens group 1A is determined to have been at the reference position PS12 by the reference position determination section 9A, the flow moves to step S1111. While if the first-second lens group 1A is not at the reference position PS12, the flow returns to step S1110.

In addition, between step S1110 and step S1111, there is performed the startup control of the third lens group 1B which is described hereinafter.

In step S1111, there is performed a reset on position information of the first-second lens group 1A calculated in the CPU 5B. At this point, the CPU 5B counts once again the output pulses from the moving amount detecting section 7 for the first-second lens group 1A, and the first-second lens group driving motor 4A continues driving until the counted number reaches the predefined number corresponding to the photographing standby position PW12. After this, the flow moves to step S1112.

In step S1112, the first-second lens group driving motor 4A is driven at a voltage of V12L2 (2.0V in FIG. 18) which is lower than the normal voltage of V12N such that the first-second lens group 1A moves toward the photographing standby position PW12. After step S1110, the startup controls of the shutter 3 and the aperture stop 2 are performed in parallel to that of the first-second lens group 1A. Therefore, the driving voltage for the first-second lens group driving motor 4A is reduced to the voltage of V12L2 to decrease the power current consumption. After this, the flow moves to step S1113.

In step S1113, whether the first-second lens group 1A has arrived at the brink position of the count C2 close to the photographing standby position PW12 is determined. If the first-second lens group 1A has arrived at the brink position of the count C2 close to the photographing standby position PW12, the flow moves to step S1114. While if the first-second lens group 1A is not at the brink position of the count C2 close to the photographing standby position PW12, the flow returns to step S1113.

In step S1114, the first-second lens group driving motor 4A is driven at the voltage of V12C2 (1.5V in FIG. 18) which is lower than the voltage of V12L2 such that the first-second lens group 1A moves toward the photographing standby position PW12. When the first-second lens group 1A has arrived at a position further close to the photographing standby position PW12, the voltage of V12C2 which is lower than the voltage of V12L2 is used as a voltage applied to the first-second lens group driving motor 4A such that the first-second lens group 1A does not overrun over the photographing standby position PW12 when the first-second lens group 1A is to be stopped at the photographing standby position PW12. After this, the flow moves to step S1115.

In step S1115, whether the first-second lens group 1A has arrived at the photographing standby position PW12 is determined. If the output pulses from the moving amount detecting section 7 for the first-second lens group 1A have been the predefined number, this is to say that the first-second lens group 1A has been at the photographing standby position PW12, the flow moves to step S1116. While if the first-second lens group 1A is not at the photographing standby position PW12, the flow return to step S1115.

In step S1116, the braking control is performed on the first-second lens group driving motor 4A. The first-second lens group driving motor 4A is stopped driving on the first-second lens group 1A. The contents of the braking control are equivalent to that in step S213. After this, the flow moves to step S1117.

In step S1117, the second power saving control on startup of the first-second lens group 1A is finished.

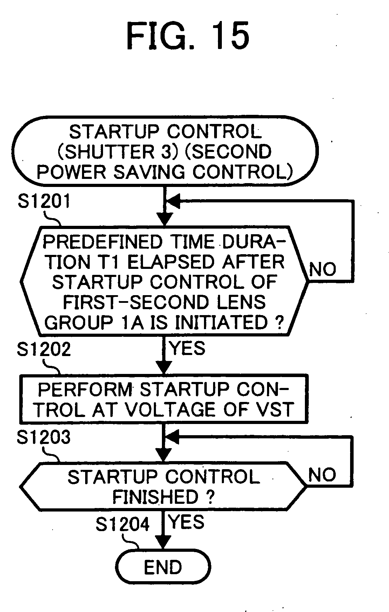

FIG. 15 shows a flow on the second power saving control operations on startup of the shutter 3.

In step S1201, whether the predefined time duration T1 has elapsed after the startup control of the first-second lens group 1A is initiated is determined. If the predefined time duration T1 has elapsed after the startup control of the first-second lens group 1A is initiated, the flow moves to step S1202. While if the predefined time duration T1 does not elapse after the startup control of the first-second lens group 1A is initiated, the flow returns to step S1201.

In step S1202, the startup control of the shutter 3 is performed at the voltage of VST. The contents of the startup control are equivalent to that in step S302. After this, the flow moves to step S1203.

In step S1203, whether the startup control of the shutter 3 has been finished is determined. If the startup control of the shutter 3 has been finished, the flow moves to step S1204. While if the startup control of the shutter 3 is not finished, the flow returns to step S1203 and the startup control of the shutter 3 is continued.

In step S1204, the second power saving control on startup of the shutter 3 is finished.

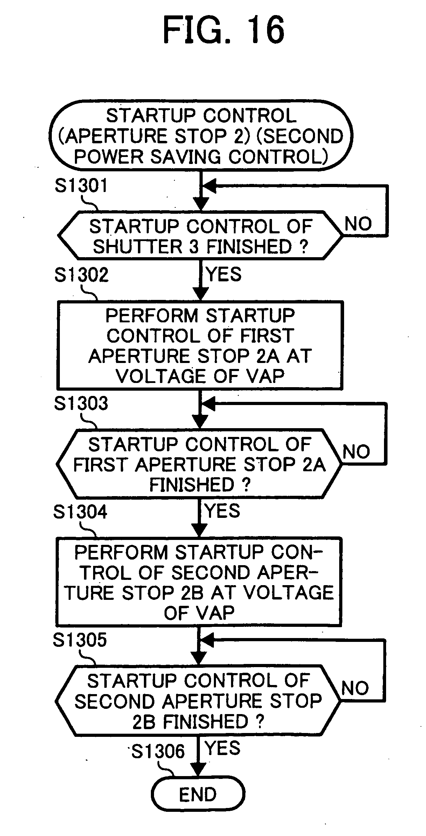

FIG. 16 shows a flow on the second power saving control operations on startup of the aperture stop 2.

In step S1301, whether the startup control of the shutter 3 has been finished is determined. If the startup control of the shutter 3 has been finished, the flow moves to step S1302. While if the startup control of the shutter 3 is not finished, the flow returns to step S1301.

In step S1302, the startup control of the first aperture stop 2A is performed at the voltage of VAP. The contents of the startup control are equivalent to that in step S402. After this, the flow moves to step S1303.

In step S1303, whether the startup control of the first aperture stop 2A has been finished is determined. If the startup control of the first aperture stop 2A has been finished, the flow moves to step S1304. While if the startup control of the first aperture stop 2A is not finished, the flow returns to step S1303 and the startup control of the first aperture stop 2A is continued.

In step S1304, the startup control of the second aperture stop 2B is performed at the voltage of VAP. The contents of the startup control are equivalent to that in step S404. After this, the flow moves to step S1305.

In step S1305, whether the startup control of the second aperture stop 2B has been finished is determined. If the startup control of the second aperture stop 2B has been finished, the flow moves to step S1306. While if the startup control of the second aperture stop 2B is not finished, the flow returns to step S1305 and the startup control of the second aperture stop 2B is continued.

In step S1306, the second power saving control on startup of the aperture stop 2 is finished.

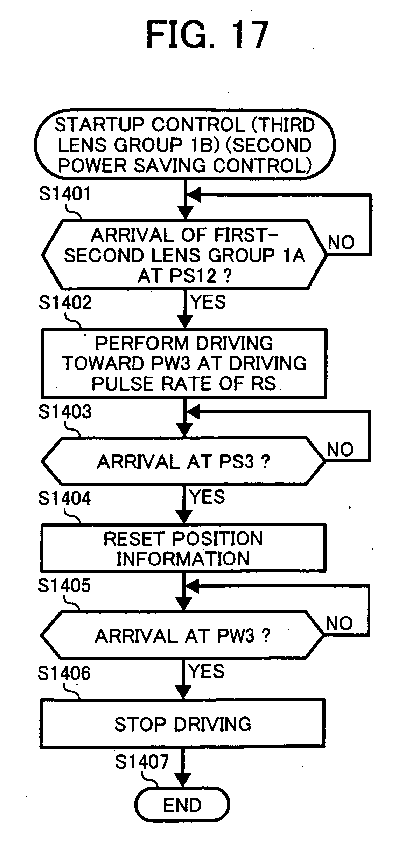

FIG. 17 shows a chart on the second power saving control operations on startup of the third lens group 1B.

In step S1401, whether the first-second lens group 1A has been at the reference position PS12 is determined. If the first-second lens group 1A has been at the reference position PS12, the flow moves to step S1402. While if the first-second lens group 1A is not at the reference position PS12, the flow returns to step S1401.

In step S1402, the third lens group 1B is driven by the third lens group driving motor 4B at the driving pulse rate of RS such that the third lens group 1B moves toward the photographing standby position PW3. The driving pulse rate of RS is set at a rate higher than the normal driving pulse rate of RN such that the third lens group 1B arrives at the photographing standby position PW3 faster. After this, the flow moves to step S1403.

In step S1403, whether the third lens group 1B has arrived at the reference position PS3 is determined. If the third lens group 1B is determined to have been at the reference position PS3 by the reference position detecting section 9B, the flow moves to step S1404. While if the third lens group 1B is not at the reference position PS3, the flow returns to step S1403.

In step S1404, there is performed a reset on the position information of the third lens group 1B calculated in the CPU 5B. At this point, the CPU 5B counts once again the output pulses provided to the third lens group driving motor 4B and the third lens group driving motor 4B continues driving until the counted number reaches the predefined number corresponding to the photographing standby position PW3. After this, the flow moves to step S1405.

In step S1405, whether the third lens group 1B has arrived at the photographing standby position PW3 is determined. If the driving pulses of the third lens group 1B have reached the predefined number counted from a time when the third lens group 1B has arrived at the reference position PS3, that is to say that the third lens group 1B has arrived at the photographing standby position PW3, the flow moves to S1406. While if the third lens group 1B is not at the photographing standby position PW3, the flow returns to step S1405.

In step S1406, the third lens group driving motor 4B is stopped driving. After this, the flow moves to step S1407.

In step S1407, the second power saving control on startup of the third lens group 1B is finished.

The timing chart on operations of the first-second lens group 1A, the third lens group 1B, the aperture stop 2 and the shutter 3 described above is shown in FIG. 18.

As aforementioned, when the first-second lens group 1A, the third lens group 1B, the aperture stop 2 and the shutter 3 are actuated to the photographing standby state on startup, if the battery is the universal battery, too much power current is prevented from being consumed by lowering the driving voltage of the first-second lens group driving motor 4A when performing simultaneously the startup control of the first-second lens group 1B and the startup controls of the third lens group 1B, the aperture stop 2 and the shutter 3. Therefore, it is capable to inhibit the early decrease of the battery life expectancy by minimizing the power current consumption.

In addition, when the battery is the universal battery, the above operations are performed at any moment. It is capable to enable the battery life expectancy according to the present invention longer than that of the conventional methods which perform operations attempting to decrease the power current consumption in the case when the voltage of the battery is dropped below a predefined value.

### [Embodiment 3]

In the present embodiment, when the power source is off and the first-second lens group 1A, the third lens group 1B, the aperture stop 2 and the shutter 3 are shutdown to the storage state on shutdown, there is performed the high speed control which includes a period during which the driving control of the first-second lens group 1A and the driving controls of the third lens group 1B, the aperture stop 2 and the shutter 3 are simultaneously performed in a case when the battery is the special battery, or there is performed the first power saving control which performs sequentially in a predefined sequence driving controls of the first-second lens group 1A, the third lens group 1B, the aperture stop 2 and the shutter 3 in a case when the battery is the universal battery. Since there is a possible interference between the first-second lens group 1A and the third lens group I B, a preceding storage control for stopping the driving control of the first-second lens group 1A is temporarily performed when the first-second lens group 1A has been at a predefined position during until the third lens group I B arrives at the storage position.

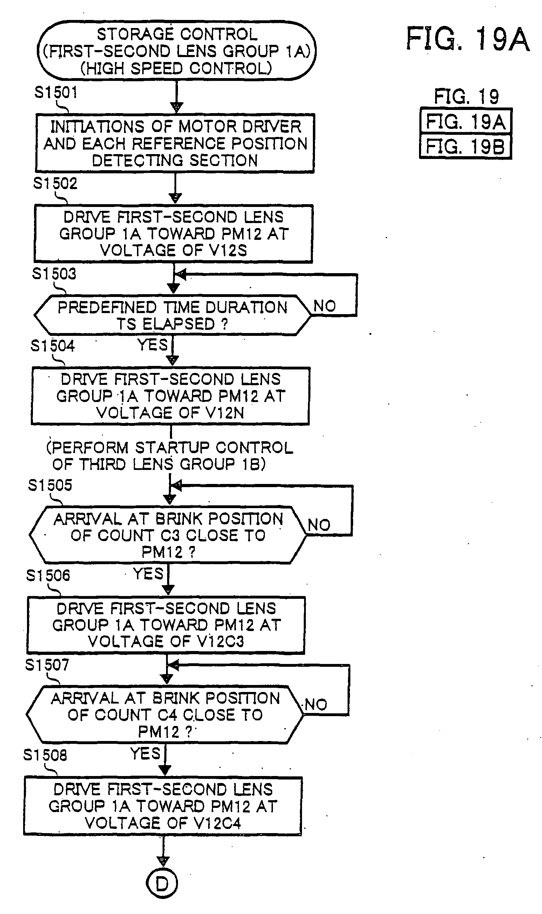

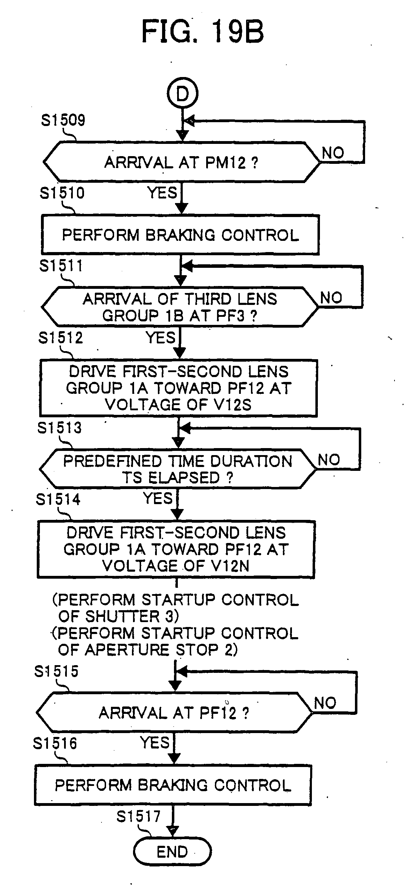

Firstly, the high speed control on shutdown is described with reference to flow charts in FIGs. 19 to 22 and a timing chart in FIG. 23 when the battery is the special battery.

FIG 19 shows a flow on the high speed control operations on shutdown of the first-second lens group 1A.

In step S1501, initiations of the motor driver 5A, the reference position detecting section 9A and the reference position detecting section 9B are performed by the CPU 5B. The contents of each initiation are equivalent to that in step S201. After this, the flow moves to step S1502.

In step S1502, the first-second lens group driving motor 4A is driven at the voltage of V12S (2.0V in FIG 23) such that the first-second lens group 1A moves toward a preceding storage position PM12. In order to prevent the inrush current flowing immediately after the first-second lens group driving motor 4A is actuated, the voltage of V12S is set to a value lower than the normal voltage of V12N (3.8V in FIG. 23), and the first-second lens group driving motor 4A is driven at the voltage of V12S during the predefined time duration TS after the first-second lens group driving motor 4A is actuated. After this, the flow moves to step S1503.

In step S 1503, whether the predefined time duration TS has elapsed after the first-second lens group driving motor 4A is actuated is determined.

If the predefined time duration TS has elapsed after the first-second lens group driving motor 4A is actuated, the flow moves to step S1504. While if the predefined time duration TS does not elapse after the first-second lens group driving motor 4A is actuated, the flow returns to step S1503.

In step S1504, the first-second lens group driving motor 4A is driven at the normal voltage of V12N which is higher than the voltage of V12S such that the first-second lens group 1A moves toward the preceding storage position PM12. After this, the flow moves to step S1505.

In addition, between step S1504 and step S1505, there is performed the storage control of the third lens group 1B which is described hereinafter.

In step S1505, whether the first-second lens group 1A has arrived at a brink position of the count C3 close to the preceding storage position PM12 is determined. The preceding storage position PM12 is set at a position where the output pulses from the moving amount detecting section 7 for the first-second lens group 1A has reached a predefined count number starting from the reference position PS12, while herein whether the brink position of the count C3 close to the preceding storage position PM12 has been reached is determined. If the first-second lens group 1A has arrived at the brink position of the count C3 close to the preceding storage position PM12, the flow moves to step S1506. While if first-second lens group 1A is not at the brink position of the count C3 close to the preceding storage position PM12, the flow returns to step S1505.

In step S1506, the first-second lens group driving motor 4A is driven at a voltage of V12C3 (2.0V in FIG. 23) which is lower than the normal voltage of V12N such that the first-second lens group 1A moves toward the preceding storage position PM12. When the first-second lens group 1A has arrived at a position close to the preceding storage position PM12, the voltage of V12C3 which is lower than the normal voltage of V12N is used as a voltage applied to the first-second lens group driving motor 4A such that the first-second lens group 1A does not overrun over the preceding storage position PM12 when the first-second lens group 1A is to be stopped at the preceding storage position PM12. After this, the flow moves to step S1507.

In step S1507, whether the first-second lens group 1A has arrived at a brink position of a count C4 (count C4< count C3) close to the preceding storage position PM12 is determined. If the first-second lens group 1A moves further close to the preceding storage position PM12 and has arrived at the brink position of the count C4, the flow moves to step S1508. While if the first-second lens group 1A is not at the brink position of the count C4 close to the preceding storage position PM12, the flow returns to step S1507.

In step S1508, the first-second lens group driving motor 4A is driven at a voltage of V12C4 (1.5V in FIG. 23) which is further lower than the voltage of V12C3 such that the first-second lens group 1A moves toward the preceding storage position PM12. When the first-second lens group 1A has arrived at a position further close to the preceding storage position PM12, the voltage of V12C4 which is further lower than the voltage of V12C3 is used as a voltage applied to the first-second lens group driving motor 4A such that the first-second lens group 1A does not overrun over the preceding storage position PM12 when the first-second lens group 1A is to be stopped at the preceding storage position PM12. After this, the flow moves to step S1509.

In step S1509, whether the first-second lens group 1A has arrived at the preceding storage position PM12 is determined. If the output pulses from the moving amount detecting section 7 for the first-second lens group 1A have been the predefined count number, this is to say that the first-second lens group 1A has been at the preceding storage position PM12, the flow moves to step S1510. While if the first-second lens group 1A is not at the preceding storage position PM12, the flow returns to step S1509.

In step S1510, the braking control is performed on the first-second lens group driving motor 4A. The first-second lens group driving motor 4A is stopped driving on the first-second lens group 1A. The contents of the braking control are equivalent to that in step S213. After this, the flow moves to step S1511.

In step S1511, whether the third lens group 1B has arrived at the storage position PF3 is determined. If the third lens group 1B driven in parallel to the first-second lens group 1A has been at the storage position PF3, the flow moves to step S1512. While if the third lens group 1B is not at the storage position PF3, the flow returns to step S1511.

In step S1512, the first-second lens group driving motor 4A is driven at the voltage of V12S (2.0V in FIG. 23) such that the first-second lens group 1A stopped at the preceding storage position PM12 moves toward the storage position PF12. In order to prevent the inrush current flowing immediately after the first-second lens group driving motor 4A is actuated, the voltage of V12S is set to a value lower than the normal voltage of V12N (3.8V in FIG. 23), and the first-second lens group driving motor 4A is driven at the voltage of V12S during the predefined time duration TS after the first-second lens group driving motor 4A is actuated. After this, the flow moves to step S1513.

In step S1513, whether the predefined time duration TS has elapsed after the first-second lens group driving motor 4A is actuated is determined. If the predefined time duration TS has elapsed after the first-second lens group driving motor 4A is actuated, the flow moves to step S1514. While if the predefined time duration TS does not elapse after the first-second lens group driving motor 4A is actuated, the flow returns to step S1513.

In step S1514, the first-second lens group driving motor 4A is driven at the normal voltage of V12N which is higher than the voltage of V12S such that the first-second lens group 1A moves toward the preceding storage position PM12. After this, the flow moves to step S1515.

In addition, between step S1514 and step S1515, there are performed the storage controls of the shutter 3 and the aperture stop 2 which are described hereinafter.

In step S1515, whether the first-second lens group 1A has arrived at the storage position PF12 is determined. The storage position PF12 is set at a position where the output pulses from the moving amount detecting section 7 for the first-second lens group 1A has reached a predefined count number starting from the reference position PS12. If the first-second lens group 1A has arrived at the storage position PF12, the flow moves to step S1516. While if first-second lens group 1A is not at the storage position PF12, the flow returns to step S1515.

In step S1516, the braking control is performed on the first-second lens group driving motor 4A. The first-second lens group driving motor 4A is stopped driving on the first-second lens group 1A. The contents of the braking control are equivalent to that in step S213. The driving voltage used to perform the preceding storage control is not reduced to perform the braking control so as to avoid an incomplete storage that the first-second lens group 1A is stopped before arriving at the storage position PF12. After this, the flow moves to step S1517.

In step S1517, the high speed control on shutdown of the first-second lens group 1A is finished.

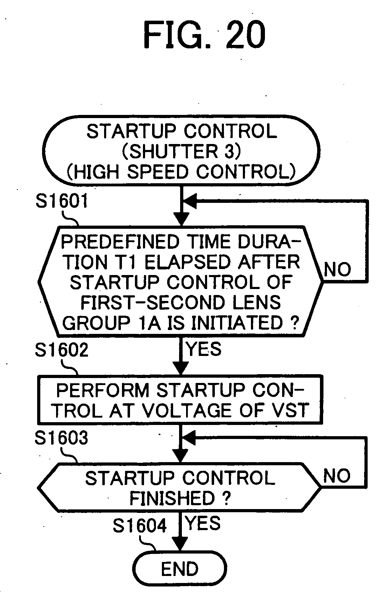

FIG. 20 shows a flow on the high speed control operations on shutdown of the shutter 3.

In step S1601, whether the predefined time duration T1 has elapsed after the first-second lens group 1A which has arrived at the preceding storage position PM12 is actuated once again is determined. If the predefined time duration T1 has elapsed after the first-second lens group 1A is actuated once again, the flow moves to step S1602. While if the predefined time duration T1 does not elapse after the first-second lens group 1A is actuated once again, the flow returns to step S1601.

In step S1602, the storage control of the shutter 3 is performed at the voltage of VST. The storage control is performed by driving the shielding plate 3A with the shutter driving motor 4E such that the shutter 3 is in the full close state. After this, the flow moves to step S1603.

In step S1603, whether the storage control of the shutter 3 has been finished is determined. If the storage control of the shutter 3 has been finished, the flow moves to step S1604. While if the storage control of the shutter 3 is not finished, the flow returns to step S1603 and the storage control of the shutter 3 is continued.

In step S1604, the high speed control on shutdown of the shutter 3 is finished.

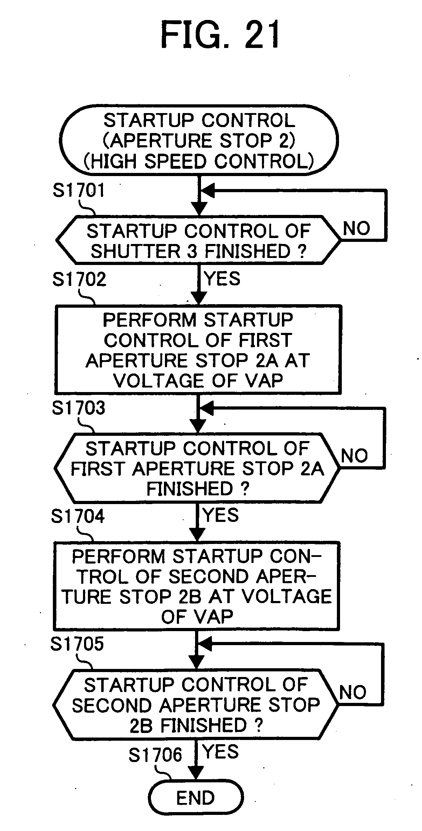

FIG. 21 shows a flow on the high speed control operations on shutdown of the aperture stop 2.

In step S1701, whether the storage control of the shutter 3 has been finished is determined. If the storage control of the shutter 3 has been finished, the flow moves to step S1702. While if the storage control of the shutter 3 is not finished, the flow returns to step S1701.

In step S1702, the storage control of the first aperture stop 2A is performed at the voltage of VAP. The storage control of the first aperture stop 2A is performed by driving the aperture stop plate 2Aa with the first aperture stop driving motor 4C such that the aperture having a diameter corresponding to the medium aperture stop disposed in the aperture stop plate 2Aa is positioned on the optical axis of the first-second lens group 1A and the third lens group 1B. After this, the flow moves to step S1703.

In step S1703, whether the storage control of the first aperture stop 2A has been finished is determined. If the storage control of the first aperture stop 2A has been finished, the flow moves to step S1704. While if the storage control of the first aperture stop 2A is not finished, the flow returns to step S1703 and the storage control of the first aperture stop 2A is continued.

In step S1704, the storage control of the second aperture stop 2B is performed at the voltage of VAP. The storage control of the second aperture stop 2B is performed by driving the aperture stop plate 2Ba with the second aperture stop driving motor 4D such that the aperture having a diameter corresponding to the medium aperture stop disposed in the aperture stop plate 2Ba is positioned on the optical axis of the first-second lens group 1A and the third lens group 1B. After this, the flow moves to step S1705.

In step S1705, whether the storage control of the second aperture stop 2B has been finished is determined. If the storage control of the second aperture stop 2B has been finished, the flow moves to step S1706. While if the storage control of the second aperture stop 2B is not finished, the flow returns to step S1705 and the storage control of the second aperture stop 2B is continued.

In step S1706, the high speed control on shutdown of the aperture stop 2 is finished.

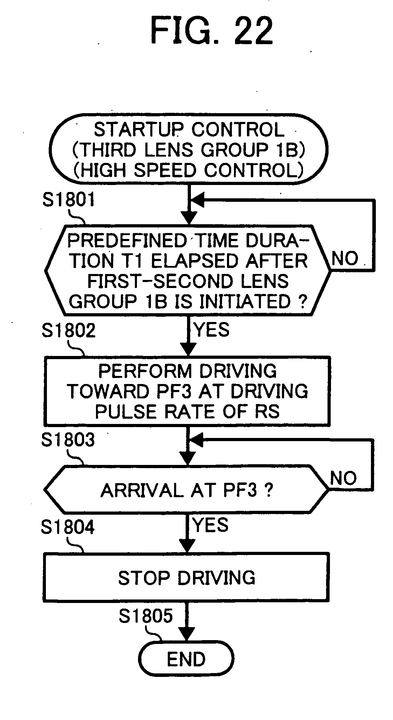

FIG. 22 shows a flow on the high speed control operations on shutdown of the third lens group 1B.

In step S1801, whether the predefined time duration T1 has elapsed after the storage control of the first-second lens group 1A is actuated is determined. If the predefined time duration T1 has elapsed after the storage control of the first-second lens group 1A is actuated, the flow moves to step S1802. While if the predefined time duration T1 does not elapse after the storage control of the first-second lens group 1A is actuated, the flow returns to step S 1801.

In step S1802, the third lens group 1B is driven by the third lens group driving motor 4B at the driving pulse rate of RS such that the third lens group 1B moves toward the storage position PF3. The driving pulse rate of RS is set at a rate higher than the normal driving pulse rate of RN such that the third lens group 1B arrives at the storage position PF3 faster. After this, the flow moves to step S1803.

In step S1803, whether the third lens group 1B has arrived at the storage position PF3 is determined. The storage position PF3 is set at a position where a predefined count number of driving pulses is given to the third lens group driving motor 4B starting from the reference position PS3. If the third lens group 1B has been at the storage position PF3, the flow moves to step S1804. While if the third lens group 1B is not at the storage position PF3, the flow returns to step S1803.

In step S1804, the third lens group driving motor 4B is stopped driving. After this, the flow moves to step S1805.

In step S1805, the high speed control on shutdown of the third lens group 1B is finished.

The timing chart on operations of the first-second lens group 1A, the third lens group 1B, the aperture stop 2 and the shutter 3 described above is shown in FIG. 23.

As aforementioned, when the first-second lens group 1A, the third lens group 1B, the aperture stop 2 and the shutter 3 are shutdown to the storage state on shutdown, if the battery is the special battery, when the first-second lens group 1A is driven to the preceding storage position PM12 and temporarily stopped such that it does not interfere with the third lens group 1B, at the same time the third lens group 1B is also driven toward the storage position PF3 together with the first-second lens group 1A. In addition, after the third lens group 1B has arrived at the storage position PF3, the first-second lens group 1A temporarily stopped at the preceding storage position PM12 is actuated once again until it arrives at the storage position PF12 together with the storage controls of the aperture stop 2 and the shutter 3. Therefore, it is capable to minimize the shutdown time by performing the storage controls of the third lens group 1B, the aperture stop 2 and the shutter 3 in parallel to the storage control of the first-second lens group 1A.

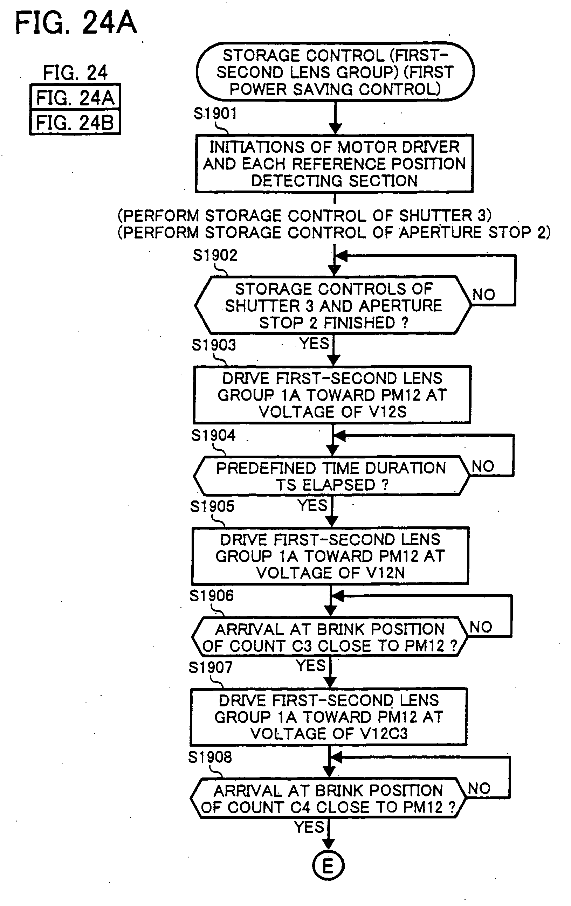

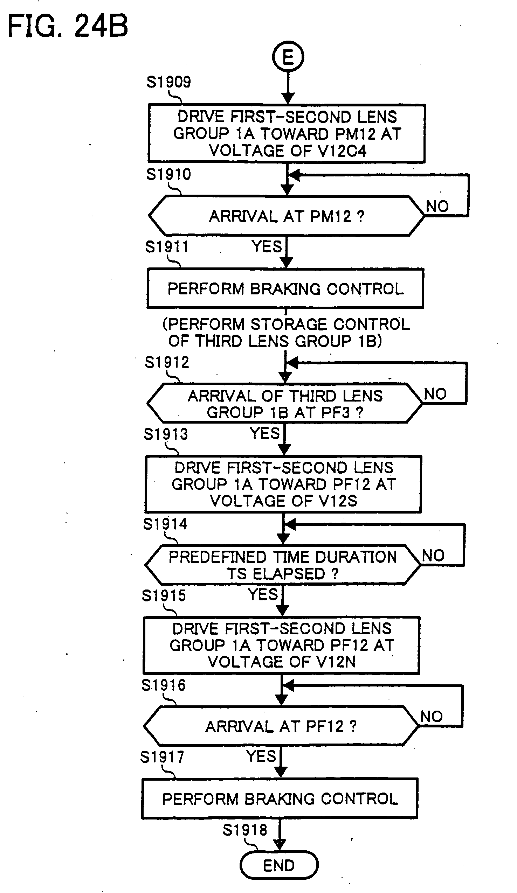

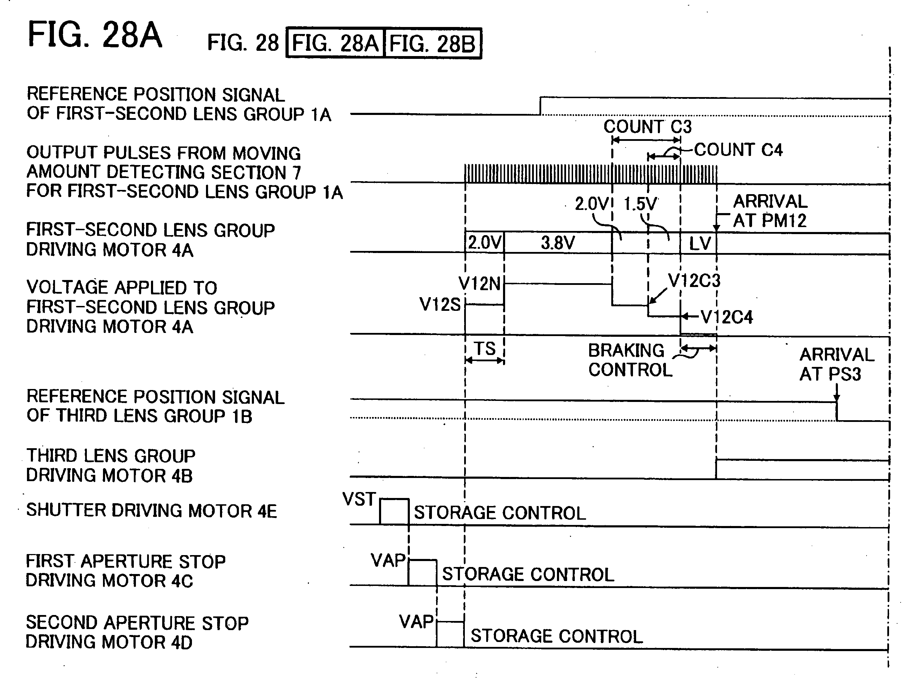

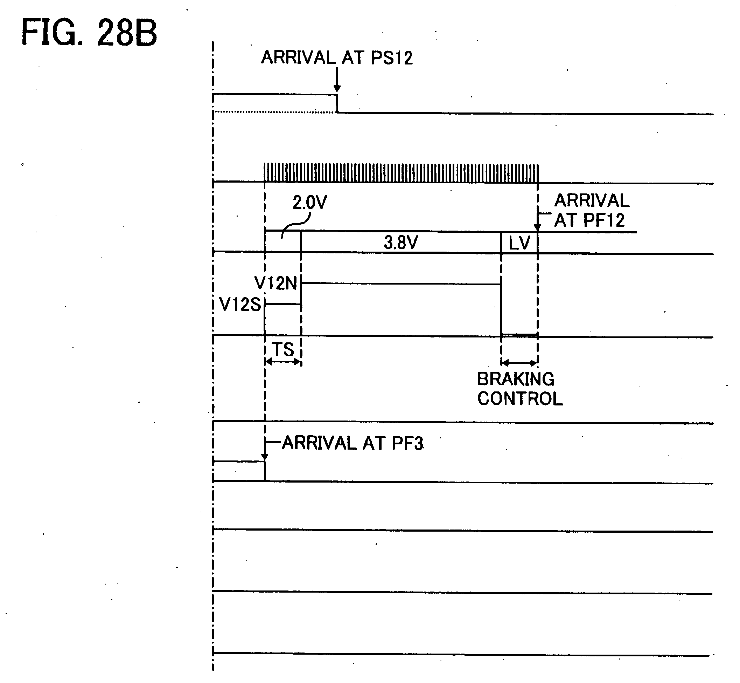

Secondly, the first power saving control on shutdown is described with reference to flow charts in FIGs. 24 to 27 and a timing chart in FIG. 28 when the battery is the universal battery.

FIG. 24 shows a flow on the first power saving control operations on shutdown of the first-second lens group 1A.

In step S1901, initiations of the motor driver 5A, the reference position detecting section 9A and the reference position detecting section 9B are performed by the CPU 5B. The contents of each initiation are equivalent to that in step S201. After this, the flow moves to step S1902.

Between step S1901 and step S1902, there are performed the storage controls of the shutter 3 and the aperture stop 2 which are described hereinafter.

In step S1902, whether the storage controls of the shutter 3 and the aperture stop 2 which are actuated before the storage control of the first-second lens group 1A have been finished is determined. If the storage controls of the shutter 3 and the aperture stop 2 have been finished, the flow moves to step S1903. While if the storage controls of the shutter 3 and the aperture stop 2 are not finished, the flow returns to step S1902.

In step S1903, the first-second lens group driving motor 4A is driven at the voltage of V12S (2.0V in FIG. 28) such that the first-second lens group 1A moves toward the preceding storage position PM12. In order to prevent the inrush current flowing immediately after the first-second lens group driving motor 4A is actuated, the voltage of V12S is set to a value lower than the normal voltage of V12N (3.8V in FIG. 28), and the first-second lens group driving motor 4A is driven at the voltage of V12S during the predefined time duration TS after the first-second lens group driving motor 4Ais actuated. After this, the flow moves to step S1904.

In step S1904, whether the predefined time duration TS has elapsed after the first-second lens group driving motor 4A is actuated is determined. If the predefined time duration TS has elapsed after the first-second lens group driving motor 4A is actuated, the flow moves to step S1905. While if the predefined time duration TS does not elapse after the first-second lens group driving motor 4A is actuated, the flow returns to step S1904.

In step S1905, the first-second lens group driving motor 4A is driven at the normal voltage of V12N which is higher than the voltage of V12S such that the first-second lens group 1A moves toward the preceding storage position PM12. After this, the flow moves to step S1906.

In step S1906, whether the first-second lens group 1A has arrived at the brink position of the count C3 close to the preceding storage position PM12 is determined. The preceding storage position PM12 is set at the position where the output pulses from the moving amount detecting section 7 for the first-second lens group 1A has reached the predefined count number starting from the reference position PS12, while herein whether the brink position of the count C3 close to the preceding storage position PM12 has been reached is determined. If the first-second lens group 1A has arrived at the brink position of the count C3 close to the preceding storage position PM12, the flow moves to step S1907. While if first-second lens group 1A is not at the brink position of the count C3 close to the preceding storage position PM12, the flow returns to step S1906.

In step S1907, the first-second lens group driving motor 4A is driven at the voltage of V12C3 (2.0V in FIG. 28) which is lower than the normal voltage of V12N such that the first-second lens group 1A moves toward the preceding storage position PM12. When the first-second lens group 1A has arrived at a position close to the preceding storage position PM12, the voltage of V12C3 which is lower than the normal voltage of V12N is used as a voltage applied to the first-second lens group driving motor 4A such that the first-second lens group 1A does not overrun over the preceding storage position PM12 when the first-second lens group 1A is to be stopped at the preceding storage position PM12. After this, the flow moves to step S1908.

In step S1908, whether the first-second lens group 1A has arrived at the brink position of the count C4 (count C4< count C3) close to the preceding storage position PM12 is determined. If the first-second lens group 1A moves further close to the preceding storage position PM12 and has arrived at the brink position of the count C4, the flow moves to step S1909. While if the first-second lens group 1A is not at the brink position of the count C4 close to the preceding storage position PM12, the flow returns to step S1908.

In step S1909, the first-second lens group driving motor 4A is driven at the voltage of V12C4 (1.5V in FIG. 28) which is further lower than the voltage of V12C3 such that the first-second lens group 1A moves toward the preceding storage position PM12. When the first-second lens group 1A has arrived at a position further close to the preceding storage position PM12, the voltage of V12C4 which is further lower than the voltage of V12C3 is used as a voltage applied to the first-second lens group driving motor 4A such that the first-second lens group 1A does not overrun over the preceding storage position PM12 when the first-second lens group 1A is to be stopped at the preceding storage position PM12. After this, the flow moves to step S1910.

In step S1910, whether the first-second lens group 1A has arrived at the preceding storage position PM12 is determined. If the output pulses from the moving amount detecting section 7 for the first-second lens group 1A have been the predefined count number, this is to say that the first-second lens group 1A has been at the preceding storage position PM12, the flow moves to step S1911. While if the first-second lens group 1A is not at the preceding storage position PM12, the flow returns to step S1910.

In step S1911, the braking control is performed on the first-second lens group driving motor 4A. The first-second lens group driving motor 4A is stopped driving on the first-second lens group 1A. The contents of the braking control are equivalent to that in step S213. After this, the flow moves to step S1912.

In addition, between step S1911 and step S1912, there is performed the storage control of the third lens group 1B which is described hereinafter.

In step S1912, whether the third lens group 1B has arrived at the storage position PF3 is determined. If the third lens group 1B actuated after the arrival of the first-second lens group 1A at the preceding storage position PM12 has arrived at the storage position PF3, the flow moves to step S1913. While if the third lens group 1B is not at the storage position PF3, the flow returns to step S1912.

In step S 1913, the first-second lens group driving motor 4A temporarily stopped at the preceding storage position PM12 is driven at the voltage of V12S (2.0V in FIG. 28) such that the first-second lens group 1A moves toward the storage position PF12. In order to prevent the inrush current flowing immediately after the first-second lens group driving motor 4A is actuated, the voltage of V12S is set to a value lower than the normal voltage of V12N (3.8V in FIG. 28), and the first-second lens group driving motor 4A is driven at the voltage of V12S during the predefined time duration TS after the first-second lens group driving motor 4A is actuated. After this, the flow moves to step S1914.

In step S1914, whether the predefined time duration TS has elapsed after the first-second lens group driving motor 4A is actuated is determined. If the predefined time duration TS has elapsed after the first-second lens group driving motor 4A is actuated, the flow moves to step S1915. While if the predefined time duration TS does not elapse after the first-second lens group driving motor 4A is actuated, the flow returns to step S1914.

In step S1915, the first-second lens group driving motor 4A is driven at the normal voltage of V12N which is higher than the voltage of V12S such that the first-second lens group 1A moves toward the storage position PF12. After this, the flow moves to step S1916.

In step S1916, whether the first-second lens group 1A has arrived at the storage position PF12 is determined. The storage position PF12 is set at the position where the output pulses from the moving amount detecting section 7 for the first-second lens group 1A has reached the predefined count number starting from the reference position PS12. If the first-second lens group 1A has arrived at the storage position PF12, the flow moves to step S1917. While if first-second lens group 1A is not at the storage position PF12, the flow returns to step S1916.

In step S1917, the braking control is performed on the first-second lens group driving motor 4A. The first-second lens group driving motor 4A is stopped driving on the first-second lens group 1A. The contents of the braking control are equivalent to that in step S213. The driving voltage used to perform the preceding storage control is not reduced to perform the braking control so as to avoid the incomplete storage that the first-second lens group 1A stops before arriving at the storage position PF12. After this, the flow moves to step S1918.

In step S1918, the first power saving control on shutdown of the first-second lens group 1A is finished.

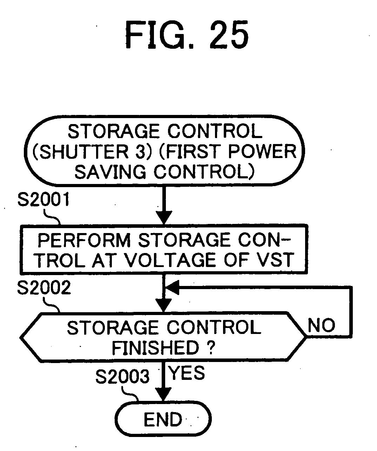

FIG. 25 shows a flow on the first power saving control operations on shutdown of the shutter 3.

In step S2001, the storage control of the shutter 3 is performed at the voltage of VST. The contents of the storage control are equivalent to that in step S1602. After this, the flow moves to step S2002.

In step S2002, whether the storage control of the shutter 3 has been finished is determined. If the storage control of the shutter 3 has been finished, the flow moves to step S2003. While if the storage control of the shutter 3 is not finished, the flow returns to step S2002 and the storage control of the shutter 3 is continued.

In step S203, the first power saving control on shutdown of the shutter 3 is finished.

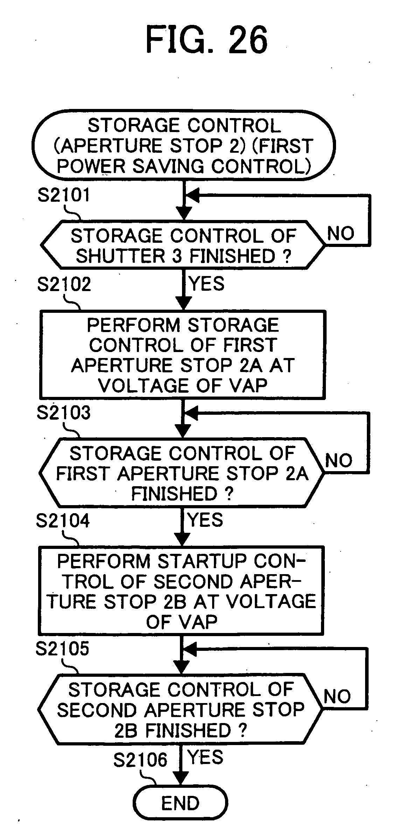

FIG. 26 shows a flow on the first power saving control operations on shutdown of the aperture stop 2.

In step S2101, whether the storage control of the shutter 3 has been finished is determined. If the storage control of the shutter 3 has been finished, the flow moves to step S2102. While if the storage control of the shutter 3 is not finished, the flow returns to step S2101.

In step S2102, the storage control of the first aperture stop 2A is performed at the voltage of VAP. The contents of the storage control are equivalent to that in step S1702. After this, the flow moves to step S2103.

In step S2103, whether the storage control of the first aperture stop 2A has been finished is determined. If the storage control of the first aperture stop 2A has been finished, the flow moves to step S2104. While if the storage control of the first aperture stop 2A is not finished, the flow returns to step S2103 and the storage control of the first aperture stop 2A is continued.

In step S2104, the storage control of the second aperture stop 2B is performed at the voltage of VAP. The contents of the storage control are equivalent to that in step S1704. After this, the flow moves to step S2105.

In step S2105, whether the storage control of the second aperture stop 2B has been finished is determined. If the storage control of the second aperture stop 2B has been finished, the flow moves to step S2106. While if the storage control of the second aperture stop 2B is not finished, the flow returns to step S2105 and the storage control of the second aperture stop 2B is continued.

In step S2106, the first power saving control on shutdown of the aperture stop 2 is finished.

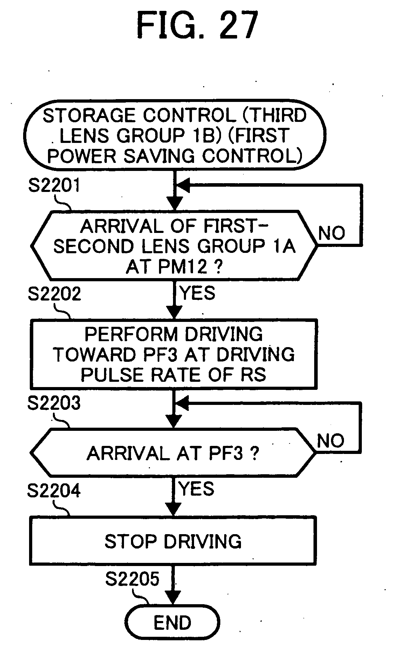

FIG. 27 shows a flow on the first power saving control operations on shutdown of the third lens group 1B.

In step S2201, whether the first-second lens group 1A has arrived at the preceding storage position PM12 is determined. If the first-second lens group 1A has arrived at the preceding storage position PM12, the flow moves to step S2202. While if first-second lens group 1A is not at the preceding storage position PM12, the flow returns to step S2201.

In step S2202, the third lens group 1B is driven by the third lens group driving motor 4B at the driving pulse rate of RS such that the third lens group 1B moves toward the storage position PF3. The driving pulse rate of RS is set at a rate higher than the normal driving pulse rate of RN such that the third lens group 1B arrives at the storage position PF3 faster. After this, the flow moves to step S2203.

In step S2203, whether the third lens group 1B has arrived at the storage position PF3 is determined. The storage position PF3 is set at the position where the predefined count number of driving pulses is given to the third lens group driving motor 4B starting from the reference position PS3. If the third lens group 1B has been at the storage position PF3, the flow moves to step S2204. While if the third lens group 1B is not at the storage position PF3, the flow returns to step S2203.

In step S2204, the third lens group driving motor 4B is stopped driving. After this, the flow moves to step S2205.

In step S2205, the first power saving control on shutdown of the third lens group 1B is finished.

The timing chart on operations of the first-second lens group 1A, the third lens group 1B, the aperture stop 2 and the shutter 3 described above is shown in FIG. 28.

As aforementioned, when the first-second lens group 1A, the third lens group 1B, the aperture stop 2 and the shutter 3 are shutdown to the storage state on shutdown, if the battery is the universal battery, when the first-second lens group 1A is driven to the preceding storage position PM12 and temporarily stopped such that it does not interfere with the third lens group 1B, at the same time the third lens group 1B is also driven toward the storage position PF3 together with the first-second lens group 1A. In addition, after the third lens group 1B has arrived at the storage position PF3, the first-second lens group 1A temporarily stopped at the preceding storage position PM12 is actuated once again until it arrives at the storage position PF12. Therefore, too much power current is prevented from being consumed by performing sequentially the driving controls of the third lens group 1B, the aperture stop 2 and the shutter 3 in a predefined sequence. As a result, it is capable to inhibit the early decrease of the battery life expectancy by minimizing the power current consumption.

In addition, when the battery is the universal battery, the above operations are performed at any moment. It is capable to enable the battery life expectancy according to the present invention longer than that of the conventional methods which perform operations attempting to decrease the power current consumption in the case when the voltage of the battery is dropped below a predefined value.

### [Embodiment 4]

In the present embodiment, when the power source is off and the first-second lens group 1A, the third lens group 1B, the aperture stop 2 and the shutter 3 are shutdown to the storage state on shutdown, there is performed the high speed control which includes a period during which the driving control of the first-second lens group 1A and the driving controls of the third lens group 1B, the aperture stop 2 and the shutter 3 are simultaneously performed when the battery is the special battery, or there is performed the second power saving control which includes a period during which the driving control of the first-second lens group 1A and the driving controls of the third lens group 1B, the aperture stop 2 and the shutter 3 are simultaneously performed, and at the same time the driving voltage of the first-second lens group driving motor 4A is reduced when the battery is the universal battery. Since there is a possible interference between the first-second lens group 1A and the third lens group 1B, the preceding storage control for stopping the driving control of the first-second lens group 1A is temporarily performed when the first-second lens group 1A has been at a predefined position until the third lens group 1B arrives at the storage position.

Since the contents of the high speed control on shutdown are equivalent to that in the embodiment 3, descriptions on it are omitted.

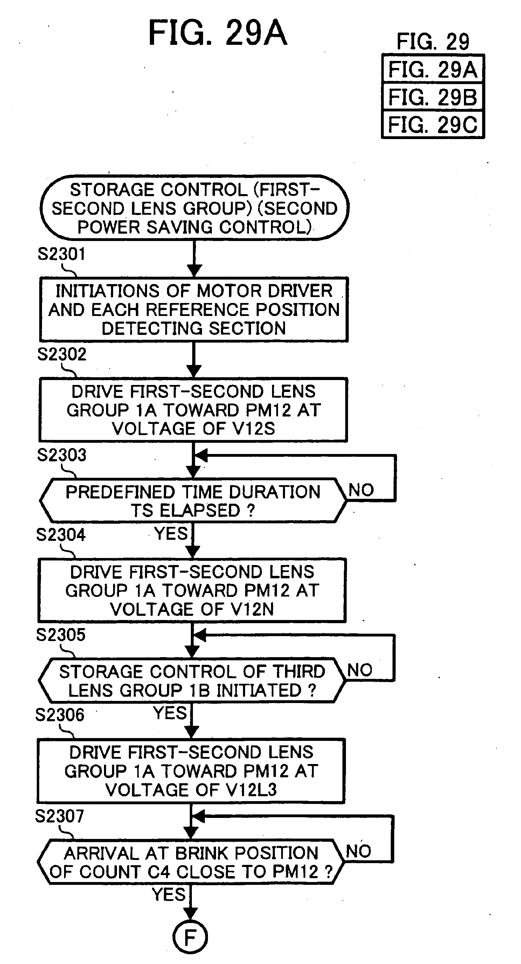

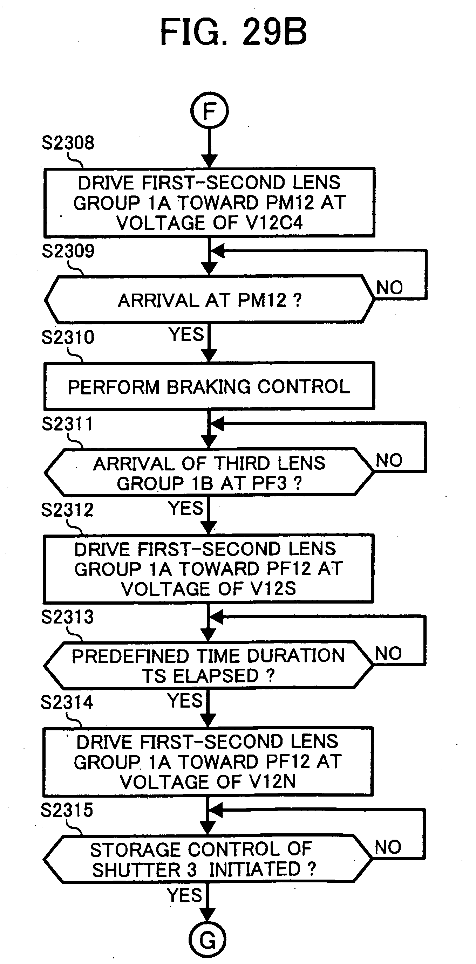

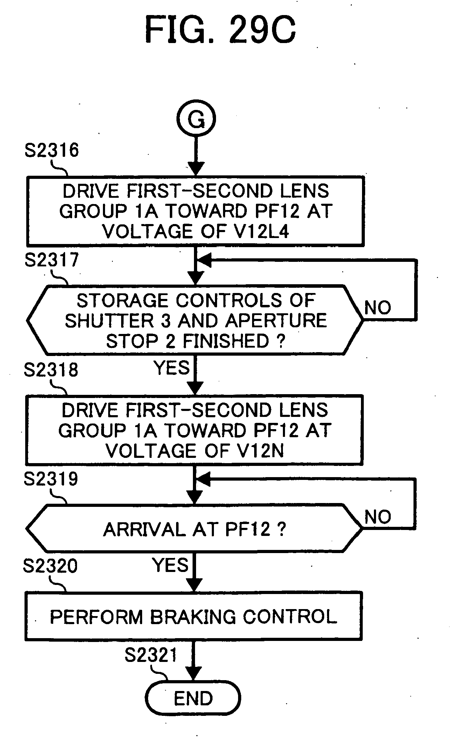

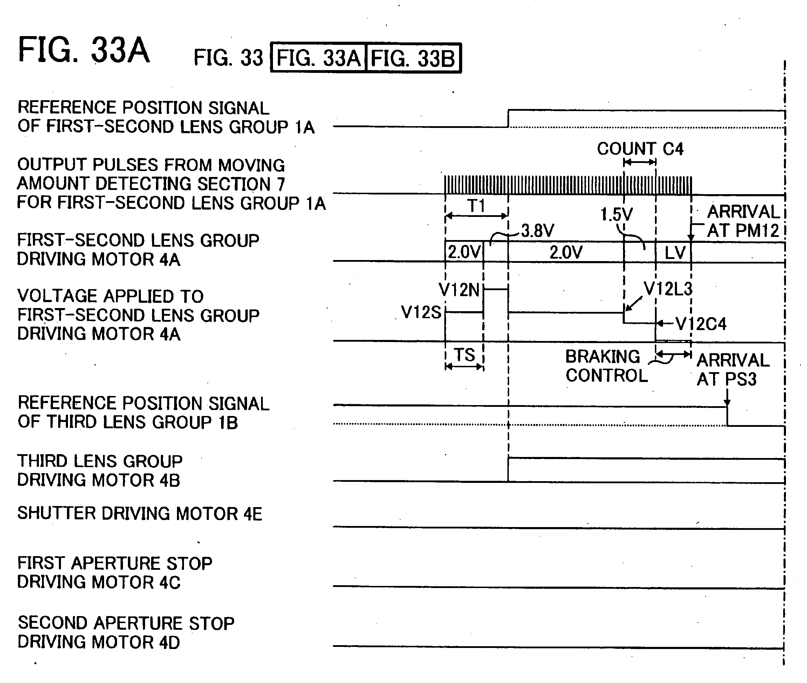

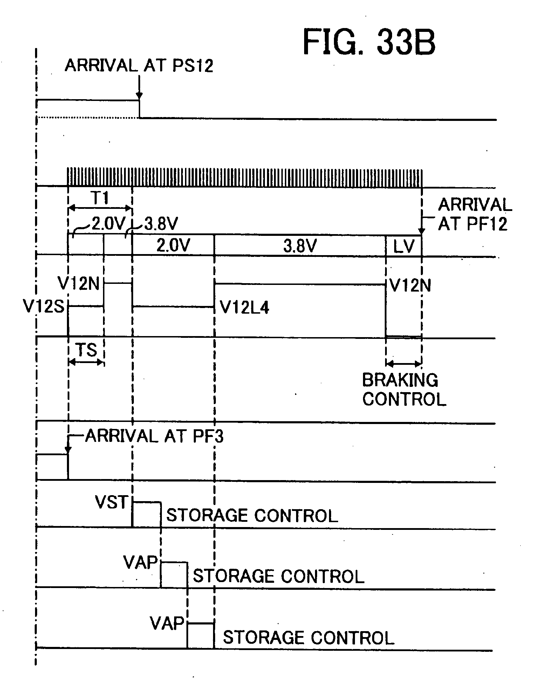

The second power saving control on shutdown is described with reference to flow charts in FIGs. 29 to 32 and a timing chart in FIG 33 when the battery is the universal battery.

FIG.29 shows a flow on the second power saving control operations on shutdown of the first-second lens group 1A.

In step S2301, initiations of the motor driver 5A, the reference position detecting section 9A and the reference position detecting section 9B are performed by the CPU 5B. The contents of each initiation are equivalent to that in step S201. After this, the flow moves to step S2302.

In step S2302, the first-second lens group driving motor 4A is driven at the voltage of V12S (2.0V in FIG. 33) such that the first-second lens group 1A moves toward the preceding storage position PM12. In order to prevent the inrush current flowing immediately after the first-second lens group driving motor 4A is actuated, the voltage of V12S is set to a value lower than the normal voltage of V12N (3.8V in FIG. 33), and the first-second lens group driving motor 4A is driven at the voltage of V12S during the predefined time duration TS after the first-second lens group driving motor 4A is actuated. After this, the flow moves to step S2303.

In step S2303, whether the predefined time duration TS has elapsed after the first-second lens group driving motor 4A is actuated is determined. If the predefined time duration TS has elapsed after the first-second lens group driving motor 4A is actuated, the flow moves to step S2304. While if the predefined time duration TS does not elapse after the first-second lens group driving motor 4A is actuated, the flow returns to step S2303.

In step S2304, the first-second lens group driving motor 4A is driven at the normal voltage of V12N which is higher than the voltage of V12S such that the first-second lens group 1A moves toward the preceding storage position PM12. After this, the flow moves to step S2305.

In step S2305, whether the storage control of the third lens group 1B is actuated is determined. If the storage control of the third lens group 1B is actuated, the flow moves to step S2306. While if the storage control of the third lens group 1B is not actuated, the flow returns to step S2305.

In step S2306, the first-second lens group driving motor 4A is driven at a voltage of V12L3 (2.0V in FIG. 33) which is lower than the normal voltage of V12N such that the first-second lens group 1A moves toward the preceding storage position PM12. After step S2305, the storage control of the third lens group 1B is performed in parallel to that of the first-second lens group 1A. Therefore, the driving voltage for the first-second lens group driving motor 4A is set to the voltage of V12L3 which is lower than the normal voltage of V12N to decrease the power current consumption. After this, the flow moves to step S2307.

In step S2307, whether the first-second lens group 1A has arrived at the brink position of the count C4 close to the preceding storage position PM12 is determined. The preceding storage position PM12 is set at the position where the output pulses from the moving amount detecting section 7 for the first-second lens group 1A has reached the predefined count number starting from the reference position PS12, while herein whether the brink position of the count C4 close to the preceding storage position PM12 has been reached is determined. If the first-second lens group 1A moves further close to the preceding storage position PM12 and has arrived at the brink position of the count C4, the flow moves to step S2308. While if the first-second lens group 1A is not at the brink position of the count C4 close to the preceding storage position PM12, the flow returns to step S2307.

In step S2308, the first-second lens group driving motor 4A is driven at the voltage of V12C4 (1.5V in FIG. 28) which is further lower than the voltage of V12L3 such that the first-second lens group 1A moves toward the preceding storage position PM12. When the first-second lens group 1A has arrived at a position close to the preceding storage position PM12, the voltage of V12C4 which is lower than the voltage of V12L3 is used as a voltage applied to the first-second lens group driving motor 4A such that the first-second lens group 1A does not overrun over the preceding storage position PM12 when the first-second lens group 1A is to be stopped at the preceding storage position PM12. After this, the flow moves to step S2309.

In step S2309, whether the first-second lens group 1A has arrived at the preceding storage position PM12 is determined. If the output pulses from the moving amount detecting section 7 for the first-second lens group 1A have been the predefined count number, this is to say that the first-second lens group 1A has arrived at the preceding storage position PM12, the flow moves to step S2310. While if the first-second lens group 1A is not at the preceding storage position PM12, the flow returns to step S2309.

In step S2310, the braking control is performed on the first-second lens group driving motor 4A. The first-second lens group driving motor 4A is stopped driving on the first-second lens group 1A. The contents of the braking control are equivalent to that in step S213. After this, the flow moves to step S2311.

In step S2311, whether the third lens group 1B has arrived at the storage position PF3 is determined. If the third lens group 1B driven in parallel to the first-second lens group 1A has arrived at the storage position PF3, the flow moves to step S2312. While if the third lens group 1B is not at the storage position PF3, the flow returns to step S2311.

In step S2312, the first-second lens group driving motor 4A temporarily stopped at the preceding storage position PM12 is driven at the voltage of V12S (2.0V in FIG. 33) such that the first-second lens group 1A moves toward the storage position PF12. In order to prevent the inrush current flowing immediately after the first-second lens group driving motor 4A is actuated, the voltage of V12S is set to a value lower than the normal voltage of V12N (3.8V in FIG. 33), and the first-second lens group driving motor 4A is driven at the voltage of V12S during the predefined time duration TS after the first-second lens group driving motor 4A is actuated. After this, the flow moves to step S2313.

In step S2313, whether the predefined time duration TS has elapsed after the first-second lens group driving motor 4A is actuated is determined. If the predefined time duration TS has elapsed after the first-second lens group driving motor 4A is actuated, the flow moves to step S2314. While if the predefined time duration TS does not elapse after the first-second lens group driving motor 4A is actuated, the flow returns to step S2313.

In step S2314, the first-second lens group driving motor 4A is driven at the normal voltage of V12N which is higher than the voltage of V12S such that the first-second lens group 1A moves toward the storage position PF12. After this, the flow moves to step S2315.

In step S2315, whether the storage control of the third lens group 1B is actuated is determined. If the storage control of the third lens group 1B is actuated, the flow moves to step S2316. While if the storage control of the third lens group 1B is not actuated, the flow returns to step S2315.

In step S2316, the first-second lens group driving motor 4A is driven at a voltage of V12L4 (2.0V in FIG. 33) which is lower than the normal voltage of V12N such that the first-second lens group 1A moves toward the storage position PF12. After step S2315, the storage controls of the shutter 3 and the aperture stop 2 are performed in parallel to that of the first-second lens group 1A. Therefore, the driving voltage for the first-second lens group driving motor 4A is set to the voltage of V12L4 which is lower than the normal voltage of V12N to decrease the power current consumption. After this, the flow moves to step S2317.

In step S2317, whether the storage controls of the shutter 3 and the aperture stop 2 have been finished is determined. If the storage controls of the shutter 3 and the aperture stop 2 have been finished, the flow moves to step S2318. While if the storage controls of the shutter 3 and the aperture stop 2 are not finished, the flow returns to step S2317.

In step S2318, the first-second lens group driving motor 4A is driven at the normal voltage of V12N such that the first-second lens group 1A moves toward the storage position PF12. When the storage controls of the shutter 3 and the aperture stop 2 performed in parallel to that of the first-second lens group 1A are all finished, the driving voltage for the first-second lens group driving motor 4A returns to the normal voltage of V12N. After this, the flow moves to step S2319.

In step S2319, whether the first-second lens group 1A has arrived at the storage position PF12 is determined. The storage position PF12 is set at the position where the output pulses from the moving amount detecting section 7 for the first-second lens group 1A has reached the predefined count number starting from the reference position PS12. If the first-second lens group 1A has arrived at the storage position PF12, the flow moves to step S2320. While if first-second lens group 1A is not at the storage position PF12, the flow returns to step S2319.

In step S2320, the braking control is performed on the first-second lens group driving motor 4A. The first-second lens group driving motor 4A is stopped driving on the first-second lens group 1A. The contents of the braking control are equivalent to that in step S213. The driving voltage used to perform the preceding storage control is not reduced to perform the braking control so as to avoid the incomplete storage that the first-second lens group 1A stops before arriving at the storage position PF12. After this, the flow moves to step S2321.

In step S2321, the second power saving control on shutdown of the first-second lens group 1A is finished.

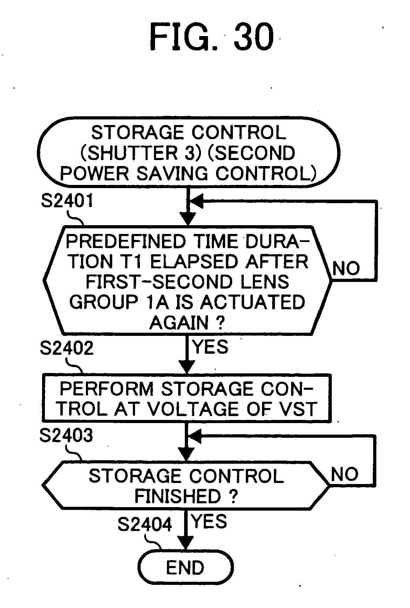

FIG. 30 shows a flow on the second power saving control operations on shutdown of the shutter 3.

In step S2401, whether the predefined time duration T1 has elapsed is determined after the first-second lens group 1A which has arrived at the preceding storage position PM12 is actuated once again. If the predefined time duration T1 has elapsed after the first-second lens group 1A is actuated once again, the flow moves to step S2402. While if the predefined time duration T1 does not elapse after the first-second lens group 1A is actuated once again, the flow returns to step S2401.

In step S2402, the storage control of the shutter 3 is performed at the voltage of VST. The contents of the storage control are equivalent to that in step S1602. After this, the flow moves to step S2403.

In step S2403, whether the storage control of the shutter 3 has been finished is determined. If the storage control of the shutter 3 has been finished, the flow moves to step S2404. While if the storage control of the shutter 3 is not finished, the flow returns to step S2403 and the storage control of the shutter 3 is continued.

In step S2404, the second power saving control on shutdown of the shutter 3 is finished.

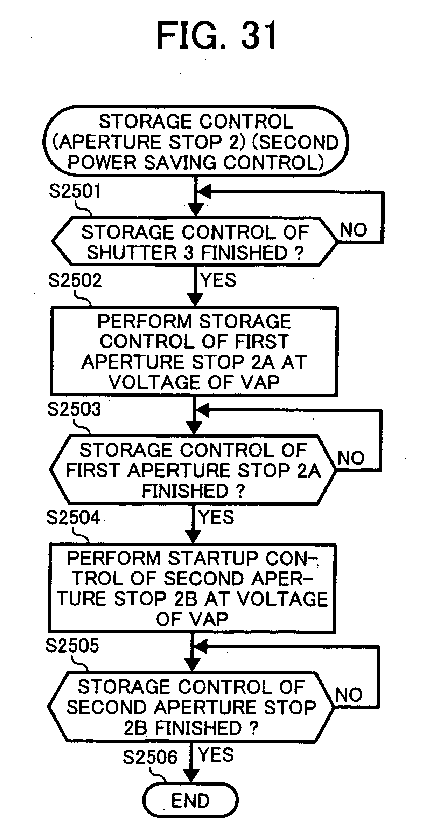

FIG. 31 shows a flow on the second power saving control operations on shutdown of the aperture stop 2.

In step S2501, whether the storage control of the shutter 3 has been finished is determined. If the storage control of the shutter 3 has been finished, the flow moves to step S2502. While if the storage control of the shutter 3 is not finished, the flow returns to step S2501.

In step S2502, the storage control of the first aperture stop 2A is performed at the voltage of VAP. The contents of the storage control are equivalent to that in step S1702. After this, the flow moves to step S2503.

In step S2503, whether the storage control of the first aperture stop 2A has been finished is determined. If the storage control of the first aperture stop 2A has been finished, the flow moves to step S2504. While if the storage control of the first aperture stop 2A is not finished, the flow returns to step S2503 and the storage control of the first aperture stop 2A is continued.

In step S2504, the storage control of the second aperture stop 2B is performed at the voltage of VAP. The contents of the storage control are equivalent to that in step S1704. After this, the flow moves to step S2505.

In step S2505, whether the storage control of the second aperture stop 2B has been finished is determined. If the storage control of the second aperture stop 2B has been finished, the flow moves to step S2506. While if the storage control of the second aperture stop 2B is not finished, the flow returns to step S2505 and the storage control of the second aperture stop 2B is continued.

In step S2506, the second power saving control on shutdown of the aperture stop 2 is finished.

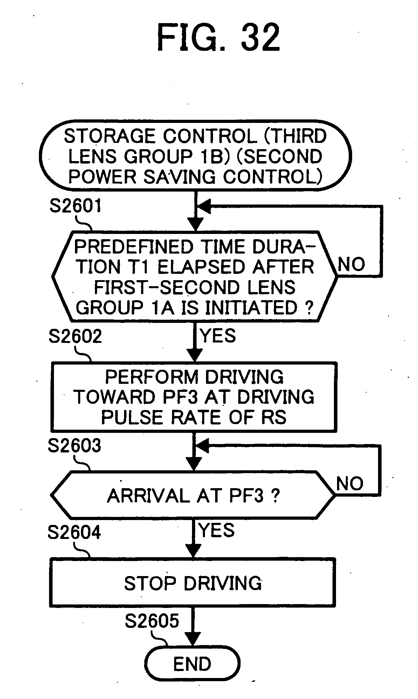

FIG. 32 shows a flow on the second power saving control operations on shutdown of the third lens group 1B.

In step S2601, whether the predefined time duration T1 has elapsed is determined after the storage control of the first-second lens group 1A is actuated. If the predefined time duration T1 has elapsed after the storage control of the first-second lens group 1A is actuated, the flow moves to step S2602. While if the predefined time duration T1 does not elapse after the storage control of the first-second lens group 1A is actuated, the flow returns to step S2601.

In step S2602, the third lens group 1B is driven by the third lens group driving motor 4B at the driving pulse rate of RS such that the third lens group 1B moves toward the storage position PF3. The driving pulse rate of RS is set at a rate higher than the normal driving pulse rate of RN such that the third lens group 1B arrives at the storage position PF3 faster. After this, the flow moves to step S2603.

In step S2603, whether the third lens group 1B has arrived at the storage position PF3 is determined. The storage position PF3 is set at the position where the predefined count number of driving pulses starting from the reference position PS3 is given to the third lens group driving motor 4B. If the third lens group 1B has been at the storage position PF3, the flow moves to step S2604. While if the third lens group 1B is not at the storage position PF3, the flow returns to step S2603.

In step S2604, the driving on the third lens group driving motor 4B is stopped driving. After this, the flow moves to step S2605.

In step S2605, the second power saving control on shutdown of the third lens group 1B is finished.

The timing chart on operations of the first-second lens group 1A, the third lens group 1B, the aperture stop 2 and the shutter 3 described above is shown in FIG. 33.

As aforementioned, when the first-second lens group 1A, the third lens group 1B, the aperture stop 2 and the shutter 3 are shutdown to the storage state on shutdown, if the battery is the universal battery, when the first-second lens group 1A is driven to the preceding storage position PM12 and temporarily stopped such that it does not interfere with the third lens group 1B, at the same time the storage control of the third lens group 1B is also performed in parallel to the storage control of the first-second lens group 1A. At this moment, when the storage controls of the first-second lens group 1A and the third lens group 1B are performed simultaneously, the driving voltage of the first-second lens group driving motor 4A is set at the voltage of V12L3 which is lower than the normal voltage of 12N in order to decrease the power current consumption. In addition, after the third lens group 1B has arrived at the storage position PF3, the first-second lens group 1A temporarily stopped at the preceding storage position PM12 is actuated once again until it arrives at the storage position PF12 together with the storage controls of the aperture stop 2 and the shutter 3. At this moment, when the storage control of the first-second lens group 1A is performed simultaneously with the storage controls of the shutter 3 and the aperture stop 2, the driving voltage of the first-second lens group driving motor 4A is set at the voltage of V12L4 which is lower than the normal voltage of 12N in order to decrease the power current consumption. Therefore, too much power current is prevented from being consumed by lowering the driving voltage of the first-second lens group driving motor 4A when performing the storage control of the third lens group 1B and the storage controls of the shutter 3 and the aperture stop 2 simultaneously. As a result, it is capable to inhibit the early decrease of the battery life expectancy by minimizing the power current consumption.

In addition, when the battery is the universal battery, the above operations are performed at any moment. It is capable to enable the battery life expectancy according to the present invention longer than that of the conventional methods which perform operations attempting to decrease the power current consumption in the case when the voltage of the battery is dropped below the predefined value.

### [Embodiment 5]

In the present embodiment, when the power source is off and the first-second lens group 1A, the third lens group 1B, the aperture stop 2 and the shutter 3 are shutdown to the storage state on shutdown, there is performed the high speed control in which the driving control of the first-second lens group 1A and the driving controls of the third lens group 1B, the aperture stop 2 and the shutter 3 are simultaneously performed if the battery is the special battery, or there is performed the first power saving control which performs in a predefined sequence sequential driving controls of the first-second lens group 1A, the third lens group 1B, the aperture stop 2 and the shutter 3 if the battery is the universal battery. In the present embodiment, the preceding storage control of the first-second group 1A is not performed, and the storage control for storing the third lens group is performed before the first-second group 1A.

Since the contents of the high speed control on shutdown are equivalent to that in the embodiment 3, descriptions on it are omitted.

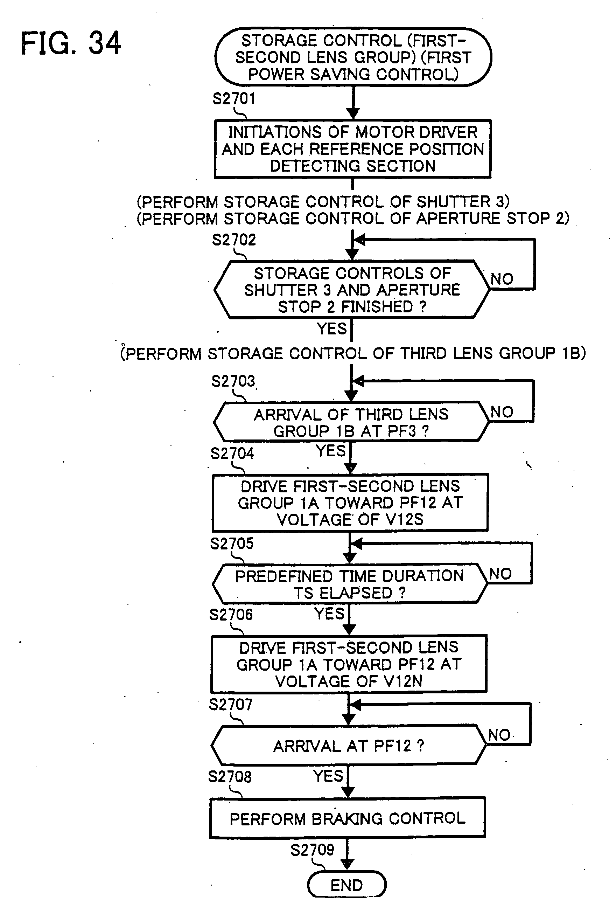

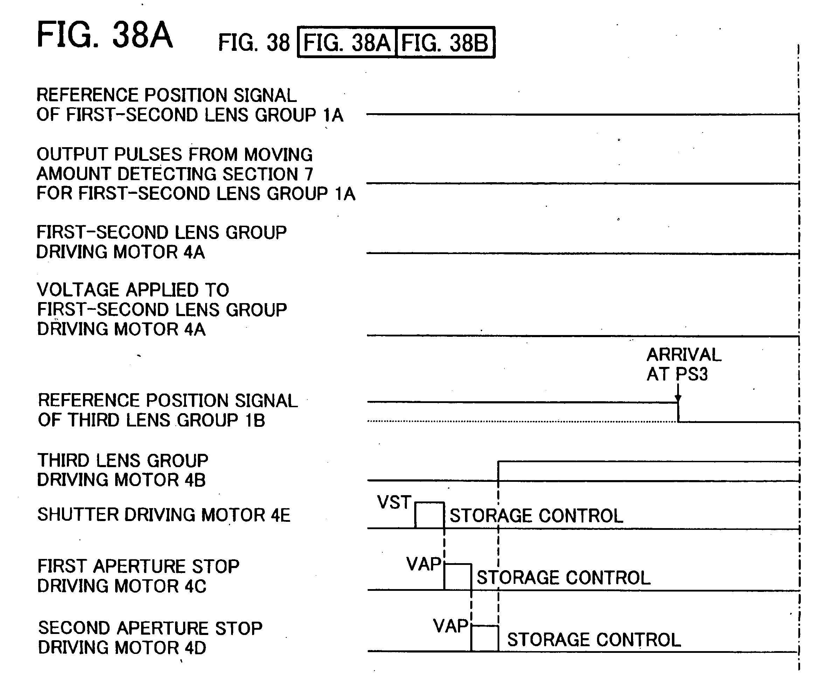

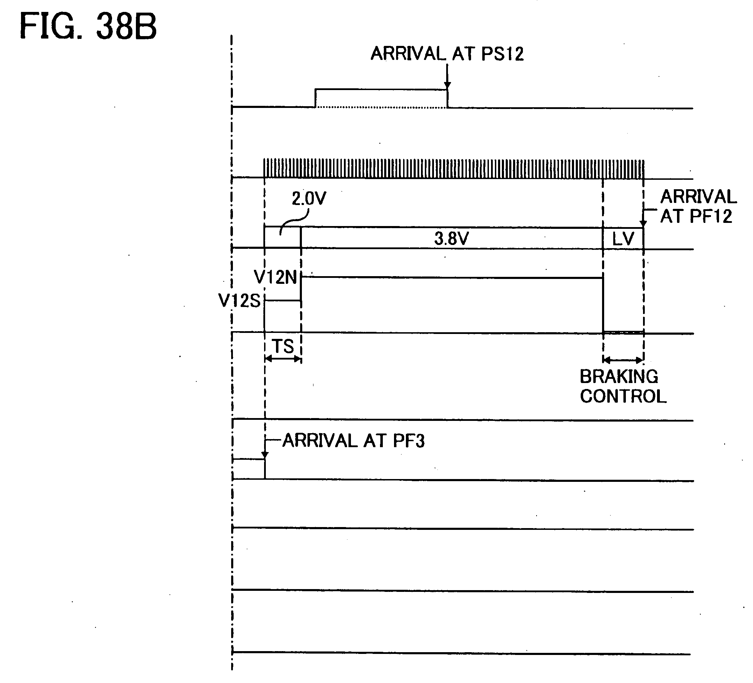

The first power saving control on shutdown is described with reference to flow charts in FIGs. 34 to 37 and a timing chart in FIG. 38 when the battery is the special battery.

FIG. 34 shows a flow on the second power saving control operations on shutdown of the first-second lens group 1A.

In step S2701, initiations of the motor driver 5A, the reference position detecting section 9A and the reference position detecting section 9B are performed by the CPU 5B. The contents of each initiation are equivalent to that in step S201. After this, the flow moves to step S2702.

In step S2702, whether the storage controls of the shutter 3 and the aperture stop 2 which are actuated before the storage control of the third lens group 1B have been finished is determined. If the storage controls of the shutter 3 and the aperture stop 2 have been finished, the flow moves to step S2703. While if the storage controls of the shutter 3 and the aperture stop 2 are not finished, the flow returns to step S2702.

In addition, between step S2702 and step S2703, there is performed the storage control of the third lens group 1B which is described hereinafter.

In step S2703, whether the third lens group 1B has arrived at the storage position PF3 is determined. If the third lens group 1B whose storage control is actuated after the storage controls of the shutter 3 and the aperture stop 2 have been finished has been at the storage position PF3, the flow moves to step S2704. While if the third lens group 1B is not at the storage position PF3, the flow returns to step S2703.

In step S2704, the first-second lens group driving motor 4A is driven at the voltage of V12S (2.0V in FIG. 38) such that the first-second lens group 1A moves toward the storage position PF12. In order to prevent the inrush current flowing immediately after the first-second lens group driving motor 4A is actuated, the voltage of V12S is set to a value lower than the normal voltage of V12N (3.8V in FIG. 38), and the first-second lens group driving motor 4A is driven at the voltage of V12S during the predefined time duration TS after the first-second lens group driving motor 4A is actuated. After this, the flow moves to step S2705.

In step S2705, whether the predefined time duration TS has elapsed after the first-second lens group driving motor 4A is actuated is determined. If the predefined time duration TS has elapsed after the first-second lens group driving motor 4A is actuated, the flow moves to step S2706. While if the predefined time duration TS does not elapse after the first-second lens group driving motor 4A is actuated, the flow returns to step S2705.

In step S2706, the first-second lens group driving motor 4A is driven at the normal voltage of V12N which is higher than the voltage of V12S such that the first-second lens group 1A moves toward the storage position PF12. After this, the flow moves to step S2707.

In step S2707, whether the first-second lens group 1A has arrived at the storage position PF12 is determined. The storage position PF12 is set at the position where the output pulses from the moving amount detecting section 7 for the first-second lens group 1A has reached the predefined count number starting from the reference position PS12. If the first-second lens group 1A has arrived at the storage position PF12, the flow moves to step S2708. While if first-second lens group 1A is not at the storage position PF12, the flow returns to step S2707.

In step S2708, the braking control is performed on the first-second lens group driving motor 4A. The first-second lens group driving motor 4A is stopped driving on the first-second lens group 1A. The contents of the braking control are equivalent to that in step S213. The driving voltage used to perform the preceding storage control is not reduced to perform the braking control so as to avoid the incomplete storage that the first-second lens group 1A is stopped before arriving at the storage position PF12. After this, the flow moves to step S2709.

In step S2709, the first power saving control on shutdown of the first-second lens group 1A is finished.

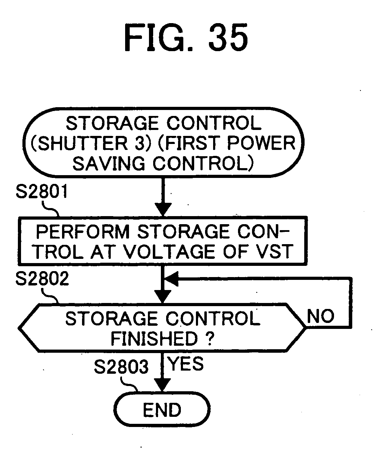

FIG. 35 shows a flow on the first power saving control operations on shutdown of the shutter 3.

In step S2801, the storage control of the shutter 3 is performed at the voltage of VST. The contents of the storage control are equivalent to that in step S1602. After this, the flow moves to step S2802.

In step S2802, whether the storage control of the shutter 3 has been finished is determined. If the storage control of the shutter 3 has been finished, the flow moves to step S2803. While if the storage control of the shutter 3 is not finished, the flow returns to step S2802.

In step S2803, the first power saving control on shutdown of the shutter 3 is finished.

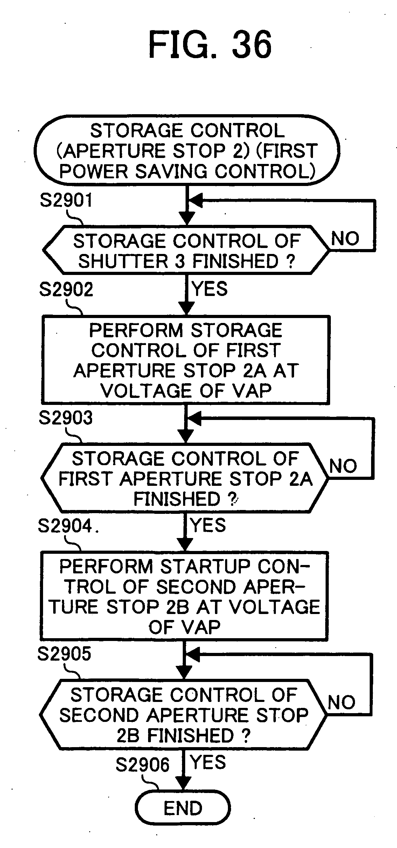

FIG. 36 shows a flow on the first power saving control operations on shutdown of the aperture stop 2.

In step S2901, whether the storage control of the shutter 3 has been finished is determined. If the storage control of the shutter 3 has been finished, the flow moves to step S2902. While if the storage control of the shutter 3 is not finished, the flow returns to step S2901.

In step S2902, the storage control of the first aperture stop 2A is performed at the voltage of VAP. The contents of the storage control are equivalent to that in step S1702. After this, the flow moves to step S2903.

In step S2903, whether the storage control of the first aperture stop 2A has been finished is determined. If the storage control of the first aperture stop 2A has been finished, the flow moves to step S2904. While if the storage control of the first aperture stop 2A is not finished, the flow returns to step S2903 and the storage control of the first aperture stop 2A is continued.

In step S2904, the storage control of the second aperture stop 2B is performed at the voltage of VAP. The contents of the storage control are equivalent to that in step S1704. After this, the flow moves to step S2905.

In step S2905, whether the storage control of the second aperture stop 2B has been finished is determined. If the storage control of the second aperture stop 2B has been finished, the flow moves to step S2906. While if the storage control of the second aperture stop 2B is not finished, the flow returns to step S2905 and the storage control of the second aperture stop 2B is continued.

In step S2906, the first power saving control on shutdown of the aperture stop 2 is finished.

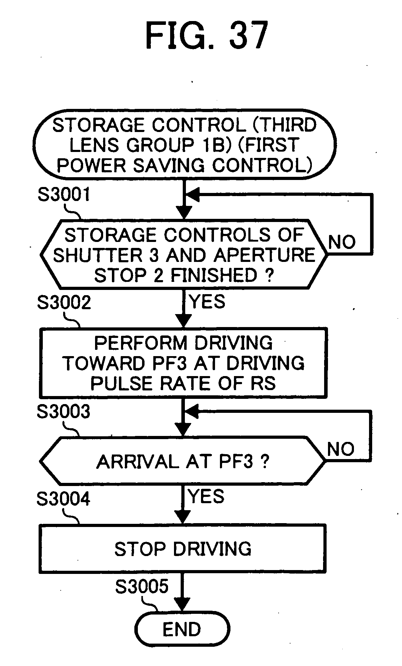

FIG. 37 shows a flow on the first power saving control operations on shutdown of the third lens group 1B.

In step S3001, whether the storage controls of the shutter 3 and the aperture stop 2 which are actuated before the storage control of the third lens group 1B have been finished is determined. If the storage controls of the shutter 3 and the aperture stop 2 have been finished, the flow moves to step S3002. While if the storage controls of the shutter 3 and the aperture stop 2 are not finished, the flow returns to step S3001.

In step S3002, the third lens group 1B is driven by the third lens group driving motor 4B at the driving pulse rate of RS such that the third lens group 1B moves toward the storage position PF3. The driving pulse rate of RS is set at a rate higher than the normal driving pulse rate of RN such that the third lens group 1B arrives at the storage position PF3 faster. After this, the flow moves to step S3003.

In step S3003, whether the third lens group 1B has arrived at the storage position PF3 is determined. The storage position PF3 is set at the position where the predefined count number of driving pulses starting from the reference position PS3is given to the third lens group driving motor 4B. If the third lens group 1B has been at the storage position PF3, the flow moves to step S3004. While if the third lens group 1B is not at the storage position PF3, the flow returns to step S3003.

In step S3004, the driving on the third lens group driving motor 4B is stopped. After this, the flow moves to step S3005.

In step S2605, the first power saving control on shutdown of the third lens group 1B is finished.

The timing chart on operations of the first-second lens group 1A, the third lens group 1B, the aperture stop 2 and the shutter 3 described above is shown in FIG. 38.

As aforementioned, when the first-second lens group 1A, the third lens group 1B, the aperture stop 2 and the shutter 3 are shutdown to the storage state on shutdown, if the battery is the universal battery, too much power current is prevented from being consumed by performing sequentially the driving controls of the first-second lens group 1A, the third lens group 1B, the shutter 3 and the aperture stop 2 in a predefined sequence. As a result, it is capable to inhibit the early decrease of the battery life expectancy by minimizing the power current consumption.

In addition, when the battery is the universal battery, the above operations are performed at any moment. Thus it is capable to enable the battery life expectancy according to the present invention longer than that of the conventional methods which perform operations attempting to decrease the power current consumption in the case when the voltage of the battery is dropped below the predefined value. **[Embodiment 6]**

In the present embodiment, when the battery is determined to be the special battery by the battery type determination section 6 and the voltage of the battery is below a predefined value, the second control or the third control is performed as an alternative to the first control. The CPU 5B performs controls described hereinafter according to the battery type determination result.

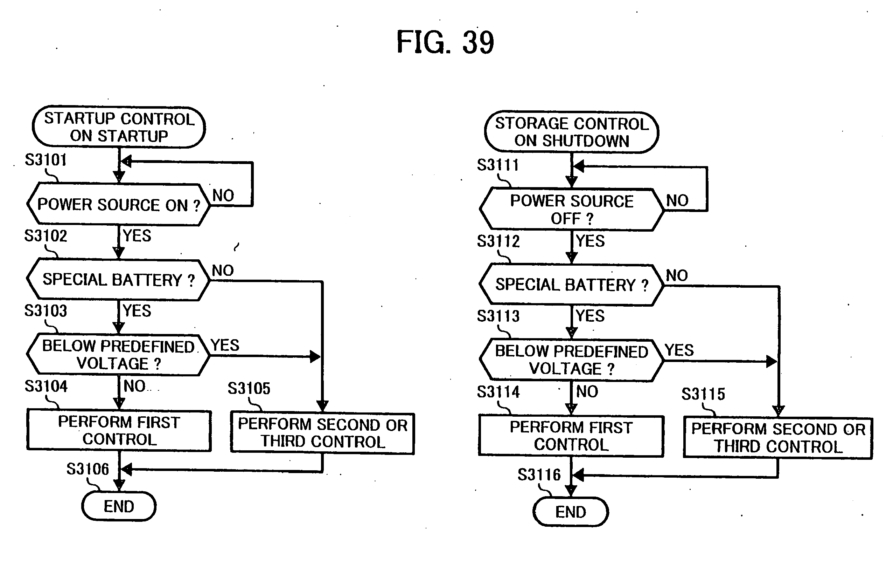

FIG. 39 shows basic operation flows of the CPU 5B according to the present embodiment.

Steps S3101 to S3105 show a basic operation flow during which the lens barrel unit 1 is actuated from the storage state to the photographing standby state when the power source is switched on from a power off state.

In step S3101, whether the power source is on or off is determined. If the power source is switched on from the power off state, the flow moves to step S3102. While if the power source is off, the flow returns to step S3101.

In step S3102, the battery type determination is performed by the battery type determination section 6. If the battery is the special battery, the flow moves to step S3103. While if the battery is the universal battery, the flow moves to step S3105.

In step S3103, a battery voltage determination is performed by a voltage detecting portion (not shown) included in the battery type determination section 6. If the battery voltage is above a predefined value, the flow moves to step S3104. While if the battery voltage is below the predefined value, the flow moves to step S3105.

In step S3104, there is performed the first control which minimizes the operation time by including a period during which there are performed simultaneously the driving control of the first-second lens group driving motor 4A and the driving controls of at least one motor of the third lens group driving motor 4B, the first aperture stop driving motor 4C, the second aperture stop driving motor 4D and the shutter driving motor 4E. After this, the flow moves to step S3106.

In step S3105, there is performed the second control which avoid too much power current consumption at one time by sequentially performing in a predefined sequence the driving controls of the first-second lens group driving motor 4A, the third lens group driving motor 4B, the first aperture stop driving motor 4C, the second aperture stop driving motor 4D and the shutter driving motor 4E, or the third control which avoid too much power current consumption at one time by including a period during which there are performed simultaneously the driving control of the first-second lens group 1A and the driving controls of the third lens group 1B, the shutter 3 and the aperture stop 2 and the driving voltage on the first-second lens group driving motor is reduced. After this, the flow moves to step S3106.

In step S3106, the basic operations on startup are finished.

Steps S3111 to S3115 show a basic operation flow on shutdown during which the lens barrel unit 1 is shutdown from the photographing standby state to the storage state when the power source is switched off from a power on state.

In step S3111, whether the power source is on or off is determined. If the power source is switched off from the power on state, the flow moves to step S3112. While if the power source is on, the flow returns to step S3111.

In step S3112, the battery type determination is performed by the battery type determination section 6. If the battery is the special battery, the flow moves to step S3113. While if the battery is the universal battery, the flow moves to step S3115.

In step S3113, the battery voltage determination is performed by the voltage detecting portion included in the battery type determination section 6. If the battery voltage is above a predefined value, the flow moves to step S3114. While if the battery voltage is below the predefined value, the flow moves to step S3115.

In step S3114, there is performed the first control which minimizes the operation time by including a period during which there are performed simultaneously the driving control of the first-second lens group driving motor 4A and the driving controls of at least one motor of the third lens group driving motor 4B, the first aperture stop driving motor 4C, the second aperture stop driving motor 4D and the shutter driving motor 4E. After this, the flow moves to step S3116.

In step S3115, there is performed the second control which avoid too much power current consumption at one time by sequentially performing in a predefined sequence the driving controls of the first-second lens group driving motor 4A, the third lens group driving motor 4B, the first aperture stop driving motor 4C, the second aperture stop driving motor 4D and the shutter driving motor 4E, or the third control which avoid too much power current consumption at one time by including a period during which there are performed simultaneously the driving control of the first-second lens group 1A and the driving controls of the third lens group 1B, the shutter 3 and the aperture stop 2 and the driving voltage on the first-second lens group driving motor is reduced. After this, the flow moves to step S3116.

In step S3116, the basic operations on shutdown are finished.

Since the contents of the first control, the second control and the third control are equivalent to that in the embodiments 1 to 4, descriptions on them are omitted.

According to the above operations, when the battery is determined to be the special battery by the battery type determination section 6 and the voltage of the battery is below a predefined value, the second control or the third control is performed as an alternative to the first control. As a result, it is capable to inhibit the early decrease of the battery life expectancy by performing a control on the power current consumption when the battery is the special battery and the capacity of the battery is low. **[Embodiment 7]**

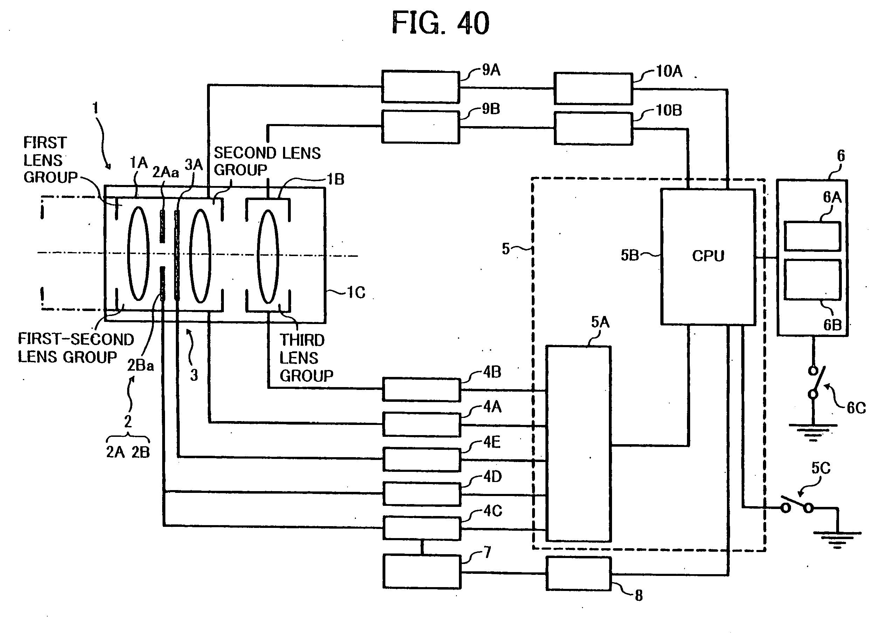

In the present embodiment, a control selector switch 5C (refer to FIG. 40) is provided in the control device main body 5, and the first control, the second control and the third control are selectable through the control selector switch 5C according to the determination result from the battery type determination section 6. The CPU 5B performs controls described hereinafter.

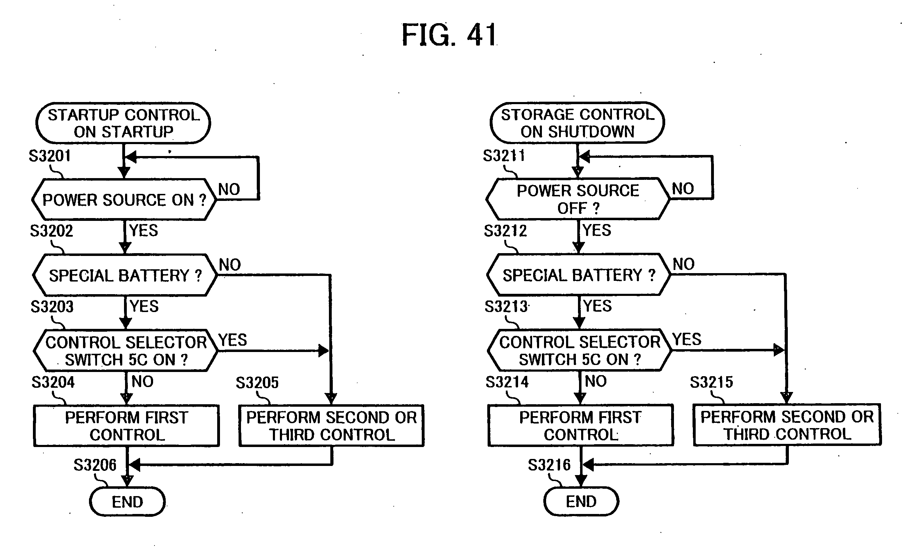

FIG. 41 shows basic operation flows of the CPU 5B according to the present embodiment.

Steps S3201 to S3205 show a basic operation flow on startup during which the lens barrel unit 1 is actuated from the storage state to the photographing standby state when the power source is switched on from the power off state.

In step S3201, whether the power source is on or off is determined. If the power source is switched on from the power off state, the flow moves to step S3202. While if the power source is off, the flow returns to step S3201.

In step S3202, the battery type determination is performed by the battery type determination section 6. If the battery is the special battery, the flow moves to step S3203. While if the battery is the universal battery, the flow moves to step S3205.

In step S3203, a state determination of the control selector switch 5C is performed. If the control selector switch 5C is off, the flow moves to step S3204. While if the control selector switch 5C is on, the flow moves to step S3205.

In step S3204, there is performed the first control which minimizes the operation time by including a period during which there are performed simultaneously the driving control of the first-second lens group driving motor 4A and the driving controls of at least one motor of the third lens group driving motor 4B, the first aperture stop driving motor 4C, the second aperture stop driving motor 4D and the shutter driving motor 4E. After this, the flow moves to step S3206.

In step S3205, as an alternative of the first control, there is performed the second control which avoid too much power current consumption at one time by performing sequentially in a predefined sequence the driving controls of the first-second lens group driving motor 4A, the third lens group driving motor 4B, the first aperture stop driving motor 4C, the second aperture stop driving motor 4D and the shutter driving motor 4E, or the third control which avoid too much power current consumption at one time by including a period during which there are performed simultaneously the driving control of the first-second lens group 1A and the driving controls of the third lens group 1B, the shutter 3 and the aperture stop 2 and the driving voltage on the first-second lens group driving motor is reduced. After this, the flow moves to step S3206.

In step S3206, the basic operations on startup are finished.

Steps S3211 to S3215 show a basic operation flow on shutdown during which the lens barrel unit 1 is shutdown from the photographing standby state to the storage state when the power source is switched off from the power on state.

In step S3211, whether the power source is on or off is determined. If the power source is switched off from the power on state, the flow moves to step S3212. While if the power source is on, the flow returns to step S3211.

In step S3212, the battery type determination is performed by the battery type determination section 6. If the battery is the special battery, the flow moves to step S3213. While if the battery is the universal battery, the flow moves to step S3215.

In step S3213, the state determination of the control selector switch 5C is performed. If the control selector switch 5C is off, the flow moves to step S3214. While if the control selector switch 5C is on, the flow moves to step S3215.

In step S3214, there is performed the first control which minimizes the operation time by including a period during which there are performed simultaneously the driving control of the first-second lens group driving motor 4A and the driving controls of at least one motor of the third lens group driving motor 4B, the first aperture stop driving motor 4C, the second aperture stop driving motor 4D and the shutter driving motor 4E. After this, the flow moves to step S3216.

In step S3215, as an alternative of the first control, there is performed the second control which avoid too much power current consumption at one time by performing sequentially in a predefined sequence the driving controls of the first-second lens group driving motor 4A, the third lens group driving motor 4B, the first aperture stop driving motor 4C, the second aperture stop driving motor 4D and the shutter driving motor 4E, or the third control which avoid too much power current consumption at one time by including a period during which there are performed simultaneously the driving control of the first-second lens group 1A and the driving controls of the third lens group 1B, the shutter 3 and the aperture stop 2 and the driving voltage on the first-second lens group driving motor is reduced. After this, the flow moves to step S3216.

In step S3216, the basic operations on shutdown are finished.

Since the contents of the first control, the second control and the third control are equivalent to that in the embodiments 1 to 4, descriptions on them are omitted.

According to the above operations, even if the special battery is used, the second control or the third control is selectable. As a result, it is capable to perform selectively a control inhibiting the power current consumption even when the battery is the special battery, and thus to enable longer the battery life expectancy.

Although the embodiments are described in detail in the above with reference to the drawings, the present invention is not limited to the configurations in the embodiments as the embodiments are only for purposes of illustration of the present invention. Design modifications without departing from the scope of the present invention, will be comprised in the present invention, which is defined by the appended claims.

For example, though the embodiments describe as an illustration the lens barrel unit 1 comprising two lens groups of the first-second lens group and the third lens group, it is also applicable for the present invention to comprise more than two lens groups.

Also, it is preferable to change the control sequence of the first aperture stop 2A, the second aperture stop 2B and the shutter 3 in each embodiment.

Moreover, it is preferable as long as the driving voltages, such as V12C1, V12C3, V12L1 to V12L4, for driving the first-second lens group driving motor 4A are lower than the normal driving voltage of V12N.

Furthermore, it is preferable as long as the driving voltages of V12C2 and V12C4 for driving the first-second lens group driving motor 4A are lower than the respective driving voltages of V12C1 and V12C3.

## Claims

1. A driving control device of a lens barrel unit (1), comprising:
a lens barrel unit (1); and
a control device main body (5) for controlling driving on the lens barrel unit;
the lens barrel unit (1) including:
a plurality of lens groups (1A, 1B);
an aperture stop (2) disposed on an optical axis of the plurality of lens groups;
a shutter (3) disposed on the optical axis of the plurality lens groups;
a plurality of lens group driving motors (4A, 4B) for driving the plurality of lens groups;
a shutter driving motor (4E) for driving the shutter;
**characterized in that** the driving control device further comprises:
a battery type determination section (6) for determining a type of a battery which serves as a power source of the lens barrel unit and the control device main body, the type of battery including a special battery and a universal battery, wherein a battery of the universe battery type has a current capacity smaller than a battery of the special battery type; and
a plurality of aperture stop driving motors (4C, 4D) for driving the aperture stop;
wherein the control device main body is configured to perform a first control which performs simultaneously driving controls of at least two motors of the plurality of lens group driving motors, the plurality of aperture stop driving motors and the shutter driving motor when the battery is determined to be a special battery by the battery type determination section, and a second control which performs sequentially in a predefined sequence driving controls of the plurality of lens group driving motors, the aperture stop driving motors and the shutter driving motor when the battery is determined to be a universal battery by the battery type determination section;
wherein the first control comprises a first startup control which performs simultaneously driving controls of an objective lens group driving motor and at least one motor of other lens group driving motors of the plurality of lens group driving motors (4A, 4B) for driving the other lens groups, the plurality of aperture stop driving motors (4C, 4D) and the shutter driving motor (4E), and sets the plurality of lens groups (1A, 1B), the aperture stop (2) and the shutter (3) to a photographing standby state when the power source is on; and a first storage control which performs simultaneous driving controls of the objective lens group driving motor and at least one motor of the other lens group driving motors, the plurality of aperture stop driving motors (4C, 4D) and the shutter driving motor (4E), and sets the plurality of lens groups (1A, 1B), the aperture stop (2) and the shutter (3) to a storage state when the power source is off.

2. A driving control device of a lens barrel unit (1), comprising:
a lens barrel unit (1);
a control device main body (5) for controlling driving on the lens barrel unit; and
the lens barrel unit (1) including:
a plurality of lens groups (1A, 1B);
an aperture stop (2) disposed on an optical axis of the plurality of lens groups;
a shutter (3) disposed on the optical axis of the plurality of lens groups;
a plurality of lens group driving motors (4A, 4B) for driving the plurality of lens groups;
a shutter driving motor (4E) for driving the shutter;
**characterized in that** the driving control device further comprises:
a battery type determination (6) section for determining a type of a battery which serves as a power source of the lens barrel unit and the control device main body, the type of battery including a special battery and a universal battery, wherein a battery of the universal battery type has a current capacity smaller than a battery of the special battery type; and
a plurality of aperture stop driving motors (4C, 4D) for driving the aperture stop;
wherein the control device main body is configured to perform a first control which performs simultaneously driving controls of at least two motors of the plurality of lens group driving motors, the plurality of aperture stop driving motors and the shutter driving motor when the battery is determined to be a special battery by the battery type determination section, and a third control which performs simultaneously driving controls of at least two motors of the plurality of lens group driving motors, the plurality of aperture stop driving motors and the shutter driving motor when the battery is determined to be a universal battery by the battery type determination section, and performs the driving controls of predefined motors at a driving voltage lower than normal when the driving control is performed simultaneously;
wherein the first control comprises a first startup control which performs simultaneously driving controls of an objective lens group driving motor and at least one motor of other lens group driving motors of the plurality of lens group driving motors (4A, 4B) for driving the other lens groups, the plurality of aperture stop driving motors (4C, 4D) and the shutter driving motor (4E), and sets the plurality of lens groups (1A, 1B), the aperture stop (2) and the shutter (3) to a photographing standby state when the power source is on; and a first storage control which performs simultaneous driving controls of the objective lens group driving motor and at least one motor of the other lens group driving motors, the plurality of aperture stop driving motors (4C, 4D) and the shutter driving motor (4E), and sets the plurality of lens groups (1A, 1B), the aperture stop (2) and the shutter (3) to a storage state when the power source is off.

3. A driving control device of a lens barrel unit (1) set forth in claim 1 or claim 2, **characterized in that** the plurality of lens groups comprises an objective lens group positioned in an object side and the other lens groups.

4. A driving control device of a lens barrel unit (1) set forth in claim 3, **characterized in that** the objective lens group driving motor of the plurality of lens group driving motors, which drives the objective lens group, is a direct current motor.

5. A driving control device of a lens barrel unit (1) set forth in any one of claims 1 to 4, further comprising a plurality of position detecting sections (9A, 9B) for detecting positions of the plurality of lens groups and **characterized in that** when there are performed simultaneously driving controls of the objective lens group driving motor and at least one motor of the other lens group driving motors, the first storage control stops a driving control of the objective lens group temporarily when the objective lens group arrives at a predefined position, and performs the driving control again of the objective lens group motor such that the objective lens group is at the storage position when the other lens groups driven by the other lens group driving motors whose driving controls are performed simultaneously with the objective lens group driving motor arrives at the storage position.

6. A driving control device of a lens barrel unit (1) set forth in claim 1, 3 or 4, **characterized in that** the second control comprises a second startup control which performs sequentially in a predefined sequence driving controls of the plurality of lens group driving motors, the plurality of aperture stop driving motors and the shutter driving motor, and sets the plurality of lens groups, the aperture stop and the shutter to a photographing standby state when the power source is on; and a second storage control which performs sequentially in a predefined sequence driving controls of the plurality of lens group dividing motors, the plurality of aperture stop driving motors and the shutter driving motor, and sets the plurality of lens groups, the aperture stop and the shutter to a storage state when the power source is off.

7. A driving control device of a lens barrel unit (1) set forth in claim 6, further comprising a plurality of position detecting sections (9A, 9B) for detecting positions of the plurality of lens groups and **characterized in that** the second storage control performs a driving control of the objective lens group driving motor, and stops the driving control of the objective lens group driving motor temporarily when the objective lens group arrives at a predefined position and actuates driving controls of the other lens group driving motors; and performs the driving control again of the objective lens group motor such that the objective lens group is at the storage position when the other lens groups driven by the other lens group driving motors arrives at the storage position.

8. A driving control device of a lens barrel unit (1) set forth in any one of claims 2 to 4, **characterized in that** the third control comprises a third startup control which performs simultaneously driving controls of the objective lens group driving motor and at least one motor of the other lens group driving motors, the plurality of aperture stop driving motors and the shutter driving motor, performs the driving control of the objective lens group at a driving voltage lower than normal when the driving control is performed simultaneously, and sets the plurality of lens groups, the aperture stop and the shutter to a photographing standby state when the power source is on; and a third storage control which performs simultaneously driving controls of the objective lens group driving motor and at least one motor of the other lens group driving motors, the plurality of aperture stop driving motors and the shutter driving motor, performs the driving control of the objective lens group at a driving voltage lower than normal when the driving control is performed simultaneously, and sets the plurality of lens groups, the aperture stop and the shutter to a storage state when the power source is off.

9. A driving control device of a lens barrel unit (1) set forth in claim 8, further comprising a plurality of position detecting sections (9A, 9B) for detecting positions of the plurality of lens groups and **characterized in that** when there are performed simultaneously driving controls of the objective lens group driving motor and at least one motor of the other lens group driving motors, the third storage control stops the driving control of the objective lens group temporarily when the objective lens group arrives at a predefined position, and performs the driving control again of the objective lens group motor such that the objective lens group is at the storage position when the other lens groups driven by the other lens group driving motors whose driving controls are performed simultaneously with the objective lens group driving motor arrives at the storage position.

10. A driving control device of a lens barrel unit (1) set forth in claim 1, **characterized in that** the battery type determination section (6) includes a voltage detecting portion for detecting a voltage of the battery, and when the battery is determined to be the special battery by the battery type determination section and the voltage detected by the voltage detecting portion is below a predefined value, the second control is performed as an alternative to the first control.

11. A driving control device of a lens barrel unit (1) set forth in claim 2, **characterized in that** the battery type determination section (6) includes a voltage detecting portion for detecting a voltage of the battery, and when the battery is determined to be the special battery by the battery type determination section and the voltage detected by the voltage detecting portion is below a predefined value, the third control is performed as an alternative to the first control.

12. A driving control device of a lens barrel unit (1) set forth in claim 1, **characterized in that** the control device main body (5) includes a control selector switch (6C), and when the battery is determined to be the special battery by the battery type determination section, the second control is selectable through the control selector switch.

13. A driving control device of a lens barrel unit (1) set forth in claim 2, **characterized in that** the control device main body (5) includes a control selector switch (6C), and when the battery is determined to be the special battery by the battery type determination section, the third control is selectable through the control selector switch.

14. A driving control device of a lens barrel unit (1) set forth in claim 1 or claim 2 **characterized in that** the battery type determination section (6) includes a battery housing portion (6A) for housing the battery, special battery terminals for making contact with terminals of the special battery when the battery housed in the battery housing portion is the special battery, universal battery terminals for making contact with terminals of the universal battery exclusively when the battery housed in the battery housing portion is the universal battery, a power current detecting section for detecting a power current from the universal battery terminals when the battery is housed in the battery housing portion,
wherein the battery is determined to be the universal battery if the power current from the universal battery terminals is detected by the power current detecting section, the battery is determined to be the special battery if the power current from the universal battery terminals is not detected by the power current detecting section when the battery is housed in the battery housing portion.

15. A driving control device of a lens barrel unit (1) set forth in any one of claims 1 to 14, **characterized in that** the lens barrel unit (1) and the control device main body (5) are provided in a camera main body; the lens barrel unit is housed in the camera main body when the power source of the camera main body is off; and when the power source of the camera main body is on, the control device main body performs driving controls of the plurality of lens group driving motors, the aperture stop driving motor and the shutter driving motor and sets the plurality of lens groups, the aperture stop and the shutter to the photographing standby state, and at the same time the lens barrel unit is projected from the camera main body.

## Patentansprüche

1. Antriebssteuervorrichtung für eine Objektivtubuseinheit (1), die umfasst:
eine Objektivtubuseinheit (1); und
einen Steuervorrichtungs-Hauptkörper (5) zum Steuern des Antreibens in der Objektivtubuseinheit;
wobei die Objektivtubuseinheit (1) enthält:
mehrere Linsengruppen (1A, 1B);
eine Aperturblende (2), die auf einer optischen Achse der mehreren Linsengruppen angeordnet ist;
einen Verschluss (3), der auf der optischen Achse der mehreren Linsengruppen angeordnet ist;
mehrere Linsengruppen-Antriebsmotoren (4A, 4B) zum Antreiben der mehreren Linsengruppen; und
einen Verschlussantriebsmotor (4E) zum Antreiben des Verschlusses;
**dadurch gekennzeichnet, dass** die Antriebssteuervorrichtung ferner umfasst:
einen Batterietyp-Bestimmungsabschnitt (6) zum Bestimmen eines Typs einer Batterie, die als eine Leistungsquelle der Objektivtubuseinheit und des Steuervorrichtungs-Hauptkörpers dient, wobei der Typ der Batterie eine Spezialbatterie und eine Universalbatterie umfasst, wobei eine Batterie des Universalbatterietyps eine Stromkapazität besitzt, die kleiner als die einer Batterie des Spezialbatterietyps ist; und
mehrere Aperturblenden-Antriebsmotoren (4C, 4D) zum Antreiben der Aperturblende;
wobei der Steuervorrichtungs-Hauptkörper konfiguriert ist, um eine erste Steuerung, die die Antriebssteuerungen von wenigstens zwei Motoren der mehreren Linsengruppen-Antriebsmotoren, der mehreren Aperturblenden-Antriebsmotoren und des Verschlussantriebsmotors gleichzeitig ausführt, wenn durch den Batterietyp-Bestimmungsabschnitt bestimmt wird, dass die Batterie eine Spezialbatterie ist, und eine zweite Steuerung, die die Antriebsteuerungen der mehreren Linsengruppen-Antriebsmotoren, der Aperturblenden-Antriebsmotoren und des Verschlussantriebsmotors in einer vorgegebenen Reihenfolge sequentiell ausführt, wenn durch den Batterietyp-Bestimmungsabschnitt bestimmt wird, dass die Batterie eine Universalbatterie ist, auszuführen;
wobei die erste Steuerung eine erste Inbetriebnahmesteuerung, die die Antriebsteuerungen eines Objektivlinsengruppen-Antriebsmotors und wenigstens eines Motors der anderen Linsengruppen-Antriebsmotoren der mehreren Linsengruppen-Antriebsmotoren (4A, 4B) zum Antreiben der anderen Linsengruppen, der mehreren Aperturblenden-Antriebsmotoren (4C, 4D) und des Verschlussantriebsmotors (4E) gleichzeitig ausführt und die mehreren Linsengruppen (1A, 1B), die Aperturblende (2) und den Verschluss (3) in einen Photographier-Bereitschaftszustand setzt, wenn die Leistungsquelle eingeschaltet ist; und eine erste Aufbewahrungssteuerung, die die Antriebssteuerungen des Objektivlinsengruppen-Antriebsmotors und wenigstens eines Motors der anderen Linsengruppen-Antriebsmotoren, der mehreren Aperturblenden-Antriebsmotoren (4C, 4D) und des Verschlussantriebsmotors (4E) gleichzeitig ausführt und die mehreren Linsengruppen (1A, 1B), die Aperturblende (2) und den Verschluss (3) in einen Aufbewahrungszustand setzt, wenn die Leistungsquelle ausgeschaltet ist, umfasst.

2. Antriebssteuervorrichtung für eine Objektivtubuseinheit (1), die umfasst:
eine Objektivtubuseinheit (1);
einen Steuervorrichtungs-Hauptkörper (5) zum Steuern des Antreibens in der Objektivtubuseinheit; wobei
die Objektivtubuseinheit (1) enthält:
mehrere Linsengruppen (1A, 1B);
eine Aperturblende (2), die auf einer optischen Achse der mehreren Linsengruppen angeordnet ist;
einen Verschluss (3), der auf der optischen Achse der mehreren Linsengruppen angeordnet ist;
mehrere Linsengruppen-Antriebsmotoren (4A, 4B) zum Antreiben der mehreren Linsengruppen; und
einen Verschlussantriebsmotor (4E) zum Antreiben des Verschlusses;
**dadurch gekennzeichnet, dass** die Antriebssteuervorrichtung ferner umfasst:
einen Batterietyp-Bestimmungsabschnitt (6) zum Bestimmen eines Typs einer Batterie, die als eine Leistungsquelle der Objektivtubuseinheit und des Steuervorrichtungs-Hauptkörpers dient, wobei der Typ der Batterie eine Spezialbatterie und eine Universalbatterie umfasst, wobei eine Batterie des Universalbatterietyps eine Stromkapazität besitzt, die kleiner als die einer Batterie des Spezialbatterietyps ist; und
mehrere Aperturblenden-Antriebsmotoren (4C, 4D) zum Antreiben der Aperturblende;
wobei der Steuervorrichtungs-Hauptkörper konfiguriert ist, um eine erste Steuerung, die die Antriebssteuerungen von wenigstens zwei Motoren der mehreren Linsengruppen-Antriebsmotoren, der mehreren Aperturblenden-Antriebsmotoren und des Verschlussantriebsmotors gleichzeitig ausführt, wenn durch den Batterietyp-Bestimmungsabschnitt bestimmt wird, dass die Batterie eine Spezialbatterie ist, und eine dritte Steuerung, die die Antriebssteuerungen von wenigstens zwei Motoren der mehreren Linsengruppen-Antriebsmotoren, der mehreren Aperturblenden-Antriebsmotoren und des Verschlussantriebsmotors gleichzeitig ausführt, wenn durch den Batterietyp-Bestimmungsabschnitt bestimmt wird, dass die Batterie eine Universalbatterie ist, und die Antriebssteuerungen der vorgegebenen Motoren bei einer Antriebsspannung, die niedriger als normal ist, ausführt, wenn die Antriebssteuerung gleichzeitig ausgeführt wird, auszuführen;
wobei die erste Steuerung eine erste Inbetriebnahmesteuerung, die die Antriebsteuerungen eines Objektivlinsengruppen-Antriebsmotors und wenigstens eines Motors der anderen Linsengruppen-Antriebsmotoren der mehreren Linsengruppen-Antriebsmotoren (4A, 4B) zum Antreiben der anderen Linsengruppen, der mehreren Aperturblenden-Antriebsmotoren (4C, 4D) und des Verschlussantriebsmotors (4E) gleichzeitig ausführt und die mehreren Linsengruppen (1A, 1B), die Aperturblende (2) und den Verschluss (3) in einen Photographier-Bereitschaftszustand setzt, wenn die Leistungsquelle eingeschaltet ist; und eine erste Aufbewahrungssteuerung, die die Antriebssteuerungen des Objektivlinsengruppen-Antriebsmotors und wenigstens eines Motors der anderen Linsengruppen-Antriebsmotoren, der mehreren Aperturblenden-Antriebsmotoren (4C, 4D) und des Verschlussantriebsmotors (4E) gleichzeitig ausführt und die mehreren Linsengruppen (1A, 1B), die Aperturblende (2) und den Verschluss (3) in einen Aufbewahrungszustand setzt, wenn die Leistungsquelle ausgeschaltet ist, umfasst.

3. Antriebssteuervorrichtung für eine Objektivtubuseinheit (1) nach Anspruch 1 oder Anspruch 2, **dadurch gekennzeichnet, dass** die mehreren Linsengruppen eine Objektivlinsengruppe umfassen, die auf einer Objektseite der anderen Linsengruppen positioniert ist.

4. Antriebssteuervorrichtung für eine Objektivtubuseinheit (1) nach Anspruch 3, **dadurch gekennzeichnet, dass** der Objektivlinsengruppen-Antriebsmotor der mehreren Linsengruppen-Antriebsmotoren, der die Objektivlinsengruppe antreibt, ein Gleichstrommotor ist.

5. Antriebssteuervorrichtung für eine Objektivtubuseinheit (1) nach einem der Ansprüche 1 bis 4, die ferner mehrere Positionsdetektionsabschnitte (9A, 9B) zum Detektieren der Positionen der mehreren Linsengruppen umfasst, **dadurch gekennzeichnet, dass**, wenn die Antriebssteuerungen des Objektivlinsengruppen-Antriebsmotors und wenigstens eines Motors der anderen Linsengruppen-Antriebsmotoren gleichzeitig ausgeführt werden, die erste Aufbewahrungssteuerung eine Antriebsteuerung der Objektivlinsengruppe vorübergehend anhält, wenn die Objektivlinsengruppe an einer vorgegebenen Position ankommt, und die Antriebsteuerung des Objektivlinsengruppen-Motors abermals ausführt, so dass sich die Objektivlinsengruppe in der Aufbewahrungsposition befindet, wenn die anderen Linsengruppen, die durch die anderen Linsengruppen-Antriebsmotoren angetrieben werden, deren Antriebsteuerungen mit der des Objektivlinsengruppen-Antriebsmotor gleichzeitig ausgeführt werden, an der Aufbewahrungsposition ankommen.

6. Antriebssteuervorrichtung für eine Objektivtubuseinheit (1) nach Anspruch 1, 3 oder 4, **dadurch gekennzeichnet, dass** die zweite Steuerung eine zweite Inbetriebnahmesteuerung, die die Antriebsteuerungen der mehreren Linsengruppen-Antriebsmotoren, der mehreren Aperturblenden-Antriebsmotoren und des Verschlussantriebsmotors in einer vorgegebenen Reihenfolge sequentiell ausführt und die mehreren Linsengruppen, die Aperturblende und den Verschluss in einen Photographier-Bereitschaftszustand setzt, wenn die Leistungsquelle eingeschaltet ist; und eine zweite Aufbewahrungssteuerung, die die Antriebsteuerungen der mehreren Linsengruppen-Antriebsmotoren, der mehreren Aperturblenden-Antriebsmotoren und des Verschlussantriebsmotors in einer vorgegebenen Reihenfolge sequentiell ausführt und die mehreren Linsengruppen, die Aperturblende und den Verschluss in einen Aufbewahrungszustand setzt, wenn die Leistungsquelle ausgeschaltet ist, umfasst.

7. Antriebssteuervorrichtung für eine Objektivtubuseinheit (1) nach Anspruch 6, die ferner mehrere Positionsdetektionsabschnitte (9A, 9B) zum Detektieren der Positionen der mehreren Linsengruppen umfasst, **dadurch gekennzeichnet, dass** die zweite Aufbewahrungssteuerung eine Antriebsteuerung des Objektivlinsengruppen-Antriebsmotors ausführt und die Antriebsteuerung des Objektivlinsengruppen-Antriebsmotors vorübergehend anhält, wenn die Objektivlinsengruppe an einer vorgegebenen Position ankommt, und die Antriebsteuerungen der anderen Linsengruppen-Antriebsmotoren betätigt; und die Antriebsteuerung des Objektivlinsengruppen-Motors abermals ausführt, so dass sich die Objektivlinsengruppe in der Aufbewahrungsposition befindet, wenn die durch die anderen Linsengruppen-Antriebsmotoren angetriebenen Linsengruppen an der Aufbewahrungsposition ankommen.

8. Antriebssteuervorrichtung für eine Objektivtubuseinheit (1) nach einem der Ansprüche 2 bis 4, **dadurch gekennzeichnet, dass** die dritte Steuerung eine dritte Inbetriebnahmesteuerung, die die Antriebssteuerungen des Objektivlinsengruppen-Antriebsmotors und wenigstens eines Motors der anderen Linsengruppen-Antriebsmotoren, der mehreren Aperturblenden-Antriebsmotoren und des Verschlussantriebsmotors gleichzeitig ausführt, die Antriebsteuerung der Objektivlinsengruppe bei einer Antriebsspannung, die niedriger als normal ist, ausführt, wenn die Antriebsteuerung gleichzeitig ausgeführt wird, und die mehreren Linsengruppen, die Aperturblende und den Verschluss in einen Photographier-Bereitschaftszustand setzt, wenn die Leistungsquelle eingeschaltet ist; und eine dritte Aufbewahrungssteuerung, die die Antriebsteuerungen des Objektivlinsengruppen-Antriebsmotors und wenigstens eines Motors der anderen Linsengruppen-Antriebsmotoren, der mehreren Aperturblenden-Antriebsmotoren und des Verschlussantriebsmotor gleichzeitig ausführt, die Antriebsteuerung der Objektivlinsengruppe bei einer Antriebsspannung, die niedriger als normal ist, ausführt, wenn die Antriebsteuerung gleichzeitig ausgeführt wird, und die mehreren Linsengruppen, die Aperturblende und den Verschluss in einen Aufbewahrungszustand setzt, wenn die Leistungsquelle ausgeschaltet ist, umfasst.

9. Antriebssteuervorrichtung für eine Objektivtubuseinheit (1) nach Anspruch 8, die ferner mehrere Positionsdetektionsabschnitte (9A, 9B) zum Detektieren der Positionen der mehreren Linsengruppen umfasst, **dadurch gekennzeichnet, dass**, wenn die Antriebssteuerungen des Objektivlinsengruppen-Antriebsmotors und wenigstens eines Motors der anderen Linsengruppen-Antriebsmotoren gleichzeitig ausgeführt werden, die dritte Aufbewahrungssteuerung die Antriebsteuerung der Objektivlinsengruppe vorübergehend anhält, wenn die Objektivlinsengruppe an einer vorgegebenen Position ankommt, und die Antriebsteuerung des Objektivlinsengruppen-Motors abermals ausführt, so dass sich die Objektivlinsengruppe in der Aufbewahrungsposition befindet, wenn die anderen Linsengruppen, die durch die anderen Linsengruppen-Antriebsmotoren angetrieben werden, deren Antriebsteuerungen mit der des Objektivlinsengruppen-Antriebsmotors gleichzeitig ausgeführt werden, an der Aufbewahrungsposition ankommen.

10. Antriebssteuervorrichtung für eine Objektivtubuseinheit (1) nach Anspruch 1, **dadurch gekennzeichnet, dass** der Batterietyp-Bestimmungsabschnitt (6) einen Spannungsdetektionsabschnitt zum Detektieren einer Spannung der Batterie enthält, wobei, wenn durch den Batterietyp-Bestimmungsabschnitt bestimmt wird, dass die Batterie die Spezialbatterie ist, und die durch den Spannungsdetektionsabschnitt detektierte Spannung unter einem vorgegebenen Wert liegt, die zweite Steuerung als eine Alternative zur ersten Steuerung ausgeführt wird.

11. Antriebssteuervorrichtung für eine Objektivtubuseinheit (1) nach Anspruch 2, **dadurch gekennzeichnet, dass** der Batterietyp-Bestimmungsabschnitt (6) einen Spannungsdetektionsabschnitt zum Detektieren einer Spannung der Batterie enthält, wobei, wenn durch den Batterietyp-Bestimmungsabschnitt bestimmt wird, dass die Batterie die Spezialbatterie ist, und die durch den Spannungsdetektionsabschnitt detektierte Spannung unter einem vorgegebenen Wert liegt, die dritte Steuerung als eine Alternative zur ersten Steuerung ausgeführt wird.

12. Antriebssteuervorrichtung für eine Objektivtubuseinheit (1) nach Anspruch 1, **dadurch gekennzeichnet, dass** der Antriebsteuerungs-Hauptkörper (5) einen Steuerungsauswahlschalter (6C) enthält, wobei, wenn durch den Batterietyp-Bestimmungsabschnitt bestimmt wird, dass die Batterie die Spezialbatterie ist, die zweite Steuerung durch den Steuerungsauswahlschalter auswählbar ist.

13. Antriebssteuervorrichtung für eine Objektivtubuseinheit (1) nach Anspruch 2, **dadurch gekennzeichnet, dass** der Antriebsteuerungs-Hauptkörper (5) einen Steuerungsauswahlschalter (6C) enthält, wobei, wenn durch den Batterietyp-Bestimmungsabschnitt bestimmt wird, dass die Batterie die Spezialbatterie ist, die dritte Steuerung durch den Steuerungsauswahlschalter auswählbar ist.

14. Antriebssteuervorrichtung für eine Objektivtubuseinheit (1) nach Anspruch 1 oder 2, **dadurch gekennzeichnet, dass** der Batterietyp-Bestimmungsabschnitt (6) einen Batteriegehäuseabschnitt (6A) zum Aufnehmen der Batterie, Spezialbatterie-Anschlüsse zum Herstellen des Kontakts mit den Anschlüssen der Spezialbatterie, wenn die in dem Batteriegehäuseabschnitt aufgenommene Batterie die Spezialbatterie ist, Universalbatterie-Anschlüsse zum Herstellen des Kontakts mit den Anschlüssen der Universalbatterie ausschließlich dann, wenn die in dem Batteriegehäuseabschnitt aufgenommene Batterie die Universalbatterie ist, und einen Leistungsstrom-Detektionsabschnitt zum Detektieren eines Leistungsstroms von den Universalbatterie-Anschlüssen, wenn die Batterie in dem Batteriegehäuseabschnitt aufgenommen ist, umfasst,
wobei bestimmt wird, dass die Batterie die Universalbatterie ist, wenn durch den Leistungsstrom-Detektionsabschnitt der Leistungsstrom von den Universalbatterie-Anschlüssen detektiert wird, und bestimmt wird, dass die Batterie die Spezialbatterie ist, wenn durch den Leistungsstrom-Detektionsabschnitt der Leistungsstrom von den Universalbatterie-Anschlüssen nicht detektiert wird, wenn die Batterie in dem Batteriegehäuseabschnitt aufgenommen ist.

15. Antriebssteuervorrichtung für eine Objektivtubuseinheit (1) nach einem der Ansprüche 1 bis 14, **dadurch gekennzeichnet, dass** die Objektivtubuseinheit (1) und der Steuervorrichtungs-Hauptkörper (5) in einem Kamerahauptkörper vorgesehen sind; und die Objektivtubuseinheit im Kamerahauptkörper aufgenommen ist, wenn die Leistungsquelle des Kamerahauptkörpers ausgeschaltet ist; wobei, wenn die Leistungsquelle des Kamerahauptkörpers eingeschaltet ist, der Steuervorrichtungs-Hauptkörper die Antriebsteuerungen der mehreren Linsengruppen-Antriebsmotoren, des Aperturblenden-Antriebsmotors und des Verschlussantriebsmotors ausführt und die mehreren Linsengruppen, die Aperturblende und den Verschluss in den Photographier-Bereitschaftszustand setzt, wobei gleichzeitig die Objektivtubuseinheit aus dem Kamerahauptkörper vorsteht.

## Revendications

1. Dispositif de commande d'entraînement d'une unité de barillet de lentilles (1), comprenant :
une unité de barillet de lentilles (1) ; et
un corps principal de dispositif de commande (5) pour commander l'entraînement de l'unité de barillet de lentilles ;
l'unité de barillet de lentilles (1) comprenant :
une pluralité de groupes de lentilles (1A, 1B) ;
un diaphragme d'ouverture (2) disposé sur un axe optique de la pluralité de groupes de lentilles ;
un obturateur (3) disposé sur l'axe optique de la pluralité de groupes de lentilles ;
une pluralité de moteurs d'entraînement de groupe de lentilles (4A, 4B) pour entraîner la pluralité de groupes de lentilles ;
un moteur d'entraînement d'obturateur (4E) pour entraîner l'obturateur ;
**caractérisé en ce que** le dispositif de commande d'entraînement comprend en outre :
une section de détermination de type de batterie (6) pour déterminer un type d'une batterie qui sert en tant que source de puissance de l'unité de barillet de lentilles et du corps principal de dispositif de commande, le type de batterie comprenant une batterie spéciale et une batterie universelle, dans lequel une batterie du type batterie universelle a une capacité en courant inférieure à celle d'une batterie du type batterie spéciale ; et
une pluralité de moteurs d'entraînement de diaphragme d'ouverture (4C, 4D) pour entraîner le diaphragme d'ouverture ;
dans lequel le corps principal de dispositif de commande est configuré pour effectuer une première commande qui effectue simultanément les commandes d'entraînement d'au moins deux moteurs de la pluralité de moteurs d'entraînement de groupe de lentilles, de la pluralité de moteurs d'entraînement de diaphragme d'ouverture et du moteur d'entraînement d'obturateur lorsqu'il est déterminé que la batterie est une batterie spéciale par la section de détermination de type de batterie, et une deuxième commande qui effectue séquentiellement dans un ordre prédéfini les commandes d'entraînement de la pluralité de moteurs d'entraînement de groupe de lentilles, des moteurs d'entraînement de diaphragme d'ouverture et du moteur d'entraînement d'obturateur lorsqu'il est déterminé que la batterie est une batterie universelle par la section de détermination de type de batterie ;
dans lequel la première commande comprend une première commande de démarrage qui effectue simultanément les commandes d'entraînement d'un moteur d'entraînement de groupe de lentilles de focalisation et d'au moins un moteur des autres moteurs d'entraînement de groupe de lentilles de la pluralité de moteurs d'entraînement de groupe de lentilles (4A, 4B) pour entraîner les autres groupes de lentilles, de la pluralité de moteurs d'entraînement de diaphragme d'ouverture (4C, 4D) et du moteur d'entraînement d'obturateur (4E), et qui met la pluralité de groupes de lentille (1A, 1B), le diaphragme d'ouverture (2) et l'obturateur (3) dans un état d'attente de photographie lorsque la source de puissance est activée ; et une première commande de rangement qui effectue simultanément les commandes d'entraînement du moteur d'entraînement de groupe de lentilles de focalisation et d'au moins un moteur des autres moteurs d'entraînement de groupe de lentilles, de la pluralité de moteurs d'entraînement de diaphragme d'ouverture (4C, 4D) et du moteur d'entraînement d'obturateur (4E), et qui met la pluralité de groupes de lentilles (1A, 1B), le diaphragme d'ouverture (2) et l'obturateur (3) dans un état de rangement lorsque la source de puissance est désactivée.

2. Dispositif de commande d'entraînement d'une unité de barillet de lentilles (1), comprenant :
une unité de barillet de lentilles (1) ;
un corps principal de dispositif de commande (5) pour commander l'entraînement de l'unité de barillet de lentilles ; et
l'unité de barillet de lentilles (1) comprenant :
une pluralité de groupes de lentilles (1A, 1B) ;
un diaphragme d'ouverture (2) disposé sur un axe optique de la pluralité de groupes de lentilles ;
un obturateur (3) disposé sur l'axe optique de la pluralité de groupes de lentilles ;
une pluralité de moteurs d'entraînement de groupe de lentilles (4A, 4B) pour entraîner la pluralité de groupes de lentilles ;
un moteur d'entraînement d'obturateur (4E) pour entraîner l'obturateur ;
**caractérisé en ce que** le dispositif de commande d'entraînement comprend en outre :
une section de détermination de type de batterie (6) pour déterminer un type d'une batterie qui sert en tant que source de puissance de l'unité de barillet de lentilles et du corps principal de dispositif de commande, le type de batterie comprenant une batterie spéciale et une batterie universelle, dans lequel une batterie du type batterie universelle a une capacité en courant inférieure à celle d'une batterie du type batterie spéciale ; et
une pluralité de moteurs d'entraînement de diaphragme d'ouverture (4C, 4D) pour entraîner le diaphragme d' ouverture ;
dans lequel le corps principal de dispositif de commande est configuré pour effectuer une première commande qui effectue simultanément les commandes d'entraînement d'au moins deux moteurs de la pluralité de moteurs d'entraînement de groupe de lentilles, de la pluralité de moteurs d'entraînement de diaphragme d'ouverture et du moteur d'entraînement d'obturateur lorsqu'il est déterminé que la batterie est une batterie spéciale par la section de détermination de type de batterie, et une troisième commande qui effectue simultanément les commandes d'entraînement d'au moins deux moteurs de la pluralité de moteurs d'entraînement de groupe de lentilles, de la pluralité de moteurs d'entraînement de diaphragme d'ouverture et du moteur d'entraînement d'obturateur lorsqu'il est déterminé que la batterie est une batterie universelle par la section de détermination de type de batterie, et qui effectue les commandes d'entraînement de moteurs prédéfinis à une tension d'entraînement inférieure à une tension normale lorsque la commande d'entraînement est effectuée simultanément ;
dans lequel la première commande comprend une première commande de démarrage qui effectue simultanément les commandes d'entraînement d'un moteur d'entraînement de groupe de lentilles de focalisation et d'au moins un moteur des autres moteurs d'entraînement de groupe de lentilles de la pluralité de moteurs d'entraînement de groupe de lentilles (4A, 4B) pour entraîner les autres groupes de lentilles, de la pluralité de moteurs d'entraînement de diaphragme d'ouverture (4C, 4D) et du moteur d'entraînement d'obturateur (4E), et qui met la pluralité de groupes de lentille (1A, 1B), le diaphragme d'ouverture (2) et l'obturateur (3) dans un état d'attente de photographie lorsque la source de puissance est activée ; et une première commande de rangement qui effectue simultanément les commandes d'entraînement du moteur d'entraînement de groupe de lentilles de focalisation et d'au moins un moteur des autres moteurs d'entraînement de groupe de lentilles, de la pluralité de moteurs d'entraînement de diaphragme d'ouverture (4C, 4D) et du moteur d'entraînement d'obturateur (4E), et qui met la pluralité de groupes de lentilles (1A, 1B), le diaphragme d'ouverture (2) et l'obturateur (3) dans un état de rangement lorsque la source de puissance est désactivée.

3. Dispositif de commande d'entraînement d'une unité de barillet de lentilles (1) selon la revendication 1 ou la revendication 2, **caractérisé en ce que** la pluralité de groupes de lentilles comprend un groupe de lentilles de focalisation positionné d'un côté d'objet et les autres groupes de lentilles.

4. Dispositif de commande d'entraînement d'une unité de barillet de lentilles (1) selon la revendication 3, **caractérisé en ce que** le moteur d'entraînement de groupe de lentilles de focalisation de la pluralité de moteurs d'entraînement de groupe de lentilles, qui entraîne le groupe de lentilles de focalisation, est un moteur à courant continu.

5. Dispositif de commande d'entraînement d'une unité de barillet de lentilles (1) selon l'une quelconque des revendications 1 à 4, comprenant en outre une pluralité de sections de détection de position (9A, 9B) pour détecter les positions de la pluralité de groupes de lentilles, et **caractérisé en ce que**, lorsque les commandes d'entraînement du moteur d'entraînement de groupe de lentilles de focalisation et d'au moins un moteur des autres moteurs d'entraînement de groupe de lentilles sont effectuées simultanément, la première commande de rangement arrête une commande d'entraînement du groupe de lentilles de focalisation temporairement lorsque le groupe de lentilles de focalisation arrive à une position prédéfinie, et effectue de nouveau la commande d'entraînement du moteur de groupe de lentilles de focalisation de sorte que le groupe de lentilles de focalisation soit à la position de rangement lorsque les autres groupes de lentilles entraînés par les autres moteurs d'entraînement de groupe de lentilles dont les commandes d'entraînement sont effectuées simultanément avec le moteur d'entraînement de groupe de lentilles de focalisation arrivent à la position de rangement.

6. Dispositif de commande d'entraînement d'une unité de barillet de lentilles (1) selon la revendication 1, 3 ou 4, **caractérisé en ce que** la deuxième commande comprend une deuxième commande de démarrage qui effectue séquentiellement dans un ordre prédéfini les commandes d'entraînement de la pluralité de moteurs d'entraînement de groupe de lentilles, de la pluralité de moteurs d'entraînement de diaphragme d'ouverture et du moteur d'entraînement d'obturateur, et qui met la pluralité de groupes de lentilles, le diaphragme d'ouverture et l'obturateur dans un état d'attente de photographie lorsque la source de puissance est activée ; et une deuxième commande de rangement qui effectue séquentiellement dans un ordre prédéfini les commandes d'entraînement de la pluralité de moteurs d'entraînement de groupe de lentilles, de la pluralité de moteurs d'entraînement de diaphragme d'ouverture et du moteur d'entraînement d'obturateur, et qui met la pluralité de groupes de lentilles, le diaphragme d'ouverture et l'obturateur dans un état de rangement lorsque la source de puissance est désactivée.

7. Dispositif de commande d'entraînement d'une unité de barillet de lentilles (1) selon la revendication 6, comprenant en outre une pluralité de sections de détection de position (9A, 9B) pour détecter les positions de la pluralité de groupes de lentilles, et **caractérisé en ce que** la deuxième commande de rangement effectue une commande d'entraînement du moteur d'entraînement de groupe de lentilles de focalisation, et arrête la commande d'entraînement du moteur d'entraînement de groupe de lentilles de focalisation temporairement lorsque le groupe de lentilles de focalisation arrive à une position prédéfinie et actionne les commandes d'entraînement des autres moteurs d'entraînement de groupe de lentilles ; et effectue de nouveau la commande d'entraînement du moteur de groupe de lentilles de focalisation de sorte que le groupe de lentilles de focalisation soit à la position de rangement lorsque les autres groupes de lentilles entraînés par les autres moteurs d'entraînement de groupe de lentilles arrivent à la position de rangement.

8. Dispositif de commande d'entraînement d'une unité de barillet de lentilles (1) selon l'une quelconque des revendications 2 à 4, **caractérisé en ce que** la troisième commande comprend une troisième commande de démarrage qui effectue simultanément les commandes d'entraînement du moteur d'entraînement de groupe de lentilles de focalisation et d'au moins un moteur des autres moteurs d'entraînement de groupe de lentilles, de la pluralité de moteurs d'entraînement de diaphragme d'ouverture et du moteur d'entraînement d'obturateur, qui effectue la commande d'entraînement du groupe de lentilles de focalisation à une tension d'entraînement inférieure à une tension normale lorsque la commande d'entraînement est effectuée simultanément, et qui met la pluralité de groupes de lentilles, le diaphragme d'ouverture et l'obturateur dans un état d'attente de photographie lorsque la source de puissance est activée ; et une troisième commande de rangement qui effectue simultanément les commandes d'entraînement du moteur d'entraînement de groupe de lentilles de focalisation et d'au moins un moteur des autres moteurs d'entraînement de groupe de lentilles, de la pluralité de moteurs d'entraînement de diaphragme d'ouverture et du moteur d'entraînement d'obturateur, qui effectue la commande d'entraînement du groupe de lentilles de focalisation à une tension d'entraînement inférieure à une tension normale lorsque la commande d'entraînement est effectuée simultanément, et qui met la pluralité de groupes de lentilles, le diaphragme d'ouverture et l'obturateur dans un état de rangement lorsque la source de puissance est désactivée.

9. Dispositif de commande d'entraînement d'une unité de barillet de lentilles (1) selon la revendication 8, comprenant en outre une pluralité de sections de détection de position (9A, 9B) pour détecter les positions de la pluralité de groupes de lentilles, et **caractérisé en ce que**, lorsque les commandes d'entraînement du moteur d'entraînement de groupe de lentilles de focalisation et d'au moins un moteur des autres moteurs d'entraînement de groupe de lentilles sont effectuées simultanément, la troisième commande de rangement arrête la commande d'entraînement du groupe de lentilles de focalisation temporairement lorsque le groupe de lentilles de focalisation arrive à une position prédéfinie, et effectue de nouveau la commande d'entraînement du moteur de groupe de lentilles de focalisation de sorte que le groupe de lentilles de focalisation soit à la position de rangement lorsque les autres groupes de lentilles entraînés par les autres moteurs d'entraînement de groupe de lentilles dont les commandes d'entraînement sont effectuées simultanément avec le moteur d'entraînement de groupe de lentilles de focalisation arrivent à la position de rangement.

10. Dispositif de commande d'entraînement d'une unité de barillet de lentilles (1) selon la revendication 1, **caractérisé en ce que** la section de détermination de type de batterie (6) comprend une partie de détection de tension pour détecter une tension de la batterie et, lorsqu'il est déterminé que la batterie est la batterie spéciale par la section de détermination de type de batterie et que la tension détectée par la partie de détection de tension est inférieure à une valeur prédéfinie, la deuxième commande est effectuée en tant qu'alternative à la première commande.

11. Dispositif de commande d'entraînement d'une unité de barillet de lentilles (1) selon la revendication 2, **caractérisé en ce que** la section de détermination de type de batterie (6) comprend une partie de détection de tension pour détecter une tension de la batterie et, lorsqu'il est déterminé que la batterie est la batterie spéciale par la section de détermination de type de batterie et que la tension détectée par la partie de détection de tension est inférieure à une valeur prédéfinie, la troisième commande est effectuée en tant qu'alternative à la première commande.

12. Dispositif de commande d'entraînement d'une unité de barillet de lentilles (1) selon la revendication 1, **caractérisé en ce que** le corps principal de dispositif de commande (5) comprend un commutateur de sélection de commande (6C) et, lorsqu'il est déterminé que la batterie est la batterie spéciale par la section de détermination de type de batterie, la deuxième commande peut être sélectionnée par l'intermédiaire du commutateur de sélection de commande.

13. Dispositif de commande d'entraînement d'une unité de barillet de lentilles (1) selon la revendication 2, **caractérisé en ce que** le corps principal de dispositif de commande (5) comprend un commutateur de sélection de commande (6C) et, lorsqu'il est déterminé que la batterie est la batterie spéciale par la section de détermination de type de batterie, la troisième commande peut être sélectionnée par l'intermédiaire du commutateur de sélection de commande.

14. Dispositif de commande d'entraînement d'une unité de barillet de lentilles (1) selon la revendication 1 ou la revendication 2, **caractérisé en ce que** la section de détermination de type de batterie (6) comprend une partie de logement de batterie (6A) pour loger la batterie, des bornes de batterie spéciale pour établir un contact avec les bornes de la batterie spéciale lorsque la batterie logée dans la partie de logement de batterie est la batterie spéciale, des bornes de batterie universelle pour établir un contact avec les bornes de la batterie universelle exclusivement lorsque la batterie logée dans la partie de logement de batterie est la batterie universelle, une section de détection de courant d'alimentation pour détecter un courant d'alimentation provenant des bornes de batterie universelle lorsque la batterie est logée dans la partie de logement de batterie,
dans lequel il est déterminé que la batterie est la batterie universelle si le courant d'alimentation provenant des bornes de batterie universelle est détecté par la section de détection de courant d'alimentation, il est déterminé que la batterie est la batterie spéciale si le courant d'alimentation provenant des bornes de batterie universelle n'est pas détecté par la section de détection de courant d'alimentation lorsque la batterie est logée dans la partie de logement de batterie.

15. Dispositif de commande d'entraînement d'une unité de barillet de lentilles (1) selon l'une quelconque des revendications 1 à 14, **caractérisé en ce que** l'unité de barillet de lentilles (1) et le corps principal de dispositif de commande (5) sont prévus dans un corps principal d'appareil photographique ; l'unité de barillet de lentilles est logée dans le corps principal d'appareil photographique lorsque la source de puissance du corps principal d'appareil photographique est désactivée ; et, lorsque la source de puissance du corps principal d'appareil photographique est activée, le corps principal de dispositif de commande effectue les commandes d'entraînement de la pluralité de moteurs d'entraînement de groupe de lentilles, du moteur d'entraînement de diaphragme d'ouverture et du moteur d'entraînement d'obturateur et met la pluralité de groupes de lentilles, le diaphragme d'ouverture et l'obturateur dans l'état d'attente de photographie, et, simultanément, l'unité de barillet de lentilles est projetée hors du corps principal d'appareil photographique.
